# EUROPEAN PATENT APPLICATION

(11) **EP 4 831 924 A2**
(43) Date of publication of application: **28.10.2026**
(21) Application number: 26198759.8
(22) Date of filing: 28.12.2022
(51) Int. Cl.: G06T 11/23

(54) **APPARATUSES, COMPUTER-IMPLEMENTED METHODS, AND COMPUTER PROGRAM PRODUCTS FOR NETWORK-CENTRIC AUGMENTED REALITY PROCESSING**

(30) Priority: 30.12.2021 US 202163266232 P
(62) Document number(s) of the earlier application(s) in accordance with Art. 76 EPC: 22854734.5 / 4 457 761
(71) Applicant: Assurant, Inc., New York, NY 10006 (US)
(72) Inventor: SEGAL, Daniel, Westlake, Ohio 44145 (US); IONESCU, Mircea, Westlake, Ohio 44145 (US)
(74) Representative: Haseltine Lake Kempner LLP

(57) **Abstract**

Various embodiments of the disclosure provide apparatuses, methods, and computer program products for network-centric augmented reality processing. Various embodiments provide advantages in network analytics, and additional advantages in positioning devices and/or objects in a premises to improve network quality at position(s) in the premises. Example embodiments process received camera data to map positions in an augmented reality environment to a networked device set, a network access device set, an object set, and/or a corner set indicted in the camera data. Additionally or alternatively, some embodiments generate an environment plot based on the processed camera data. Some embodiments additionally or alternatively enable initiation of a session for servicing of one or more devices in the premises, and/or providing device protection program information associated with the one or more devices.

## Description

### CROSS-REFERENCE TO RELATED APPLICATIONS

This application claims priority to U.S. Provisional Application No. 63/266,232, filed December 30, 2021, the contents of which are incorporated herein by reference in their entireties.

### TECHNOLOGICAL FIELD

Embodiments of the present disclosure generally relate to maintaining and processing augmented reality data, including maintaining an augmented reality based on real-world imagery and utilizing the augmented reality for one or more actions related to device and/or network servicing, placement, or troubleshooting.

### BACKGROUND

Conventionally, devices positioned throughout a premises and forming a network may experience a myriad of problems. At any given time, a networked device intended for use with a network access device may not operate in conjunction with the network access device, communication between the networked device and the network access device may be sub-optimal, and/or a user may experience other network-level communication errors caused by any of a myriad of possible deficiencies, including network deficiencies caused by device configurations, device positioning, layout of the premises within which the devices are located, and the like. Conventional methodologies for diagnosing and/or resolving such deficiencies are often time-consuming, difficult to implement without specialized knowledge, and/or otherwise impossible with just human interaction alone. Through applied effort, ingenuity, and innovation, Applicant has solved many of these identified problems by developing embodied in the present disclosure, which are described in detail below.

### BRIEF SUMMARY

In general, embodiments of the present disclosure provided herein provide improved network-centric augmented reality processing (e.g., capture, storage, and processing of augmented reality data associated with network component existence, network component function, and/or network function generally) and systems, methods, and apparatuses related thereto. Other implementations will be, or will become, apparent to one with skill in the art upon examination of the following figures and detailed description. It is intended that all such additional implementations be included within this description be within the scope of the disclosure and be protected by the following claims.

In accordance with a first aspect of the disclosure, a computer-implemented method for network-centric augmented reality processing is provided. The computer-implemented method is implementable by any of a myriad of computing device(s) embodied in hardware, software, firmware, and/or any combination thereof, including entirely of hardware, entirely of software, or entirely of firmware. An example computer-implemented method includes receiving camera data associated with an augmented reality environment representing a premises, where the camera data is captured by a camera circuitry. The example computer-implemented method further includes receiving at least one indication associated with a plot corner set including a plurality of plot corners configured to be generated as the camera circuitry navigates the premises, the at least one indication associated with a portion of the camera data. The example computer-implemented method further includes generating an environment plot by mapping each plot corner in the plot corner set as a corner location in the augmented reality environment associated with the premises.

In some embodiments of the example computer-implemented method, receiving the at least one indication associated with the plot corner set includes receiving a first indication in response to user input data indicating existence of a first plot corner in the camera data; and mapping, based on the camera data and first mapping device position data, the first plot corner to a first corner location in the augmented reality environment. In some such embodiments of the example computer-implemented method, the example computer-implemented method further includes receiving second mapping device position data indicating traversal to a second mapping device position; receiving a second indication in response to second user input data indicating existence of a second plot corner in the camera data; and mapping, based on the camera data and the second mapping device position data, the second plot corner to a second corner location in the augmented reality environment.

In some embodiments of the example computer-implemented method, receiving the at least one indication associated with the plot corner set includes receiving the camera data associated with first mapping device position data; detecting a first plot corner in the camera data; and mapping, based on the second mapping device position data and the camera data, the first plot corner to a first corner location in the augmented reality environment.

In some embodiments of the example computer-implemented method, the example computer-implemented method further includes receiving a second indication of a networked device based on the camera data; and mapping the networked device with a networked device location in the augmented reality environment, where the environment plot further includes the networked device location. In some such embodiments of the example computer-implemented method, the example computer-implemented method further includes receiving the second indication of the networked device includes receiving the second indication in response to user input data indicating existence of the networked device in the camera data; and mapping, based on the camera data and a first mapping device position data the networked device to the networked device location in the augmented reality environment. In some such other embodiments, receiving the second indication of the networked device includes receiving the camera data associated with first mapping device position data; detecting the networked device in the camera data; and mapping, based on the first device positioning data and the camera data, the networked device to the networked device location in the augmented reality environment.

In some embodiments of the example computer-implemented method, the example computer-implemented method further includes receiving first mapping device position data; determining first network strength data associated with a first network access device, where the first network strength data is associated with the first mapping device position data; receiving second mapping device position data, where the second mapping device position data indicates a different position from the first mapping device position data; and determining second network strength data associated with the first network access device, where the second network strength data is associated with the second mapping device position data, where the environment plot further includes a first network strength indicator based on the first mapping device position data and first network strength data, and where the environment plot further includes a second network strength indicator based on the second mapping device position data and the second network strength data.

In some such embodiments of the example computer-implemented method, the example computer-implemented method further includes generating preferred networked device position data based on a comparison of at least the first network strength data associated with the first mapping device position data and the second network strength data associated with the second device positioning data; and causing rendering of a preferred networked device position indicator based on the preferred networked device position data.

In some embodiments of the example computer-implemented method, the example computer-implemented method further includes receiving environment naming data; storing the environment plot associated with the environment naming data; receiving an indication of at least one networked device for grouping associated with the environment naming data corresponding to the environment plot; and storing networked device identification data for the at least one networked device associated with the environment naming data.

In some embodiments of the example computer-implemented method, the example computer-implemented method further includes providing a real-time augmented reality interface including (1) real-world imagery captured in real-time represented by the camera data and (2) at least a portion of the augmented reality environment rendered over the real-world imagery represented by the camera data, where the portion of the augmented reality environment is based on the orientation of the camera circuitry, and where the real-time augmented reality interface further includes (3) at least one static interface element for interacting with the augmented reality environment.

In accordance with a second aspect of the disclosure, a second computer-implemented method for network-centric augmented reality processing is provided. The second computer-implemented method is similarly implementable by any of a myriad of computing device(s) embodied in hardware, software, firmware, and/or any combination thereof, including entirely of hardware, entirely of software, or entirely of firmware. An example embodiment of the second computer-implemented method includes receiving camera data associated with an augmented reality environment representing a premises. The example second computer-implemented method further includes receiving, based on the captured camera data, at least one indication associated with an interference object set, where the interference object set includes data associated with at least one object including a physical structure, a furniture object, or a signal interferer. The example second computer-implemented method further includes determining a diminished network strength position in the augmented reality environment based on at least one interference object of the interference object set and network access device, where the diminished network strength position is associated with a first network strength data for the network access device. The example second computer-implemented method further includes causing rendering of data associated with the diminished network strength position to notify a user regarding the diminished network strength position.

In some embodiments of the example second computer-implemented method, causing rendering of the data associated with the diminished network strength position includes causing rendering of at least a portion of the augmented reality environment with the diminished network strength position visually distinguished within the augmented reality environment.

In some embodiments of the example second computer-implemented method, the example second computer-implemented method further includes receiving an indication of a networked device based on the camera data; and determining the networked device is disposed at or within a predetermined distance from the diminished network strength position, and where causing rendering of the data associated with the diminished network strength position includes causing rendering of a notification to the user including a recommendation to relocate the networked device.

In some embodiments of the example second computer-implemented method, the example second computer-implemented method further includes detecting second network strength data associated with a second position within the augmented reality environment, where the notification includes at least one interface element indicating the user should relocate the networked device to the second position.

In some embodiments of the example second computer-implemented method, causing rendering of the data associated with the diminished network strength position includes rendering at least one interface element indicating that, to improve the first network strength data at the diminished network strength position, the at least one interference object of the interference object set should be repositioned or removed.

In some embodiments of the example second computer-implemented method, receiving, based on the captured camera data, the at least one indication associated with the interference object set, includes utilizing an object detection model to detect a first interference object based on the camera data, where the object detection model is configured for detecting at least one interference object type.

In some embodiments of the example second computer-implemented method, the example second computer-implemented method further includes receiving, based on the camera data, an indication of the network access device; and mapping, based on the indication of the network access device, the network access device to a network access device position in the augmented reality environment.

In accordance with a third aspect of the disclosure, a third computer-implemented method for network-centric augmented reality processing is provided. The third computer-implemented method is similarly implementable by any of a myriad of computing device(s) embodied in hardware, software, firmware, and/or any combination thereof, including entirely of hardware, entirely of software, or entirely of firmware. An example embodiment of the third computer-implemented method includes generating an environment plot based at least on camera data captured by a camera circuitry, where the camera data represents a premises, and where the environment plot corresponds to an augmented reality environment. The example third computer-implemented method further includes detecting first network strength data for a first network access device, where the first network strength data is associated with a first position in the augmented reality environment. The example third computer-implemented method further includes causing rendering of the augmented reality environment including a network strength indicator located at the first position in the augmented reality environment, where the network strength indicator is visually configured based on at least the first network strength data.

In some embodiments of the example third computer-implemented method, the network strength indicator includes a first network strength indicator, and the computer-implemented method further including detecting second network strength data for the first network access device, where the second network strength data is associated with a second position in the augmented reality environment, and where the first network strength data differs from the second network strength data; and causing rendering of the augmented reality environment including a second network strength indicator located at the second position, where the second network strength indicator is visually configured based on at least the second network strength data as visually distinct from the first network strength indicator. In some such embodiments of the example third computer-implemented method, the network strength indicator includes a first wave representation of a first color, the first color selected based on the first network strength data, and the second network strength indicator includes a second wave representation of a second color, the second color selected based on the second network strength data.

In some embodiments of the example third computer-implemented method, the example third computer-implemented method further includes receiving an indication of a networked device based on the camera data, where the networked device is disposed at the first position in the augmented reality environment; determining the first network strength data is weaker than second network strength data associated with a second position in the augmented reality environment; and causing rendering of data indicating the networked device should be repositioned to the second position.

In some embodiments of the example third computer-implemented method, the example third computer-implemented method further includes determining a second position for relocating the first network access device to improve the first network strength data associated with the first position in the augmented reality environment; and causing rendering of data indicating the network access device should be relocated to the second position in the augmented reality environment.

In some embodiments of the example third computer-implemented method, the example third computer-implemented method further includes causing rendering of data indicating a first networked device should be positioned at the first position in the augmented reality environment.

In accordance with a fourth aspect of the disclosure, a fourth computer-implemented method for network-centric augmented reality processing is provided. The fourth computer-implemented method is similarly implementable by any of a myriad of computing device(s) embodied in hardware, software, firmware, and/or any combination thereof, including entirely of hardware, entirely of software, or entirely of firmware. An example embodiment of the fourth computer-implemented method includes receiving camera data representing a premises associated with an augmented reality environment. The example fourth computer-implemented method further includes detecting, from the camera data, a networked device of an associated networked device type. The example fourth computer-implemented method further includes mapping the networked device to a device position in the augmented reality environment. The example fourth computer-implemented method further includes initiating a device detected action associated with the networked device and the device position in the augmented reality environment.

In some embodiments of the example fourth computer-implemented method, the device detected action includes determining the networked device is connected to a known network access device; establishing, using the known network access device, a connection with the networked device; and executing a direct data handshake to confirm an identity of the networked device, where the data handshake is based on the networked device type.

In some embodiments of the example fourth computer-implemented method, the device detected action includes determining the networked device is connected to a known access device; transmitting, using the known network access device, indirect handshake data to cause the networked device to perform an indirect handshake action; capturing indirect handshake authentication data associated with the indirect handshake action; and processing the indirect handshake authentication data to verify performance of the indirect handshake action, where verification of the indirect handshake action confirms an identity of the networked device.

In some embodiments of the example fourth computer-implemented method, the device detected action includes causing rendering of a device grouping interface to enable association of the networked device with at least one other networked device.

In some embodiments of the example fourth computer-implemented method, the device detected action includes automatically determining the networked device type associated with the networked device; and automatically associating the networked device with a device grouping based on the determined networked device type. In some such embodiments of the example fourth computer-implemented method, the networked device includes a first networked device and the device position includes a first device position, and the computer-implemented method further including detecting a second networked device associated with a second device position; determining the second device position is within a threshold range from the first device position; and automatically associating the second networked device with the device grouping.

In accordance with a fifth aspect of the disclosure, a fifth computer-implemented method for network-centric augmented reality processing is provided. The fifth computer-implemented method is similarly implementable by any of a myriad of computing device(s) embodied in hardware, software, firmware, and/or any combination thereof, including entirely of hardware, entirely of software, or entirely of firmware. An example embodiment of the fifth computer-implemented method includes receiving camera data representing real-world imagery of a premises, where the captured camera data is utilized to maintain an augmented reality environment associated with mapping at least one position associated with at least one networked device, network access device, and/or at least one interference object. The example fifth computer-implemented method further includes initiating an augmented reality service session associated with servicing one or more devices associated with the augmented reality environment, where initiating the augmented reality service session enables communication with an electronic support platform.

In some embodiments of the example fifth computer-implemented method, the augmented reality service session enables transmission of the camera data to the electronic support platform for rendering utilizing a display associated with the electronic support platform.

In some embodiments of the example fifth computer-implemented method, the example fifth computer-implemented method further includes receiving, from the electronic support platform, an electronic support generated augmented reality indicator associated with an indicator position in the augmented reality environment; and causing rendering of the augmented reality environment including the electronic support generated augmented reality indicator at the indicator position. In some such embodiments of the example fifth computer-implemented method, the electronic support generated augmented reality indicator represents a visual indicator identifying a first networked device for servicing of the at least one networked device. In some other such embodiments of the example fifth computer-implemented method, the electronic support generated augmented reality indicator represents a visual indicator identifying a position in the augmented reality environment for placing a new networked device or a first networked device of the at least one networked device. In some other such embodiments of the example fifth computer-implemented method, the example fifth computer-implemented method further includes generating at least one augmented reality element corresponding to network strength data for a first position in the augmented reality environment, where the network strength data is associated with a network access device, and where the electronic support generated augmented reality indicator represents a visual indicator identifying a second position in the augmented reality environment for placing the network access device to improve the network strength data at the first position in the augmented reality environment.

In accordance with a sixth aspect of the present disclosure, an apparatus for network-centric augmented reality processing is provided. In one example embodiment, an example apparatus includes at least one processor and at least one non-transitory memory. The at least one memory includes computer-coded instructions stored thereon that, in execution with the at least one processor, causes the apparatus to perform any one of the example computer-implemented methods described herein. In another example embodiment, an example apparatus includes means for performing each step of any one of the example computer-implemented methods described herein.

In accordance with a seventh aspect of the present disclosure, a computer program product for network-centric augmented reality processing is provided. In one example embodiment, an example computer program product includes at least one non-transitory computer-readable storage medium having computer program code stored thereon. The computer program code, upon execution by at least one computer, configures the computer program product for performing any one of the example computer-implemented methods described herein.

The above summary is provided merely for purposes of summarizing some example embodiments to provide a basic understanding of some aspects of inventions within the disclosure. Accordingly, it will be appreciated that the above-described embodiments are merely examples and should not be construed to narrow the scope or spirit of the disclosure in any way. It will be appreciated that the scope of the disclosure and inventions therein encompasses many potential embodiments in addition to those here summarized, some of which will be further described below

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a system that may be specially configured within which embodiments of the present disclosure may operate;
FIG. 2 illustrates a block diagram of an example apparatus that may be specially configured in accordance with an example embodiment of the present disclosure;
FIG. 3 illustrates an example visualization of a premises in which network-centric augmented reality processing occurs, in accordance with at least one example embodiment of the present disclosure;
FIG. 4 illustrates an example augmented reality interface and an example environment plot visualization, in accordance with at least one example embodiment of the present disclosure;
FIG. 5 illustrates another example augmented reality interface and another example environment plot visualization, in accordance with at least one example embodiment of the present disclosure;
FIG. 6 illustrates another example augmented reality interface and another example environment plot visualization, in accordance with at least one example embodiment of the present disclosure;
FIG. 7 illustrates another example augmented reality interface and another example environment plot visualization, in accordance with at least one example embodiment of the present disclosure;
FIG. 8 illustrates another example augmented reality interface and another example environment plot visualization, in accordance with at least one example embodiment of the present disclosure;
FIG. 9 illustrates another example augmented reality interface and another example environment plot visualization, in accordance with at least one example embodiment of the present disclosure;
FIG. 10A illustrates operations of an example process for network-centric augmented reality processing in accordance with the present disclosure;
FIG. 10B illustrates operations of another example process for network-centric augmented reality processing in accordance with the present disclosure;
FIG. 11 illustrates operations of another example process for network-centric augmented reality processing in accordance with the present disclosure;
FIG. 12 illustrates operations of another example process for network-centric augmented reality processing in accordance with the present disclosure;
FIG. 13 illustrates operations of another example process for network-centric augmented reality processing in accordance with the present disclosure;
FIG. 14A illustrates operations of another example process for network-centric augmented reality processing in accordance with the present disclosure;
FIG. 14B illustrates operations of another example process for network-centric augmented reality processing in accordance with the present disclosure;
FIG. 15 illustrates operations of another example process for network-centric augmented reality processing in accordance with the present disclosure;
FIG. 16 illustrates operations of another example process for network-centric augmented reality processing in accordance with the present disclosure;
FIG. 17 illustrates operations of another example process for network-centric augmented reality processing in accordance with the present disclosure;
FIG. 18 illustrates operations of another example process for network-centric augmented reality processing in accordance with the present disclosure;
FIG. 19A illustrates operations of another example process for network-centric augmented reality processing in accordance with the present disclosure;
FIG. 19B illustrates operations of another example process for network-centric augmented reality processing in accordance with the present disclosure;
FIG. 20 illustrates operations of another example process for network-centric augmented reality processing in accordance with the present disclosure;
FIG. 21 illustrates operations of another example process for network-centric augmented reality processing in accordance with the present disclosure;
FIG. 22 illustrates operations of another example process for network-centric augmented reality processing in accordance with the present disclosure;
FIG. 23 illustrates operations of another example process for network-centric augmented reality processing in accordance with the present disclosure;
FIG. 24 illustrates operations of another example process for network-centric augmented reality processing in accordance with the present disclosure;
FIG. 25 illustrates operations of another example process for network-centric augmented reality processing in accordance with the present disclosure;
FIG. 26A illustrates operations of another example process for network-centric augmented reality processing in accordance with the present disclosure;
FIG. 26B illustrates operations of another example process for network-centric augmented reality processing in accordance with the present disclosure; and
FIG. 27 illustrates operations of another example process for network-centric augmented reality processing in accordance with the present disclosure

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Embodiments of the present disclosure provide advantageous network-centric functionality through processing of an augmented reality environment. In this regard, an augmented reality environment may be generated and/or maintained to include real-world imagery together with interface elements associated with such network-centric functionality, for example, to present the real-world imagery overlaid with one or more virtual representations to the user. An augmented reality interface may thereby be created that includes one or more virtual graphical elements overlaid onto real-world imagery for visualizing the various functions described herein. In some embodiments, the augmented reality environment may include data configured to represent a virtual premises and/or virtual objects associated with various real-world premises and/or object(s). By interacting with the augmented reality environment and associating the augmented reality environment with real-world positional information, object information, and/or other information, a data representation of a particular premises may be accurately mapped, for example to generate an environment plot that accurately represents the premises. By utilizing augmented reality, such mapping may be performed in a user-friendly manner that results in a more accurate mapping than utilizing alternative, conventional premises mapping techniques.

Additionally or alternatively, devices and/or objects (such as interference objects, networked devices, network access devices, and/or the like) may be mapped to or otherwise associated with various positions within the environment plot corresponding to the augmented reality environment. In this regard, a user may interact with the augmented reality environment to advantageously generate an environment plot with improved accuracy, such that the environment plot accurately represents the premises at which the user is located, as well as the relevant network-centric components therein. In one example context, a user may interact with an augmented reality environment to generate an environment plot representing one or more rooms of their home, either alone or as a combined space, and map the position of networked devices, network access devices, and/or interference objects in the room, including fixtures and permanent features of the room (e.g., walls, doors, windows, etc.). In this regard, such embodiments provide various technical improvements by enabling generation of an augmented reality environment, and/or a corresponding environment plot, that embodies an accurate data representation of a premises and that may be processed for any of a myriad of purposes as described herein.

In some embodiments, the augmented reality environment, and/or corresponding environment plot, may be further processed and/or utilized to perform any of myriad of network-centric processing actions. For example, in some embodiments, the augmented reality environment and/or the corresponding environment plot is processed to provide the user with network strength data (e.g., wireless network strength, including WiFi, Bluetooth, Zigbee, or any other wireless signal data) at various positions throughout the premises. In this regard, some embodiments determine network strength data at various positions (e.g., via strength data measured via one or more real-world devices in the premises and/or via simulation of the effects of various features mapped into the augmented reality environment on network signal propagation), and may process the network strength data values and/or other information (e.g., networked device position data and/or network access device position data) to identify one or more diminished network strength positions, and/or networked devices disposed at such positions. Such diminished network strength positions may be indicated to the user, for example via an augmented reality interface, to enable the user to easily and accurately identify such positions in the premises. In some embodiments, advantageously notifications associated with positioning various devices and/or objects in the premises may be generated and rendered to the user, for example to introduce a new networked device, network access point, and/or interference object in the premises, improve the signal strength received by specific networked devices, improve overall network signal strength for the premises. Such embodiments provide technical improvements over conventional network processing implementations by, for example, generating and visualizing network strength data for user. Such embodiments eliminate any requirement of specialized human knowledge to utilize such data for network optimization and/or object positioning, and enable utilization of such data in onboarding, servicing, or otherwise improving the performance of one or more devices and/or the network as a whole as described herein. Additionally or alternatively still, use of augmented reality enables such advantages to be provided in a manner that is efficient and user friendly, thus further reducing the level of technical knowledge required to accurately perform such associated action(s) as compared to conventional systems associated with network analysis. Additionally or alternatively, in some embodiments, the augmented reality enables use of any such data in any of a myriad of downstream process(es), for example provision of device protection program(s) for device(s) detected or otherwise indicated, claims processing associated with device protection program(s), provision of instruction(s) regarding configuring device(s), provision of technical support for detected or otherwise indicated, and/or the like.

Additionally or alternatively, in some embodiments, the augmented reality environment and/or the corresponding environment plot is processed and/or utilized to identify and/or group networked devices for user classification and/or management. By grouping networked devices, a computing device and/or system may readily identify that such devices are related actions may be performed in a batch manner for all such devices. Additionally or alternatively, in some embodiments, one or more actions may be performed for all grouped networked devices. For example, a user may request an operability status for grouped networked devices associated with a particular grouping (e.g., all devices in a grouping associated with the kitchen of a premises). Similarly, the processes, systems, and apparatuses described herein may be used for efficient onboarding and/or relocation of a network and one or more network devices (e.g., quickly moving and reestablishing a home network at a new premises) via comparison of a first premises environment plot associated with a first premises and a second premises plot associated with a second premises. Such embodiments provide further technical improvements over conventional network processing implementations by reducing the amount of computing resources required to perform batch operations associated with a defined grouping of devices and facilitating enhanced functionality by detecting issues and/or solutions associated with identified classes. Additionally, by utilizing augmented reality, embodiments further enable the existence of devices to be indicated to a computing device in a computationally efficient and user-friendly manner.

In some embodiments, the augmented reality environment and/or corresponding environment plot is processed to enable servicing of one or more networked devices and/or network access devices via communication with an electronic support platform. In some embodiments, the electronic support platform receives the captured representations of the real-world premises, and/or the augmented reality environment and/or the interface associated therewith, so as to provide notifications, information, instructions, and/or other data useful for servicing devices in the premises and/or otherwise improving the network strength at one or various positions in the premises. In some embodiments, the electronic support platform provides notifications, indicators, instructions, and/or other data that alters the augmented reality interface (e.g., displaying text and/or annotations within the representations of the augmented reality environment displayed to the user), for example to provide easily understandable instructions for a user to follow for servicing. Additionally or alternatively still, some embodiments advantageously enable determination of malfunctioning or otherwise poorly performing device(s) in circumstances where the premises otherwise is determined to not be negatively impacting operation of the device(s).

It should be appreciated that the embodiments described herein rely on specific computing circuitries embodied in hardware, software, firmware, and/or a combination thereof. Additionally or alternatively still, specific networking communication circuitry, hardware, software, and/or firmware may be utilized to perform the specific signal processing actions described herein.

### Definitions

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The term "user" refers to an individual, group of individuals, entity, and/or other identifiable sub-population that owns and/or otherwise operates a computing device.

The term "user device" refers to any computing device embodied in hardware, software, firmware, and/or any combination thereof. Non-limiting examples of a user device include a mobile device (smartphone, tablet, laptop, personal digital assistant, and the like), desktop computer, server, kiosk, terminal device, internet of things enabled device, smart home device, and wearable device.

The term "computer-implemented method" refers to a process executed by any computing device embodied via hardware, software, firmware, and/or a combination thereof. In some embodiments, a computer-implemented method is embodied by computer program code comprising various computer-coded instructions for implementing the process. In at least one example context, a user device is configured to execute any of the computer-implemented methods described herein.

The term "augmented reality environment" refers to a data representation, renderable to a display of a computing device, of one or more real-world objects wherein electronically generated "virtual" objects may be positioned. The virtual objects can be positioned at any coordinate position within the augmented reality environment, for example at any x, y, and z position in a three-dimensional coordinate system and/or x and y position in a two-dimensional coordinate system. In at least one example context, an augmented reality environment is maintained based on a three-dimensional coordinate system originating from an origin point.

The term "real-time augmented reality interface" refers to electronically managed data rendered to a display of a device that includes captured representations of real-world imagery together with any number of representations of virtual objects to represent an augmented reality environment. The real-time augmented reality interface is configured to be updated in real-time as new data representing a real-world imagery is received, for example from a camera circuitry capturing such real-world imagery. In some embodiments, a real-time augmented reality interface additionally or alternatively includes static interface elements such as buttons, text and/or audio/video elements, and/or other interface controls.

The term "camera circuitry" refers to hardware, software, firmware, and/or a combination thereof configured to enable capture of data representations of a real-world environment. In some embodiments, a camera circuitry comprises image capture optics such as one or more lenses configured in conjunction with one or more image sensor(s), such that the image sensors capture incoming light to produce such data representing the environment. In some embodiments, a camera circuitry is a sub-module or component of a larger device, such as a user device or peripheral device associated therewith.

The term "camera data" refers to electronically managed data representing real-world imagery of a real-world environment, as captured by a camera circuitry. In some embodiments, camera data is embodied by video data, which in some embodiments is captured in real-time by a camera circuitry. In some such embodiments, the video camera data comprises one or more frames (e.g., images at various time slices of the video data) that may be processed individually or in conjunction with other frames of the video data. In other embodiments, camera data comprises a single image data object and/or a plurality of image data objects. In some such embodiments, the plurality of image data objects may be processed as individual image data objects or in conjunction with one another.

The term "network-centric augmented reality processing" refers to providing and/or maintaining an augmented reality environment where the augmented reality environment is utilized to provide a user with functionality for defining a premises, identifying object(s) in the premises, performing network analysis and/or optimization actions, and/or enabling device or network servicing, or any combination thereof. In some contexts, network-centric augmented reality processing involves utilizing an augmented reality environment and/or corresponding renderings for interface output only. In other contexts, network-centric augmented reality processing involves utilizing the augmented reality environment and/or corresponding renderings for interface output as well as user input.

The term "indication" refers to one or more electronic data values that represent a particular state, action, or can otherwise be processed to perform an electronic determination.

The term "premises" refers to a real-world environment that is physically defined (e.g., by one or more walls) and/or user defined. Non-limiting examples of a premises include a room, a set of rooms, a residential house, an office building, an outdoor space, or the like.

The term "plot corner" refers to refers to electronically managed data indicating a junction of two boundaries defining a portion of a premises. In some embodiments, a plot corner represents a junction between two walls defining a portion of a premises. A non-limiting example of a plot corner includes a junction between two walls inside a room. The term "plot corner set" refers to one or more electronically managed data objects representing zero or more plot corners.

The term "corner location" refers to electronically managed data representing a position of a plot corner in an augmented reality environment. In some embodiments, a comprises at least an x-coordinate position associated with a plot corner and a y-coordinate position associated with the plot corner.

The term "environment plot" refers to electronically managed data representing a multi-dimensional plot of a premises. In some embodiments, an environment plot is embodied by electronically managed data defining the space of a premises based on various two-dimensional plotted data points. For example, in at least one example context, an environment plot is defined by a plot corner set that is used to define the premises. In some embodiments, a plot corner set is configured to include data representing existence of one or more objects positioned within the premises, and/or positions of such object(s) within the premises represented by the environment plot.

The term "mapping device position data" refers to electronically managed data representing an absolute or local position of a user device utilized for generating an environment plot and/or mapping one or more object(s) associated therewith.

The term "networked device" refers to a computing device configurable to communicate with a communications network via a network access device and/or directly with one or more other networked devices, and which may be directly or indirectly usable by a user. Non-limiting examples of a networked device include a mobile device, a desktop computer, a server, a smart home device, a data monitoring device, an internet of things enabled device, a smart TV, a wearable device, a home monitoring system, or the like. The term "device identifier data" refers to electronically managed data that uniquely identifies a networked device.

The term "mapping" refers to computer-implemented processes for associating a data object representing a physical object located at a particular position with position data that represents the particular position of the object in a corresponding augmented reality environment and/or corresponding environment plot. In some embodiments, for example, mapping refers to generating and/or storing a data object together with position data that represents the position at which the object is located.

The term "network strength data" refers to one or more data values representing the signal strength a user device has in communicating with a network access point. In at least one example context, the network strength data is represented by a received signal strength indicator value (RSSI). It should be appreciated that network strength data may be generated and/or otherwise determined using any of a myriad of signal strength determination processes.

The term "network strength determination process" refers to one or more computer-implemented processes configured to determine the network strength data received by a user device at a particular position while in communication with a particular network access device. In at least one example context, a network strength determination process generates and/or determines network strength data that the user device has at a particular position when wirelessly communicating with a wireless network (or other network access device and/or networked device) within a premises. It should be appreciated that, unless otherwise specified, network strength data may be generated and/or otherwise determined utilizing any of a myriad of known methodologies for detecting a signal strength for a device in communication with a network access device.

The term "network access device" refers to a computing device configured to provide access to a wired and/or wireless communications network. A network access device may provide access to any of a myriad of private network(s) (e.g., LANs and/or other local networks), public network(s) (e.g., the Internet), and/or hybrid network(s). Non-limiting examples of a network access device include a router, a modem, a switch, a network extender, a communication relay device, and a cell tower.

The term "wave representation" refers to renderable data that provides a visual representation of wireless network signal strength located at one or more positions. In some embodiments, a wave representation is configured to visually represent the network strength at such position(s) using one or more properties, for example using various colors, transparency values, shapes and/or graphics, rendered element size, and/or the like, or a combination thereof. In at least one example context, a wave representation is visually configured to be rendered to appear as a fog within a portion of the augmented reality environment. In some embodiments, a wave representation is configured for rendering within an augmented reality environment at a desired z-position with respect to a flat surface utilized to initialize the augmented reality environment.

The term "preferred networked device position data" refers to position data representing a first position that is determined to be associated with network strength data associated with a particular network access point that is stronger than network strength data associated with a second position. For example, if a first position is associated with a first RSSI of -75, and a second position is associated with a second RSSI of -50, the preferred network device position data may represent the second position. In some embodiments, the preferred networked device position data may represent an optimal position within a premises or subset thereof.

The term "preferred networked device position indicator" refers to a data object representing a preferred networked device position data and rendered within an augmented reality environment. In some embodiments, the preferred networked device position indicator is rendered in the augmented reality environment at the position represented by the preferred networked device position data. In some embodiments, the preferred networked device position indicator may comprise an apparent modification or other emphasis of a real-world object and/or portion of the premises via the augmented reality environment (e.g., changing the color of or otherwise highlighting or emphasizing a representation of a networked device in the augmented reality environment).

The term "environment naming data" refers to electronically managed data representing a user-provided name and/or automatically generated name that may be associated with an environment plot. In some contexts, the environment naming data represents a conventional name associated with an environment plot, for example the text data "kitchen" for association with an environment plot representing a kitchen in a premises.

The term "networked device identification data" refers to one or more electronically managed data value(s) that uniquely identifies a networked device. In some contexts, the networked device identification data may be associated with environment naming data to represent that the networked device identified by the networked device identification data in a particular room, premises, or sub-portion thereof.

The term "interference object" refers to a physical object that is indicated to be associated with one or more properties that interfere with the propagation of wireless signals from a network access point. Non-limiting examples of an interference object include a physical structure (e.g., a wall or a portion thereof), a large piece of furniture (e.g., a couch, armoire, or the like), or a signal interferer as defined herein.

The term "signal interferer" refers to any electro-mechanical device that outputs one or more signal(s) that interfere with the wireless signal(s) transmitted from a network access point. Non-limiting examples of a signal interferer include another network access point, networked devices (including those enabled to access alternative network types such as Bluetooth), and RF enabled devices.

The term "interference object type" refers to data representing a particular classification for interference objects. In at least one example context, an interference object type represents an object type that indicates what an object is (e.g., data representing "table," "wall," "television," and the like).

The term "diminished network strength position" refers to electronically managed data indicating a relative position or absolute position at which network strength data is determined to be less than an expected network strength data, less than an average network strength data, and/or less than second network strength data at an alternative position.

The term "object detection model" refers to a computer-implemented statistical, algorithmic, machine learning, or other model configured to detect objects from captured camera data, and/or a portion thereof such as one or more frames or captured images. In some contexts, an object detection model is configured and/or specially trained to identify and/or detect interference object(s) within camera data. Additionally or alternatively, in some contexts, an object detection model is configured and/or specially trained to identify and/or detect networked device(s) within camera data. It should be appreciated that an object detection model may be configured and/or otherwise trained to capture any number of object types.

The term "visually distinguished" refers to a state of an element rendered to an interface including one property that is distinct from one or more other elements of the same type. In some embodiments, elements are visually distinguished from one another using the property of element color, size, shape, image, overlay, text, graphic, and/or any combination thereof.

The term "disposed at" refers to being located at a particular relative position or particular absolute position, or within a predetermined distance from the particular relative position or the particular absolute position.

The term "device detected action" refers to a computer-implemented process performed upon detection or other identification of a networked device within camera data or a portion thereof. It should be appreciated that any number of device detection action(s) may be performed upon detection and/or identification of one networked device, or multiple networked devices.

The term "known network access device" refers to a network access device with which a device is configured to communicate with. For example, in the context of an apparatus embodiment, an example of a known network access device comprises a network access device with which the apparatus is configured to communicate.

The term "identity" in the context of a networked device refers to electronically managed data that uniquely identifies a networked device. Non-limiting examples of an identity for a networked device comprises an IP address, an IMEI, a unique identifier, and/or a user-assigned identifier.

The term "direct data handshake" refers to a computer-implemented data communication process performed with a networked device, where data is requested and received from the networked device for use in determining an identity for the networked device. In some embodiments, the data received from the networked device includes sufficient data to be used to determine an identity of the networked device.

The term "indirect handshake action" refers to a computer-implemented process for verifying an identity associated with a networked device without directly receiving data sufficient for determining such identity through data communications with the networked device. In some embodiments, an indirect handshake action including processing of visual and/or audio data generated by the networked device captured by the embodiment for processing. Non-limiting examples of an indirect handshake action include causing the networked device to generate a detectable light pattern or audio output, such that the networked device can be identified based on data captured without receiving data communications from the networked device. In some contexts, different types of networked devices perform different indirect handshake actions (e.g., a smart lightbulb may blink, while a virtual assistant may output a predetermined audio frequency or message). The term "indirect handshake data" refers to data specifically transmitted to a networked device over a known network access device to cause the networked device to initiate an indirect handshake action. The term "indirect handshake authentication data" refers to electronically managed data utilized for verifying performance of an indirect handshake action by an external system, device, and/or other computing entity. Non-limiting examples of indirect handshake authentication data includes captured camera data representing a real-world environment, auditory data representing the real-world environment, and/or a combination thereof. In some embodiments, indirect handshake authentication data comprises data representing a single moment in time (e.g., for verifying rendering of a particular machine-readable symbology via a networked device via a single captured image or frame of video data). In other embodiments, indirect handshake authentication data comprises data representing multiple moments in time (e.g., for verifying a particular pattern of light being emitted by a particular networked device via multiple captured images or multiple frames of video data).

The term "device grouping" refers to data lining one or more networked devices with environment naming data. In some embodiments, any number of device identifier data is associated with environment naming data to embody a device grouping.

The term "device grouping interface" refers to one or more user interfaces configured to enable association of one or more networked devices with environment naming data to form a device grouping. Additionally or alternatively, in some embodiments, a device grouping interface further comprises one or more user interfaces to disassociate one or more networked devices from environment naming data to remove said one or more networked devices from the device grouping.

The term "threshold range" in the context of a plurality of network devices refers to a numerical value representing a physical distance such that, if a device is located within the threshold range, the two devices are considered sufficiently proximate, for example, to be grouped with the same device grouping. In some example embodiments, the threshold range may be a numerical value (e.g., 10 feet) and/or may be any another reference (e.g., within the same room, disposed atop the same object, or the like).

The term "servicing" refers to instructing and/or causing one or more actions to be performed to configure a network, networked device, and/or network access device to operate properly, in an improved state compared to prior performance, and/or as otherwise intended, and/or to initialize one or more device protection program(s) associated with a network access device and/or networked device. In at least one example context, device servicing is performed in conjunction with communications with one or more electronic support platform.

The term "augmented reality service session" refers to a state of established communication between a user device and an electronic support platform for the purposes of providing technical support associated with a network, network access device, networked device, and/or information associated with any of the network, networked access device, and/or networked device.

The term "electronic support platform" refers to one or more devices embodied in hardware, software, firmware, and/or a combination of there, that is communicable to enable servicing of one or more devices. In some embodiments, an electronic support platform includes a remote device, server, or platform accessed by a customer service representative, with which a user device may establish a connection to receive servicing of a device via communication with the customer service representative. In some embodiments, the electronic support platform is enabled to receive data from a connected user device (e.g., camera data and/or data representing an augmented reality environment) and/or push data to the connected user device to display and/or other process such data (e.g., cause rendering of one or more elements in an augmented reality environment).

The term "electronic support generated augmented reality indicator" refers to data representing an electronic data object transmitted by an electronic support platform for including in and/or otherwise rendering in an augmented reality environment maintained by a user device. In some embodiments, an electronic support generated augmented reality indicator is generated and/or otherwise associated with a position in an augmented reality environment where the electronic support generated augmented reality indicator is to be located. In some embodiments, the electronic support generated augmented reality indicator is of a preset type (e.g., preset image, shape, text, overlay, size, color, and/or the like). In other embodiments, the electronic support generated augmented reality indicator is entirely generated by a user of an electronic support platform (e.g., user-drawn, uploaded, and/or the like). In some embodiments, the electronic support generated augmented reality indicator may comprise an apparent modification or other emphasis of a real-world object and/or portion of the premises via the augmented reality environment (e.g., changing the color of or otherwise highlighting or emphasizing a representation of a networked device in the augmented reality environment, or a static image that may represent a particular time frame of the augmented reality environment and/or a captured image representing a real-world environment).

The term "indicator position" refers to data representing the position of an electronic support generated augmented reality indicator in an augmented reality environment. In some embodiments, an indicator position further corresponds to a position in an environment plot. Additionally or alternatively, in some embodiments, an indicator position is generated from a predetermined set of options, for example from positions associated with identified network device(s), network access device(s), interference object(s), network strength data, and/or the like.

The term "visual indicator identifying a networked device for servicing" refers to an electronic support generated augmented reality indicator that is associated with an indicator position sufficiently proximate to a networked device, networked access device, or position in an augmented reality environment that the visual indicator may be rendered to a display of a user device to indicate a user of the user device should perform one or more actions at that position for servicing a networked device. In some embodiments, the visual indicator identifying a networked device for servicing is associated with an indicator position at a preset distance from a position associated with a networked device (e.g., a preset distance above, below, or to any side of a networked device, or otherwise a preset distance in any direction from a point position associated with the networked device).

### Example Computing Systems and Apparatuses of the Disclosure

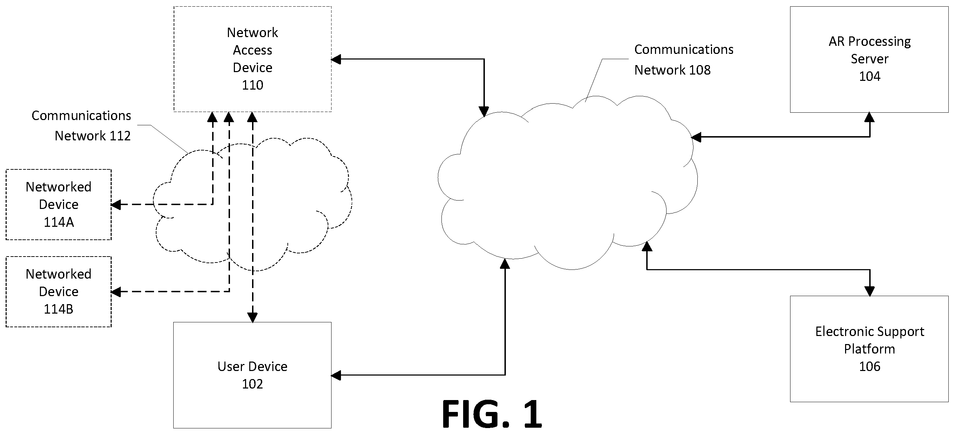

FIG. 1 illustrates a block diagram of an example specially configured computing system within which embodiments of the present disclosure may operate. As illustrated, the system includes at least one user device 102, an augmented reality ("AR") processing server 104, and an electronic support platform 106. In some embodiments, the various devices are configured to communicate over one or more communications networks, such as the communications network 108 as illustrated. In some embodiments, the user device 102 is configured for communication with each of the AR processing server 104 and the electronic support platform 106, but the AR processing server 104 and electronic support platform 106 may not be in communication with one another. In other embodiments, each of the various computing entities depicted are configured for communication with one another. In yet other embodiments, the AR processing server 104 and electronic support platform 106 are embodied by a single computing entity and/or otherwise controlled by a single entity.

In some embodiments, the user device 102 is embodied by one or more user-facing computer devices embodied in hardware, software, firmware, and/or a combination thereof configured for performing the various network-centric augmented reality processing functionality described herein. For example, in some embodiments, the user device 102 is embodied by a user device such as a laptop, desktop, smartphone, tablet, and/or the like. In some example contexts, the user device 102 is configured to execute one or more computing programs to perform the various functionality described herein. For example, the user device 102 may execute a web-based application or applet (e.g., accessible via a website), a software application installed to the user device 102 (e.g., an "app"), or other computer-coded instructions accessible to the user device 102.

In some embodiments, the user device 102 comprises various hardware, software, firmware, and/or the like for maintaining an augmented reality environment. For example, in some embodiments, the user device 102 comprises a camera circuitry configured to capture camera data embodying real-time representation(s) of the premises around the user device 102. The user device 102 may process such data for any of a myriad of purposes, such as to initialize and/or maintain an augmented reality environment, and/or generate data representing devices, objects, and/or the like in the augmented reality environment. Additionally or alternatively, in some embodiments, the user device 102 comprises a display for rendering various interfaces, including one or more augmented reality interface(s) representing the augmented reality environment. For example, the augmented reality interface may include real-time captured camera data augmented by one or more virtual objects. The virtual objects may include interface elements that are used for generating, visualizing, and/or maintaining the augmented reality environment, indicating positions for objects and/or devices in the augmented reality environment, initiating execution of one or more processes, network strength indicators and/or data derived therefrom, and/or indicators received from an electronic support platform. For example, in some embodiments, the user device 102 may be utilized as part of a process for generating an environment plot, such as by processing the captured camera data.

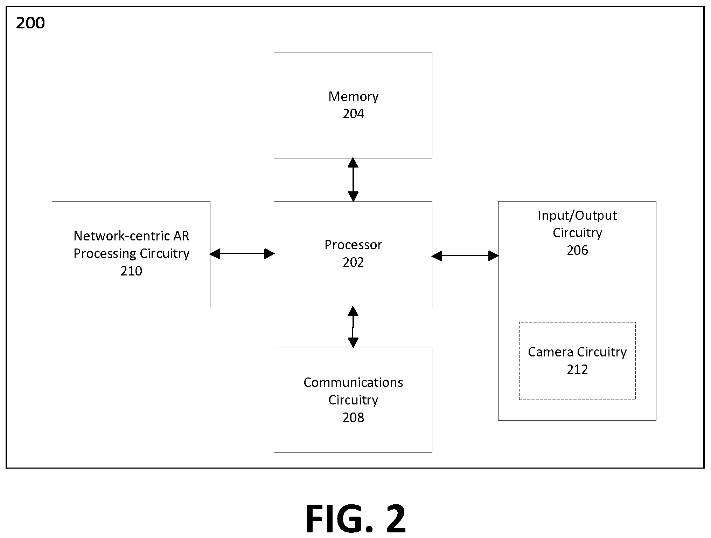

Additionally or alternatively, in some embodiments, the user device 102 is configured for performing one or more processes associated with determination of network strength data at various positions, and/or deriving data therefrom. In at least one example embodiment, the user device 102 is configured to perform a network strength determination process, for example automatically or in response to user input. The user device 102 may further be configured to derive a diminished network strength position, a preferred device position, and/or the like. Additionally or alternatively still, in some embodiments, the user device 102 is configured to generate and/or output an augmented reality interface comprising interface elements associated with the determined network strength data at various positions, and/or the data derived therefrom. For example, the user device 102 may comprise at least a portion of the hardware described in association with the apparatus 200 of FIG. 2, and/or may include any hardware known in the art for user devices.

In some embodiments, the AR processing server 104 is embodied by hardware, software, firmware, and/or a combination thereof, configured for performing various network-centric processing operations, and/or storing data associated with network-centric augmented reality processing. In some embodiments, for example, the AR processing server 104 is embodied by one or more servers remote from the user device 102. Additionally or alternatively, in some embodiments, the AR processing server 104 includes or is embodied by one or more database servers configured for storing data associated with the network-centric augmented reality processing. For example, the AR processing server 104 may comprise at least a portion of the hardware described in association with the apparatus 200 of FIG. 2, and/or may include any hardware known in the art for servers and other remote computing devices.

In some embodiments, the AR processing server 104 is configured to execute any of a myriad of processes associated with the augmented reality environment. For example, in some embodiments, the AR processing server 104 receives a generated environment plot, and/or data usable to generate an environment plot. For example, in some embodiments, the AR processing server 104 receives positions associated with various objects and/or devices, such as corner(s), networked device(s), network access device(s), interference object(s), and/or the like. In some embodiments, the AR processing server utilizes such received positions to generate and/or store an environment plot including and/or otherwise representing the positions of the various objects, devices, and/or the like. In some embodiments where the AR processing server 104 receives an environment plot and/or sub-data thereof, the AR processing server 104 may be configured to store such data (e.g., the environment plot or sub-data thereof).

In some embodiments, the AR processing server 104 is additionally or alternatively configured to receive camera data from the user device 102 and may process the camera data. For example, in some embodiments, the AR processing server 104 is configured to process the camera data to identify objects, devices, and/or other representations therein. In an example context, the AR processing server 104 processes the camera data to identify corners, networked device(s), network access device(s), and/or interference object(s) in the captured data. In some embodiments, some or all camera data processing occurs on the user device 102, such that transmitting the camera data is not required.

In some embodiments, the user device 102 stores and/or maintains all data associated with an augmented reality environment. In some such embodiments, the user device 102 transmits particular data to the AR processing server 104, where such particular data may be used to construct a premises mapping, reconstruct the augmented reality environment, and/or perform one or more network-centric process(es) associated with a real-world environment and/or one or more networked device(s). In this regard, functionality for creating, maintaining, and processing data associated with and/or embodying an augmented reality environment may be divided between such devices in any way (e.g., all processing functionality performed by user device 102, all processing functionality performed by the AR processing server 104, or any split thereof).

In some embodiments, the electronic support platform 106 is embodied by hardware, software, firmware, and/or a combination thereof, configured for performing various servicing operations associated with network-centric processing. For example, in some embodiments, the electronic support platform 106 comprises one or more application servers and/or database servers remote from the user device 102. The electronic support platform 106 may be configured, for example by one or more software applications executed on the electronic support platform 106, to provide various functionality associated with servicing device(s) and/or providing electronic support. In some such embodiments, the electronic support platform 106 is configured for use by a support user, such as a customer service representative, technical support agent, and/or the like. For example, the electronic support platform 106 may comprise at least a portion of the hardware described in association with the apparatus 200 of FIG. 2, and/or may include any hardware known in the art for servers and other remote computing devices. In some embodiments, the AR processing server 104 and electronic support platform 106 may comprise overlapping hardware and/or software elements configured to perform the processes described herein.

In some embodiments, for example, the user device 102 is configured to establish a connection with the electronic support platform 106 to enable a data communication session between the user device 102 and the electronic support platform 106. In some embodiments, during the communication session, the chat and/or audio/visual data may communicate between the user device 102 and the electronic support platform 106. In some embodiments, the electronic support platform 106 receives the camera data from the user device 102, for example such that a customer support user accessing the electronic support platform 106 may view the premises around the user and/or devices, objects, and/or the like positioned in the premises. In some embodiments, the electronic support platform 106 and/or the AR processing server 104 may facilitate AR visualization of assistance from the electronic support platform at the user device 102. In some embodiments, the electronic support platform 106 may transmit and/or otherwise cause data to be rendered to the augmented reality interface of the user device 102. For example, through interaction with the electronic support platform 106, a customer service user may generate an electronic support generated augmented reality indicator at a particular position in the augmented reality environment maintained by the user device 102, and/or transmit the electronic support generated augmented reality indicator. In this regard, once the user device 102 receives the electronic support generated augmented reality indicator, the indicator may subsequently be rendered in an augmented reality interface output by the user device 102 when oriented towards the position associated with the indicator.

In other embodiments, the electronic support platform 106 is configured to additionally or alternatively provide functionality associated with offering, facilitating, and/or executing claims associated with device protection via a device protection program. In this regard, the electronic support platform 106 may provide the user device 102 with information associated with one or more device protection program(s) available for devices indicated and/or otherwise determined as within an augmented reality environment and/or environment plot. The device protection program may provide device recovery, support, tutorial, repair, and/or other options once a defined set of circumstances occurs, for example in a circumstance where the device is lost, stolen, damaged, and/or the like. In some embodiments, the electronic support platform 106 is enabled to provide enrollment in one or more of such device protection programs. Additionally or alternatively, in some embodiments, the particular device protection programs made available are dependent on the specific devices indicated and/or detected in the augmented reality environment and/or environment plot. For example, in some embodiments, the device protection programs that a user device 102 may receive information about correspond to the particular device types in the augmented reality environment and/or environment plot (e.g., smart TV protection programs are offered only when a smart TV is identified or detected, laptop protection programs are offered only when a laptop is identified or detected, and the like).

In some embodiments, the system includes a network access device 110. In some such embodiments, the network access device 110 facilitates communication between the user device 102, one or more networked devices 114a,b,..., etc., and/or the communications network 108. In some such circumstances, the network access device 110 is controlled on the premises in which the user device 102 is mapping. The user device 102 and the network access device 110 communicate via the communications network 112, which may be a subcomponent of or entirely separate from the communications network 108. For example, in at least one example context, the network access device 110 comprises a modem, and/or a modem and router, providing wireless networking capabilities to a user device 102. In some embodiments, the network access device 110 may comprise multiple devices, such as a modem and router or multiple routers (e.g., multiple independent routers, a mesh WiFi network, a range extender, or the like). In some example contexts, the user device 102 may communicate with the network access device 110 over a shorter range (for example using Wi-Fi communications) to facilitate access to the communications network 108 to enable communication over a much wider range (for example embodying the Internet, or another public network in some examples). In some contexts, such as when the user device 102 is enabled for cellular data communication, the network access device 110 may not be used for communication over the communications network 108. In some embodiments, the user device 102 may connect directly with one or more other devices (e.g., networked devices 114a, 114b,...).3

In some embodiments, the networked devices 114a, 114b, . . . may be any devices on the communications network 112 and/or capable of electronic communication with other devices on the premises. The networked devices may be provided by the user independent of the AR system and may include any common devices known in the art, including mobile phones, tablets, personal computers, smart appliances, IoT devices, streaming devices, game consoles, and any other device capable of the aforementioned communication. For example, one or more networked devices 114a, 114b, . . . may comprise at least a portion of the hardware described in association with the apparatus 200 of FIG. 2, and/or may include any hardware known in the art for computing devices.

For example, the AR processing server 104 may comprise at least a portion of the hardware described in association with the apparatus 200 of FIG. 2, and/or may include any hardware known in the art for servers and other remote computing devices.

The methods, apparatuses, systems, and computer program products of the present disclosure may be embodied by any variety of devices. For example, a computer-implemented method, apparatus, system, and/or computer program product of an example embodiment may each be embodied by a fixed computing device, such as a personal computer, computing server, computing workstation, or a combination thereof. Such fixed computing implementations in some circumstances include or are otherwise communicably coupled (e.g., wired or wireless coupling) with mobile peripherals, components, probes, and/or other devices, for example to enable mobile image capture and/or signal processing as described herein. Further, an example embodiment may be embodied by any of a variety of mobile terminals, mobile telephones, smartphones, laptop computers, tablet computers, or any combination of the aforementioned devices.

In at least one example embodiment, the user device 102 is embodied by one or more computing systems, such as the apparatus 200 as shown in FIG. 2. The apparatus 200 may include a processor, memory 204, input/output circuitry 206, communications circuitry 208, and/or network-centric AR processing circuitry 210. In some embodiments, one or more of such circuitries is combined with one or more other circuitries of the apparatus 200 such that the functionality associated with one or more circuitries may be performed by one or more other circuitries. Additionally or alternatively, in some embodiments, at least some of the functionality described with respect to the network-centric AR processing circuitry 210 is performed by, and/or via communication with, another device such as the AR processing server 104 of another apparatus 200, one or more networked devices 114a, 114b,... or another device. In various embodiments discussed herein, any device may include one or more circuitries of the apparatus 200 shown in FIG. 2 to accomplish the specific functions described for such devices.

Although the components are described with respect to functional limitations, the particular implementations necessarily include the use of particular hardware. It should also be understood that certain of the components described herein may include similar or common hardware. For example, two circuitries may both leverage use of the same processor, network interface, storage medium, or the like to perform their associated functions, such that duplicate hardware is not required for each circuitry. The use of the term "module" and/or the term "circuitry" as used herein with respect to components of the apparatus 200 should therefore be understood to include particular hardware configured to perform the functions associated with the particular circuitry as described herein.

Additionally or alternatively, the terms "module" and "circuitry" should be understood broadly to include hardware and, in some embodiments, software and/or firmware for configuring the hardware. For example, in some embodiments, "module" and "circuitry" may include processing circuitry, storage media, network interfaces, input/output devices, and the like. In some embodiments, other elements of the apparatus 200 may provide or supplement the functionality of the particular circuitry. For example, the processor 202 may provide processing functionality, the memory 204 may provide storage functionality, the communications circuitry 208 may provide network interface functionality, and the like, to one or more of the other circuitries.

In some embodiments, the processor 202 (and/or co-processor or any other processing circuitry assisting or otherwise associated with the processor) may be in communication with the memory 204 via a bus for passing information among components of the apparatus. The memory 204 may be non-transitory and may include, for example, one or more volatile and/or non-volatile memories. For example, the memory may be an electronic storage device (e.g., a computer readable storage medium). The memory 204 may be configured to store information, data, content, applications, instructions, or the like, for enabling the apparatus 200 to carry out various functions in accordance with example embodiments of the present disclosure.

The processor 202 may be embodied in any one of a myriad of ways and may, for example, include one or more processing devices configured to perform independently. Additionally or alternatively, the processor 202 may include one or more processors configured in tandem via a bus to enable independent execution of instructions, pipelining, and/or multithreading. The use of the terms "processor," "processing module," and "processing circuitry" may be understood to include a single-core processor, a multi-core processor, multiple processors internal to the apparatus, other central processing unit ("CPU"), microprocessor, integrated circuit, and/or remote or "cloud" processors.

In an example embodiment, the processor 202 may be configured to execute computer-coded instructions stored in the memory 204 or otherwise accessible to the processor. In some embodiments, the processor 202 may be configured to execute hard-coded functionality. Whether configured by hardware or software means, or by a combination thereof, the processor 202 may represent an entity (e.g., physically embodied in circuitry) capable of performing operations according to the embodiments of the present disclosure while configured accordingly. In some embodiments, when the processor is embodied as an executor of software instructions, the instructions may specifically configure the processor to perform the algorithms and/or operations described herein when the instructions are executed.

As one example context, the processor(s) 202, instantiated on one or more apparatuses, may be configured to provide network-centric augmented reality processing functionality. For example, in at least one embodiment, the processor 202 is configured to receive camera data associated with an AR environment and processing the camera data. In some such contexts, the processor 202 is additionally or alternatively configured to initialize and/or maintain an augmented reality environment. In some such contexts, the processor 202 is additionally or alternatively configured to receive one or more indication(s) of one or more plot corner(s) represented in the camera data, mapping each plot corner to a corner location in the augmented reality environment. In some such contexts, the processor 202 is additionally or alternatively configured to generate an environment plot based on the corner location for each plot corner. In some such contexts, additionally or alternatively, the processor 202 is configured to receive indication(s) of networked device(s) in the camera data, and map the networked device with a networked device location in the augmented reality environment, which may additionally or alternatively be included in the generated environment plot. In some such contexts, additionally or alternatively, the processor 202 is configured to receive indication(s) of network access device(s) in the camera data, and map the network access device with a network access device location in the augmented reality environment, which may additionally or alternatively be included in the generated environment plot. In some such contexts, additionally or alternatively, the processor 202 is configured to receive indication(s) of interference object(s) in the camera data, and map each of the interference object(s) with an interference object location in the augmented reality environment, which may additionally or alternatively be included in the generated environment plot. The processor 202 may additionally or alternatively be configured to perform any of a myriad of actions in response to indication of any of such objects and/or devices in the camera data. In some embodiments, multiple apparatuses 200, such as the user device 102, the AR processing server 104, and/or another associated device may perform portions of the aforementioned processing steps via their respective processors. For example, in some embodiments, all AR displaying and processing functionality is performed on a user device 102, such that the AR processing server is embodied by a sub-system of the user device 104. Additionally or alternatively, in some embodiments, the user device performs the AR-related data intake and displaying operations as described herein, and the AR processing server performs the AR-related data object generation and processing operations as described herein.

The processor 202 may additionally or alternatively be configured to provide network-centric augmented reality processing functionality associated with network strength data determination and troubleshooting. In some contexts, for example, the processor 202 is configured to generate and/or otherwise determine network strength data at a particular position in the augmented reality environment (e.g., via direct measurement and/or via data received from one or more other devices). The processor 202 may subsequently include data representing the network strength data at the particular position within the generated environment plot. The processor 202 may additionally or alternatively be configured to receive mapping device position data, such that network strength data may be determined and associated with the position represented by the mapping device position data. In some such contexts, additionally or alternatively, the processor 202 is configured to process one or more instances of network strength data associated with various positions, for example to identify one or more diminished strength position(s) in the augmented reality environment, identify a preferred position in the augmented reality environment, and/or provide notifications associated with placing new devices in a premises, repositioning devices and/or objects in a premises, and/or the like. In some embodiments, the processor 202 is additionally or alternatively configured to render an augmented reality interface including one or more indicators depicting network strength data values at various positions in the augmented reality environment. In some embodiments, multiple apparatuses 200, such as the user device 102, the AR processing server 104, and/or another associated device may perform portions of the aforementioned processing steps via their respective processors.

The processor 202 may additionally or alternatively be configured to provide network-centric augmented reality processing functionality associated with servicing and/or protection of devices. For example, in some contexts, the processor 202 is configured to enable generation of environment naming data and/or grouping of devices for association with such environment naming data. In some such contexts, additionally or alternatively, the processor 202 is configured to enable batch actions to be performed associated with all devices associated with particular environment naming data. Additionally or alternatively, in some contexts, the processor 202 is configured to enable communication with an electronic support platform. In some contexts, additionally or alternatively, the processor is configured to provide information associated with device protection programs for any of a myriad of devices identified within the premises. In some embodiments, multiple apparatuses 200, such as the user device 102, the AR processing server 104, and/or another associated device may perform portions of the aforementioned processing steps via their respective processors.

In some embodiments, the apparatus 200 may include input/output circuitry 206 that may be in communication with processor 202 to provide output to the user and, in some embodiments, to receive inputs, such as an indication of a user input, a camera input, or the like. The input/output circuitry 206 may comprise one or more user interfaces and may include a display to which user interface(s) may be rendered. Such user interfaces may include augmented reality interfaces comprising representations of real-world imagery together with virtual objects associated with various positions in an augmented reality environment, and/or static user interface elements providing a heads up display including any of a variety of network-centric augmented reality processing information and/or interface controls for initiating any of a myriad of actions described herein. In some embodiments, the input/output circuitry 206 may comprise a web user interface, a mobile application, a desktop application, a linked or networked client device, and/or the like. In some embodiments, the input/output circuitry 206 may also include a keyboard, a mouse, a joystick, a touch screen, touch areas, soft keys, a microphone, a speaker, or other input/output mechanisms. In some such embodiments, the input/output mechanisms are configured to enable a user to provide data representing one or more user interaction(s) for processing by the apparatus 200. The processor and/or user interface circuitry comprising the processor, for example processor 202, may be configured to control one or more functions of one or more user interface elements through computer program instructions (e.g., software and/or firmware) stored on a memory accessible to the processor (e.g., memory 204, and/or the like).

In some embodiments, the input/output circuitry 206 includes hardware, software, firmware, and/or any combination thereof, that provides data associated with the real-world positioning of the apparatus 200 within an environment. For example, in some embodiments, the input/output circuitry 206 includes one or more data sensor(s) integrated to, communicatively coupled with, or otherwise attached to the apparatus 200 and that provide such data. For example, in some embodiments the input/output circuitry 206 includes inertia sensor(s), accelerometer(s), gyroscope(s), motion sensor(s), range and/or distance sensor(s), LiDAR sensor(s), and/or the like, that generate data representing a current orientation, position, and/or movement of the apparatus 200, and/or determine a change in orientation, position, and/or movement of the apparatus 200. It will be appreciated that these sensor(s) may be utilized to determine properties of the apparatus 200, for example current or changes in orientation, absolute position, relative position from a coordinate, relative position to another object, range to another object, and/or the like. Additionally or alternatively, such sensor(s) and/or data derived therefrom in some embodiments is utilized to generate and/or process an augmented reality environment for any of the purposes described herein.

In some embodiments, the input/output circuitry 206 includes a camera circuitry 212 configured to enable capture of image data objects representing a real-world environment around the camera circuitry. The camera circuitry may be embodied by software, hardware, firmware, and/or a combination thereof. For example, in some embodiments, the input/output circuitry 206 comprises one or more image sensor associated with image capture optics, for example one or more lenses defining a particular field of view to be captured by the image sensor, such that light incident on the image sensor through the image capture optics is captured during exposure of the image sensor. In this regard, the image sensor may subsequently output an image data object for processing by the input/output circuitry 206, and/or one or more of the other circuitries of apparatus 200, such as the processor 202 and/or network-centric AR processing circuitry 210. In some embodiments, the camera circuitry of the input/output circuitry 206 is configured such that one or more computer programs executed via the apparatus 200 may leverage the camera circuitry to perform image capture functionality. Additionally or alternatively, in some embodiments the input/output circuitry 206 includes hardware, software, firmware, and/or a combination thereof, that display(s) virtual object(s) to align such virtual object(s) within an augmented reality at particular location(s) corresponding to real-world location(s).

The communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, at least a network interface for enabling communications with a wired or wireless communications network. For example, the communications circuitry 208 may include one or more network interface cards, antennas, buses, switches, routers, modems, and supporting hardware and/or software, or any other device suitable for enabling communications via a network. Additionally or alternatively, the communication interface may include the circuitry for interacting with the antenna(s) to cause transmission of signals via the antenna(s) or to handle receipt of signals received via the antenna(s). For example, the communications circuitry 208 may be configured for WiFi, Bluetooth, Zigbee, wired LAN, wireless LAN, cellular, and/or any other communication protocol. In some circumstances, the communications circuitry 208 enables communication with one or more external servers, devices, and/or the like, such as an AR processing server and/or electronic support platform in an instance in which the apparatus 200 corresponds to the user device 102.

In some embodiments, the network-centric AR processing circuitry 210 includes hardware, software, firmware, and/or a combination thereof, configured to support network-centric augmented reality processing functionality. The network-centric AR processing circuitry 210 may utilize processing circuitry such as the processor 202, to perform these actions. In some contexts, the network-centric AR processing circuitry 210 includes hardware, software, firmware, and/or a combination thereof, to initialize and/or maintain an augmented reality environment. Additionally or alternatively, in some contexts, the network-centric AR processing circuitry 210 includes hardware, software, firmware, and/or a combination thereof configured to receive camera data and/or process camera data for any of a myriad of purposes. In some contexts, additionally or alternatively, the network-centric AR processing circuitry 210 is configured to perform various mapping functions, such as mapping objects and/or devices to positions in an augmented realty environment. Additionally or alternatively, in some contexts, the network-centric AR processing circuitry 210 includes hardware, software, firmware and/or a combination thereof, configured to generate network strength data for a position in an augmented reality environment. Additionally or alternatively, in some contexts, the network-centric AR processing circuitry 210 includes hardware, software, firmware, and/or a combination thereof, configured to provide functionality associated with servicing one or more devices through communication with an electronic support platform. Additionally or alternatively, in some contexts, the network-centric AR processing circuitry 210 includes hardware, software, firmware, and/or a combination thereof, configured to determine device protection programs to provide for one or more devices in a premises, and/or to provide functionality to enable a user to enroll in one or more of such device protection program(s). In some embodiments, the network-centric AR processing circuitry 210 is embodied entirely on a single system (e.g., a user device, or server(s) remote from the user device). In other embodiments, the network-centric AR processing circuitry 210 is embodied partially on each of a user device and server(s) located remotely from the user device, for example where hardware, software, firmware, and/or a combination thereof local to the user device displays the augmented reality as an overlay to captured camera data based at least in part on data received from the server(s). It should be appreciated that, in some embodiments, the network-centric AR processing circuitry 210 may include a separate processor, specially configured field programmable gate array (FPGA), or a specially configured application-specific integrated circuit (ASIC).

In one or more embodiments, the network-centric AR processing circuitry 210 includes and/or otherwise is configured to communicate with one or more distinct third-party circuitries, which similarly may each be embodied in hardware, software, firmware, and/or a combination thereof. In this regard, one or more of such third-party circuitries may be utilized to perform one or more actions with respect to initializing, generating, and/or otherwise maintaining the augmented reality environment. For example, in one or more embodiments, a third-party circuitry may provide functionality for initializing the augmented reality environment (e.g., by scanning a flat surface), identifying the current mapping device (e.g., user device 102) position, generating virtual objects for including in the augmented reality environment, and/or rendering one or more user interface(s) and/or user interface elements associated with the augmented reality environment (e.g., augmented reality environment(s)). Non-limiting examples of a third-party circuitry utilized to provide some or all of such augmented reality functionality include "ARKit" available from Apple Inc. of Cupertino, California, and/or "ARCore" available from Google LLC of Mountain View, California.

In some embodiments, one or more of the aforementioned components is combined to form a single circuitry. The single combined circuitry may be configured to perform some or all of the functionality described above with respect to the individual circuitries. For example, in at least one embodiment, the network-centric AR processing circuitry 210 and the processor 202 are combined. Additionally or alternatively, in some embodiments, one or more of the circuitries described above may be configured to perform one or more of the actions described with respect to one or more of the other circuitries. In some embodiments, multiple apparatuses 200, such as the user device 102, the AR processing server 104, and/or another associated device may perform some or all of the functions described in the foregoing section, either alone or via cooperative communication with each other.

In some embodiments, the user device 102 may comprise some or all of the components of the apparatus 200, and at least the components required to perform the functions described herein. In some embodiments, the networked device(s) 114a, 114b,... may each comprise some or all of the components of the apparatus 200, and at least the components required to perform the functions described herein. In some embodiments, the network access device 110 may comprise some or all of the components of the apparatus 200, and at least the components required to perform the functions described herein. In some embodiments, the AR processing server 104 may comprise some or all of the components of the apparatus 200, and at least the components required to perform the functions described herein. In some embodiments, the electronic support platform 106 may comprise some or all of the components of the apparatus 200, and at least the components required to perform the functions described herein.

### Example Visualization of Network-centric Augmented Reality Processing in an Example Premises

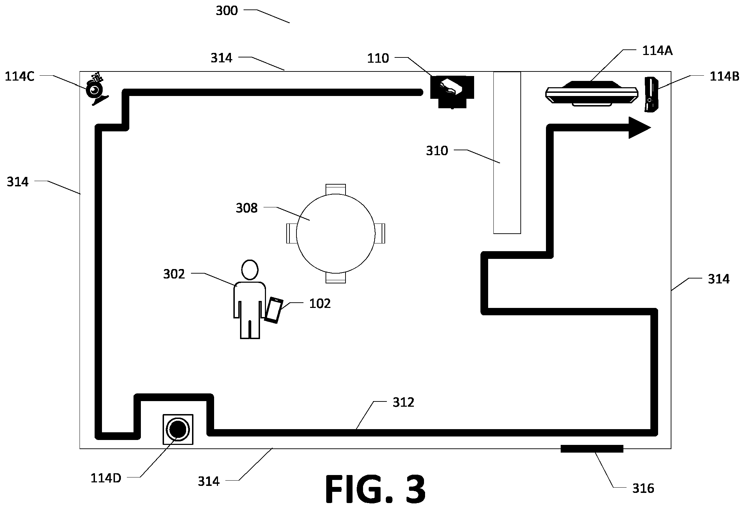

FIG. 3 illustrates an example visualization of a premises in which network-centric augmented reality processing occurs, in accordance with at least one example embodiment of the present disclosure. It should be appreciated that FIG. 3 depicts one example premises and corresponding network-centric augmented reality processing. The specific premises illustrated in FIG. 3 and the specific devices therein are exemplary and not to limit the scope of the disclosure to such specifics.

FIG. 3 illustrates an exemplary premises 300. In an example context, the premises 300 represents a room in a building, such as a home, office, apartment, and/or the like. The premises 300 is defined by a plurality of physical structures, and includes a plurality of objects, devices, and the like at various positions in the premises. For example, as illustrated, the outer perimeter of the premises 300 is defined by the walls 314 and a door 316. Windows may also be included and may be detected and mapped via the processes discussed herein. In some contexts, for example as illustrated in FIG. 3, the premises may further include one or more internal physical structures, such as the wall 310. Such internal physical structures may further define the space within the premises that is navigable by a user and/or where devices and/or objects may be placed. It should be appreciated that the physical structures in premises 300 may be embodied by any of a myriad of materials.

In the depicted embodiment, the premises 300 further comprises a network access device 110. In some example contexts, the network access device 110 comprises a modem and/or router enabling access to one or more communications networks (e.g., communications network 108 shown in FIG. 1), such as the Internet. In this regard, the network access device 110 may be accessible to one or more of the networked devices (e.g., networked devices 114A, 114B,... shown in FIG. 1) in the premises 300 to enable such networked devices to access such communications network(s). It should be appreciated that, to establish such communications, the network access device 110 may be configured to output wireless signals to be received by one or more of the plurality of networked devices, and/or be configured to receive wireless signals transmitted from the plurality of networked devices to the network access device 110 for further processing.

Each of the plurality of networked devices 114A-114D may establish a connection with the network access device 110 and maintain the connection to enable such continuing communication. For example, as illustrated, the premises 300 includes the networked device 114A embodying a smart TV, the networked device 114B embodying a gaming console positioned near the smart TV 114A, the networked device 114C embodying a home security system, and the networked device 114D embodying a virtual assistant device. As illustrated, each of the networked devices 114A-114D (collectively "networked devices 114") may be positioned at a different position in the premises 300. Additionally, as illustrated, each of the networked devices 114 is associated with a different proximity to the network access device 110, and with varying levels of interference based on interference objects also in the premises 300.

In some embodiments, one or more of the networked devices (e.g., networked devices 114A-114D) may be configured for direct communication with other devices without a network access device 110 (e.g., Bluetooth communication, direct WiFi, or the like) or using a different network access device (e.g., a cellular network, or the like). In such embodiments, the data associated with such communications and the transmissions associated therewith may be facilitated by any computing device or network (or combination of computing devices or networks) capable of passing the data and transmissions from the desired start point to the desired end point. For example, in one embodiment, a user device 102 may connect directly to the one or more of the networked devices (e.g., networked devices 114A-114D) via one or more of the communication techniques described herein.

The premises 300 may include any of a myriad of interference objects. The interference objects may include any furniture, structural objects, devices, and/or the like, including the structure and fixtures of the premises itself (e.g., walls 310, 314, and/or door 316), that interfere with the transmission and/or reception of wireless signals in the premises. As illustrated, the premises 300 includes the interference object 308 embodying a table. The table 308 may provide a large physical barrier that diminishes the strength of wireless signals transmitted from the network access device 110 and/or to the network access device 110 from one of the networked devices. In this regard, the inner wall 310 may similarly be identified as an interference object, for example by diminishing signal strength between the network access device and one or more networked device (e.g., the networked devices 114A and 114B). In embodiments related to multi-room premises, the walls 314 likewise may be considered interference objects.

A user, such as the user 302, may perform network-centric augmented reality processing utilizing one or more embodiments described herein. In at least one example context, the user 302 may perform such network-centric augmented reality processing utilizing a user device 102 (e.g., a tablet, mobile phone, AR glasses, or other device or set of devices) as a mapping device for mapping the premises and/or as a device for displaying an augmented reality interface, for example embodied by an apparatus 200. In this regard, the user 302 may initiate one or more computer programs, executables, and/or the like, via apparatus(es) 200 (e.g., embodied as the user device 102, AR processing server 104, and/or electronic support platform 106) to access such functionality for network-centric augmented reality processing. During execution, the user device 102 may output one or more specially configured user interfaces to a display viewable by the user 302 (e.g., via a display of the user device 102, which may include the circuitry associated with the apparatus 200). In at least one example context, such user interfaces include one or more augmented reality interface(s) including real-world imagery represented in captured camera data augmented by one or more virtual object(s) associated with network-centric augmented reality processing functionality. In some embodiments, the user manipulates and/or otherwise interacts with the user device 102 while navigating in the premises 300 to perform such functionality.

As illustrated, for example, the user 302 may traverse throughout the premises 300 to map an environment plot representing the premises 300. In one example context, the user 302 may traverse along a path capable of capturing and mapping the relevant locations in the premises (e.g., path 312) at least once to perform one or more actions associated with network-centric augmented reality processing. In some embodiments, for example, the user 302 traverses along the path 312 while utilizing the mapping device (e.g., user device 102) to capture camera data representing the premises 300 and process such camera data. The path 312 may be predefined and instructed to the user (e.g., "walk anti-clockwise along the walls until returning to your starting position"), or the path may be whichever course the user takes during the mapping operation. For example, the user device 102 may display a progress graph or visualization of the environmental plot that shows the portions of the premises that have been mapped.

In some embodiments, apparatus(es) 200 (e.g., embodied as the user device 102, AR processing server 104, and/or electronic support platform 106) may be utilized to initialize an augmented reality environment. For example, in some embodiments, the augmented reality environment is initialized by scanning a flat surface (e.g., capturing and processing camera data with camera circuitry) to establish an origin point and/or coordinate plane. In this regard, as the mapping device (e.g., user device 102) is traversed through the premises 300 (for example, by the user 302), the device is configured to determine its position with respect to the initialized origin and/or coordinate plane to identify its current position in the augmented reality environment. In some embodiments, the initialization process may include calibrating the sensors (e.g., the camera circuitry and/or any onboard sensors, such as a gyroscope, compass, GPS, accelerometer, or the like), such that the orientation of the mapping device (e.g., the user device) may be determined and the coordinate system of the augmented reality environment may be established relative to, for example, horizontal and vertical directions in the premises. In some embodiments, the user device may be configured to self-calibrate via embedded software and/or hardware as would be appreciated by a person of ordinary skill in the art in light of the present disclosure. The position at which the mapping device (e.g., the user device 102) is located during mapping may be referred to as the "mapping device position" and may be represented by "mapping device position data" determined and/or otherwise generated by the device. The mapping device (e.g., user device 102) may determine and/or otherwise track the mapping device position utilizing location services circuitry embodied in software, hardware, firmware, and/or a combination thereof. Such location services circuitry may be used to identify the mapping device position using any of a myriad of methodologies, including Bluetooth and/or near-field location determination methodologies, global positioning satellite determination, and/or the like. The data identified by the location services circuitry may embody an absolute position or a relative position with respect to a known point (e.g., a relay device with a known location), and additionally or alternatively may embody the mapping device position data and/or be utilized to derive the mapping device position data therefrom (e.g., based on the relationship between the current position data and the data corresponding to the origin point for the augmented reality environment). In some embodiments, at least a portion of the premises may already be mapped, and map data may be loaded into the augmented reality environment for subsequent processing. For example, in some embodiments, a full diagram of the premises may be saved in and loaded from memory. In some embodiments, a skeletal diagram of the premises may be loaded from memory which includes the permanent contours and fixtures of the premises without movable devices and/or objects. In some embodiments, the entire premises may be mapped from scratch. In some embodiments, such as in an instance in which a user moves to a new location, the devices on the network may be known but their locations may be unknown, such that the mapping process includes generating a skeletal diagram of the premises and/or assigning positions to the known devices on the network.

The user 302 may utilize apparatus(es) 200 (e.g., embodied as the user device 102, AR processing server 104, and/or electronic support platform 106) to indicate positions of the various objects and/or devices throughout the premises 300. In some embodiments, the user device 102 may be configured to render an augmented reality interface including camera data representing real-world imagery of the premises 300 together with one or more interface elements embodied as virtual objects in the augmented reality environment and/or static objects in the augmented reality interface. For example, in at least one example circumstance, the user device 102 generates and/or maintains a reticle and/or other virtual object in the augmented reality environment, where the user may manipulate the user device 102 and/or the reticle directly while viewing the augmented reality interface to reposition the reticle in the augmented reality environment relative to real-world imagery captured by the camera circuitry. The mapping device (e.g., user device 102) may automatically, or in response to user indication, collect data points based on a calculated location of the surface that the reticle intersects based on the known location of the mapping device and ranging information in the captured camera data. In some embodiments, the user may touch or otherwise indicate a portion of the display to be targeted (e.g., to map to a particular feature or device) rather than utilizing a fixed reticle. In some embodiments, the mapping device may include one or more additional imaging and/or ranging devices, such as a Light Detection and Ranging (Lidar) transmitter and/or receiver.

Additionally or alternatively in some embodiments, the apparatus 200 (e.g., embodied as the user device 102, AR processing server 104, and/or electronic support platform 106) is configured to enable rendering of one or more interface elements (e.g., static interface elements and/or virtual objects configured to receive user interaction) for indicating an object and/or device in the augmented reality environment. In some such embodiments, the user 302 may position the mapping device (e.g., user device 102) such that the reticle viewed on the display overlaid on the real-world image data is positioned at a position where an object and/or device is located, and subsequently interact with the one or more interface elements to indicate the object and/or device is at that position. For example, in some embodiments, the user device 102 outputs an augmented reality interface comprising an interface element for each type of object and/or device. In an example context, the user device 102 renders the augmented reality interface comprising at least an interface element for indicating the reticle is located at a position associated with a corner of the premises 300, an interface element for indicating the reticle is located at a position associated with an interference object, an interface element for indicating the reticle is located at a position associated with a networked device, and an interface element for indicating the reticle is located at a position associated with a network access device. The user may select from the listed options to indicate which device or which type of device is currently disposed at the position of the reticle. In some embodiments, the apparatus(es) 200 may automatically identify one or more devices and/or objects in images via image recognition processes to quickly map the premises. It should be appreciated that interface elements may be provided for indicating existence and position of any number of objects, device types, and/or sub-types thereof.

As an example, the user 302 may navigate along the path 312 any number of times (or may take another path throughout the premises 300). The user 302 may begin next to the network access device 110 and begin by mapping the premises 300 to generate an environment plot that represents the layout of the premises 300. In at least one example embodiment, the user 302 utilizes the mapping device (e.g., user device 102) to indicate the position of at least each corner in the premises 300. For example, the user 302 may interact with the user device 102 by positioning a reticle at the position of each corner in the premises 300, and upon such positioning (and/or subsequent user engagement with the user device 102 indicating the existence of a corner at a particular position of the user device 102 in the augmented reality environment and/or the position of an associated reticle in the augmented reality environment) the user device 102 may map a corner to corner position data. Additionally or alternatively, apparatus(es) 200 (e.g., embodied as the user device 102, AR processing server 104, and/or electronic support platform 106) may store the corner position data in an environment plot and/or together with a data object in the augmented reality environment. In some embodiments, apparatus(es) 200 generate the environment plot as each corner is mapped (e.g., either locally on the user device or remotely on one or more of the remote computing systems discussed herein), for example such that environment plot is generated comprising data that connects each corner position as they are captured in succession (e.g., the environment plot may include data, such as a line, that connects the first indicated corner position with the second indicated corner position, the second indicated corner position with the third indicated corner position, and so on), such that the environment plot is generated based on the set of corners mapped by the user 302. In some embodiments, the generation of the environment plot may include connecting adjacent corners (e.g., adjacent by capture order, perimeter tracing, or the like) with straight lines. It should be appreciated in light of this disclosure that inner walls, such as the inner wall 310, and/or other structural objects defining a premises may similarly be mapped such that the generated environment plot accurately represents the premises. With respect to the premises 300 and path 312 as illustrated in FIG. 3, the user 302 may navigate with the mapping device (e.g., user device 102) to indicate the position of the corner behind the network access device 110, then the position of the corner next to networked device 114C, then the position of the corner next to networked device 114D, and so on, until reaching the final corner behind the networked device 114B. In at least one embodiment, during mapping of the premises 300, the user 302 may additionally or alternatively utilize the mapping device (e.g., user device 102) to indicate the existence of one or more doors, entranceways, and/or other gaps in the walls that define the premises 300. In embodiments in which the premises comprises multiple rooms, common doors, entranceways, other gaps, or the like may be used as common reference points between rooms to connect the overall premises map. For example, the user 302 may utilize the mapping device (e.g., user device 102) to indicate the position of the door 316, and the environment map may be generated including data that represents the existence of the door 316 and/or otherwise indicates a gap in the walls defining the premises 300. In some embodiments, mapping is performed based at least in part on a two-dimensional coordinate system, such that positional data corresponding to a particular device or the premises itself is represented by a tuple of two data values (e.g., an x-y coordinate pair). In other embodiments, mapping is performed based at least in part on a three-dimensional coordinate system, such that positional data corresponding to a particular device or the premises itself is represented by a tuple of three data values (e.g., an x-y-z coordinate pair including a heigh coordinate).

In some embodiments, it will be appreciated that other notable aspect(s) of the environment may be mapped, for example some of which may impact signal strength between a networked device and a network access point. In some embodiments, windows, doorways, openings, and/or other changes in the structure of the boundary of the environment are indicated while mapping and/or stored as differentiated within an environment plot. In this regard, the environment plot may represent a realistic and/or accurate mapping of the environment. Features of the real-world environment (e.g., corner(s), boundaries, changes in boundaries, and/or the like) in some embodiments are manually indicated, and in other embodiments are automatically determined utilizing one or more image processing algorithm(s), machine learning model(s) that perform object detection from captured data, and/or the like.

Additionally or alternatively in some embodiments, while traversing the path 312 with the mapping device (e.g., user device 102) for a first or subsequent time, or while traversing an alternative path, the user 302 utilizes the mapping device to map the position of the various devices and/or objects in the premises 300. For example, the user 302 may manipulate the user device 102 (e.g., by moving the user device 102, orienting the user device 102, and/or the like) such that a reticle is positioned at the position of the network access device 110 in the augmented reality environment, for example which is visible to the user 302 via an augmented reality interface rendered to the user device 102. In some such embodiments, the mapping device (e.g., user device 102) may receive an indication of the device and/or object positioned at the reticle, and map data indicating the device and/or object is located at the designated position in the augmented reality environment and/or environment plot. For example, in at least one example context, the environment plot may be generated including a data object mapped to the position indicated by the position of the reticle in the augmented reality environment. In some embodiments, the data object is a data object that indicates the existence of an interference object, a data object that indicates the existence of a networked device, or a data object that indicates the existence of a network access device, but does not indicate the particular object or device located at the position. In other embodiments, apparatus(es) 200 (e.g., embodied as the user device 102, AR processing server 104, and/or electronic support platform 106) automatically determine a specific object type or device type and/or device identification information associated with the object or device, and store the data type in the augmented reality environment and/or environment plot. In some embodiments, the user identifies the object a during mapping (e.g., by selecting the object from a drop-down menu and marking the object via the reticle and position determination algorithm). For example, in some embodiments, the apparatus(es) 200 determine or the user 302 indicates via the user device 102 that a network access device is located at the position of network access device 110, a networked device at each position of networked devices 114A, 114B, 114C, and 114D, and an interference object at the position of objects 308 and 310 in FIG. 3. Additionally or alternatively, in some embodiments, the mapping device (e.g., user device 102) enables the user to input a specific object type, or a specific device type and/or device identification information associated with the object or device, and stores the specific object type and/or device type in the augmented reality environment and/or environment plot. For example, in some embodiments, apparatus(es) 200 (e.g., embodied as the user device 102, AR processing server 104, and/or electronic support platform 106) automatically determine and/or the user 302 indicates via the mapping device (e.g., the user device 102) that there is a router at the position of network access device 110, a home security system at the position of networked device 114C, a virtual assistant device at the position of networked device 114D, a smart TV at the position of networked device 114A, and/or a gaming console at the position of networked device 114B, as well as a table at the position of interference object 308, and an inner wall at the position of interference object 310. Additionally or alternatively, in some embodiments, apparatus(es) 200 (e.g., embodied as the user device 102, AR processing server 104, and/or electronic support platform 106) automatically or through user interaction with the mapping device (e.g., the user device 102) enables device identification information associated with each of the networked devices and/or network access devices to be stored associated with each of the indicated networked devices and/or network access devices.

In some embodiments, the mapping device (e.g., user device 102) is utilized to generate and/or otherwise determine network strength data at various positions within the premises 300. In some embodiments, network strength data may be determined by one or more other devices on the premises, either themselves or via communication with third devices on the premises. For example, the network access device 110 and/or the networked devices 114A-114D may measure and report their respective signal strengths to the user device 102, the AR processing server 104, and/or the electronic support platform 106. In this regard, the determined network strength data may be mapped to a particular position in the augmented reality environment and/or the corresponding environment plot. In this regard, the network strength data may be determined at various positions throughout the premises 300 to enable the apparatus(es) 200 (e.g., embodied as the user device 102, AR processing server 104, and/or electronic support platform 106) and/or the user 302 to further process the network strength data at such various positions and/or initiate one or more actions, determinations, and/or the like based on the determined network strength data at one or more positions. In one example context, the user 302 may initiate a test to determine the network strength data associated with a particular position along the path 312. The network strength data may specifically be determined associated with a particular position, for example by mapping the generated and/or otherwise determined network strength data with device position data corresponding to the position of the mapping device (e.g., user device 102) or other device measuring network strength data in the augmented reality environment corresponding to the premises 300.

It should be appreciated that network strength data may be generated and/or otherwise determined for any number of positions in the premises 300, for example such that the one or more various measurement devices (e.g., user device 102; networked devices 114a, 114b. . . .; and the like) are utilized to test the network strength associated with one or more network access devices at a number of positions. As illustrated, for example, the user 302 may utilize the mapping device (e.g., user device 102) and/or the various other devices in the premises (e.g., networked devices 114a, 114b, . . .) to test the network strength data with respect to the network access device 110 at the various positions associated with each of the networked devices 114, positions nearby each of the networked devices 114, and/or positions where the user 302 is considering placing a networked device and/or otherwise desires to be informed regarding the network strength data at such positions. The network access device 110 may similarly be configured to report signal strength of its connections with various devices. The mapping device (e.g., user device 102) may be configured to perform such network strength tests (e.g., by initiating a network strength determination process) for various positions at predefined intervals, such as at set time intervals, after traveling a predetermined distance, and/or the like. It should be appreciated that such network strength tests may be initiated during traversal of the path 312 for mapping the one or more devices and/or objects, upon a subsequent traversal of the path 312, and/or at any other time along path 312 or an alternative path.

In this regard, the various devices described herein enable generation of data that accurately represents the premises 300, such as an augmented reality environment that includes data objects associated with each of the interference objects, networked devices, and/or network access devices in the premises, and/or an environment plot that similarly represents the premises together with the interference objects, networked devices, and/or network access devices therein. The devices, for example via the mapping device (e.g., user device 102, networked devices 114a, 114b, ..., and/or network access device 110), may enable generation of such data comprising and/or associated with network strength data at various positions in the premises 300. The generated augmented reality environment and/or environment plot may be further processed and/or utilized in any of a myriad of actions with respect to improving the overall network quality associated with the one or more network access devices (e.g., improving the average network strength data across all tested positions and/or all positions at which networked devices are located), improving the network quality associated with specific positions, positioning devices in the premises 300, and/or the like. Conclusions, recommendations, data, analysis, annotations, and other functions facilitated by the aforementioned data capture and/or analysis may then be rendered back to the user as part of the augmented reality interface or via separate communication. Additionally or alternatively, such data may similarly be utilized to enable provision of device protection programs and/or enable servicing of any of the devices in the premises 300, as described herein.

In some embodiments, the environment plot is mapped in two-dimensions. In this regard, the location of any object within the environment irrespective of height may be determinable from the environment plot. In some other embodiments, some or all of the environment plot is mapped in three-dimensions. In this regard, the location of any object mapped with a three-dimensional position may be determined in all dimensions via the environment plot. For example, in some embodiments, the positions of corner data objects and/or boundaries of the environment plot may be mapped in two-dimensions and presumed infinite height, while positions corresponding to networked device(s) are mapped in three-dimensions to account for the z-coordinate (or height) of where the networked device(s) is/are positioned. In this regard, device(s) placed at various heights within a real-world environment may be mapped accordingly, and the height of these mapped location(s) may be considered in subsequent processing action(s) (e.g., to determine network strength, recommended changes, and/or the like as described herein).

It should be appreciated that by mapping an accurate representation of the premises 300 in an improved manner to conventional devices, and in a manner that is impossible to be performed merely by a human, the apparatus 200 provides several improvements to the field of network analytics. Additionally, by utilizing the augmented reality environment and augmented reality interfaces described herein, the apparatus 200 provides such improvements in a manner that is user friendly and does not require significant technical knowledge by the end customer to utilize efficiently, effectively, and/or accurately, and reduces the level of knowledge and/or time investment conventionally required to utilize existing implementations.

### Example Processing Using Augmented Reality

In at least one example embodiment, one or more augmented reality interface(s) is/are provided to enable a user to view, add, edit, or otherwise interact with elements of an augmented reality environment that augments the real-world imagery representing the premises. In this regard, each augmented reality interface may include representations of real-world imagery embodying the user's premises together with one or more representations of virtual objects, interface elements, and/or the like, associated with an augmented reality environment. The real-world imagery and/or corresponding virtual objects from the augmented reality environments may update as the user repositions, traverses with, and/or otherwise manipulates a user device, for example a user device 102 embodied by the apparatus 200, during mapping. For example, the user may position the user device 102 at a certain position in the premises, which corresponds to a particular position in the augmented reality environment, and orient the user device 102 in at a particular angle (e.g., X, Y, and Z rotation values) such that a particular object or device is within the field of view of a camera circuitry associated with the user device 102. In this manner, the augmented reality system may track the field of view of the camera circuitry, the corresponding location within the augmented reality environment, and display and track both real-world imagery and virtual imagery overlaid with each other (e.g., rendered to the user via a user device display). Additionally or alternatively, each of the one or more augmented reality interface(s) may have any number of static interface elements not associated with the augmented reality environment, such as one or more buttons, text fields, labels, and/or the like, which are not associated with any position in the augmented reality environment. In this regard, the static interface elements may be positioned based on predetermined interface coordinates and/or interface settings relative to the surface of the display/interface that are not altered by the manipulation, repositioning, reorienting, and/or other movement associated with the user device 102 relative to the premises. Additionally or alternatively still, in some embodiments, the augmented reality interface is configured to receive user input in response to a user performed gesture, voice command, general interaction with the augmented reality interface (e.g., a user engagement such as a tap or click anywhere in the interface as opposed to on a particular interface element).

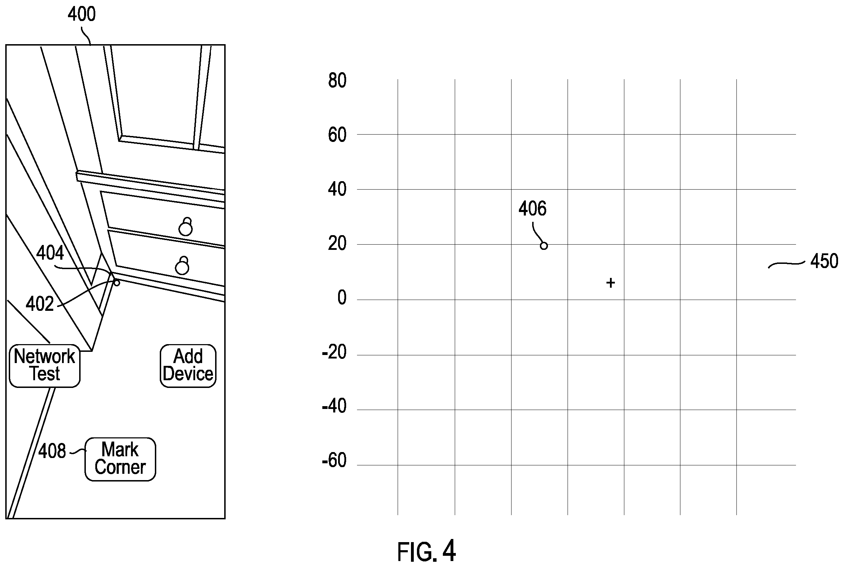

FIG. 4 illustrates an example augmented reality interface (left) and an example environment plot visualization (right), in accordance with at least one example embodiment of the present disclosure. For example, as illustrated, FIG. 4 depicts a first augmented reality interface 400, which may be rendered to a user device 102, for example embodied by the apparatus 200, during a mapping of a particular premises, such as the premises 300 as depicted and described above with respect to FIG. 3. Further, FIG. 4 depicts an example environment plot visualization 450. The environment plot visualization 450 provides a visualization of an environment plot that may be generated as the user performs various mapping operations as described herein, for example during mapping of the premises depicted in the first augmented reality interface 400. It should be appreciated that, in some embodiments, the augmented reality interface 400 is rendered to a display of the user device 102 during mapping, and data representing the environment plot represented by the environment plot visualization 450 may be maintained by one or more apparatus(es) 200 and/or an associated server, for example an AR processing server 104 as described above with respect to FIG. 4. In some such embodiments, the environment plot visualization 450 may never be rendered to any display, and is merely embodied by a data object maintained by one or more apparatus(es) 200, such as an AR processing server 104, which data may be used to facilitate and/or maintain the remaining systems, such as the augmented reality environment. In other embodiments, apparatus(es) 200 are configured to enable rendering of the environment plot visualization 450 to a display of the user device 102, for example simultaneously with the augmented reality interface 400 and/or upon access of a second user interface comprising only the environment plot visualization 450. Additionally or alternatively, in some embodiments, AR processing server 104 is configured to enable rendering of the environment plot visualization 450 to a display of the AR processing server 104. It should be appreciated that as data is mapped using the user device 102 (e.g., to map positions of a corner, object, device, and/or the like), the environment plot generated and/or otherwise maintained by apparatus(es) 200 may be updated, and the corresponding environment plot visualization 450 may similarly be newly generated and/or otherwise updated to reflect the newly mapped data. For illustrative and descripted purposes, the environment plot visualization 450 is updated as data is mapped as described herein with respect to FIGS. 4-9 to provide a human comprehensible visualization of generation of an updated environment plot as such data is mapped.

In some embodiments, before beginning mapping, apparatus(es) 200 (e.g., embodied as the user device 102, AR processing server 104, and/or electronic support platform 106) are configured to initialize an augmented reality environment maintained by the apparatus(es) 200. In at least one example embodiment, the user utilizes the user device 102to initialize the augmented reality environment by "scanning" a flat surface in the premises. For example, the user device 102 may be positioned such that the camera circuitry may be oriented towards the flat surface, and subsequently rotated along one or more axes to capture the length of the flat surface. In this regard, apparatus(es) 200 may identify the flat surface based on the captured image data, such as by processing the captured image data to identify the flat surface and corresponding edges (e.g., using one or more edge detection methodologies known in the art) as the camera circuitry is rotated to capture the length of the flat surface. The apparatus(es) 200 (e.g., user device 102 and/or a connected server) may additionally or alternative perform one or more interpolations and/or estimations while initializing the augmented reality environment, for example to complete initialization of the augmented reality environment in a circumstance where at least a portion of the flat surface is obscured in the field of view of the camera circuitry by an object, device, and/or the like. The augmented reality environment may be initialized with respect to a particular origin position, for example such that the origin position embodies the position where the user device 102 was positioned when initiating initialization of the augmented reality environment. In this regard, as the user device 102 is traversed throughout the premises (and similarly, the corresponding augmented reality environment), the position of the user device 102 is determinable based on the traversal of the user device 102 from the origin position. The traversal of the user device 102 may be tracked and/or determined using one or more sensors, location services circuitry, and/or the like.

As illustrated, the augmented reality interface 400 comprises a reticle 402. In some embodiments, the reticle 402 comprises a static interface element, for example positioned in the center of the augmented reality interface 400. The position of the reticle may be tracked via correlation of the real-world imagery shown on the user device with the static position of the reticle on the user device imagery. In other embodiments, the reticle 402 embodies a representation of a virtual reticle object in an augmented reality environment0. In circumstances where the reticle 402 is embodied as a representation of the virtual reticle object, the position of such a virtual reticle object may be maintained by the user device 102 or other user-facing display and associated computing system. In some such embodiments, the user may manipulate the user device 102 to reposition the reticle 402 by repositioning the corresponding virtual reticle object. For example, the user may translate the user device 102 (e.g., by navigating throughout the premises) to move the virtual reticle object, and/or adjust the orientation of the user device 102 to reposition the virtual reticle object. In at least one example context, to reposition the virtual reticle object in the augmented reality environment, the user may manipulate the user device 102 by rotating the device in a first direction along an axis to move the virtual reticle object closer to the position associated with the user device 102 (e.g., rotating the device such that the camera circuitry is angled more towards the flat surface and/or downwards from the user device 102), and rotating the user device 102 in a second direction along the axis to move the virtual reticle object further from the position associated with the user device 102 (e.g., rotating the device such that the camera circuitry is angled more towards directly away from the flat surface and/or upwards from the user device 102). In this regard, the user may utilize the user device 102 to reposition the reticle 402 at any desired position.

As illustrated, the reticle 402 is positioned near a corner of the premises, such as the corner 404. It should be appreciated that the location of the corner 404 in the premises corresponds to a particular corner position in the augmented reality environment. In this regard, the user may manipulate the user device 102 to indicate the existence of the corner (e.g., via clicking a static interface element 408), and thus generate the environment plot including data embodying a corner at the corner position corresponding to the corner 404. In some embodiments, upon receiving an indication of the existence of the corner, one or more of the apparatus(es) 200 (e.g., the user device 102 or a connected server or other device) determines a position associated the reticle 402 and generates the environment plot including data embodying the corner located at the position associated with the reticle 402. For example, in at least one example context, the apparatus(es) 200 are configured to identify the position of the reticle 402 by determining a position of a corresponding virtual reticle object in the associated augmented reality environment, and mapping that position (or the position with an offset determined based on a determined distance between the reticle and the corner based on image processing of the captured image data) as the corner position for the corner 404. As illustrated, for example, the environment plot is generated comprising the corner data object 406, which may include or be associated with one or more data object property values that indicate the data object represents a corner, and/or one or more data object property values that map the data object to the determined corner position (e.g., approximately (-9, 20) as depicted in the environment plot visualization 450, wherein the coordinates may represent any distance unit of measurement and the third, vertical axis may be optionally set at 0 for corner mapping along the floor).

The indication indicating existence of the corner in the captured camera data may be received in any of a myriad of ways. In some embodiments, the apparatus(es) 200 automatically receive the indication in response to processing the captured camera data and determining a corner exists in at least a portion of the camera data (e.g., automatic corner detection in one or more frames of the camera data). The apparatus(es) may determine the corner exists in at least a portion of the camera data by processing the one or more frames using any of a myriad of edge detection algorithms and/or other image processing algorithms. In other embodiments, the user may provide user input indicating existence of the corner in at least the portion of the camera data (e.g., the frame currently being captured and/or rendered to the augmented reality interface 400). For example, the user may engage, via the user device 102, a predetermined interface element of the augmented reality interface 400 for such a purpose (e.g., static interface element 408), input one or more gesture(s) via the user device 102, provide a voice or audio command, and/or provide a user engagement with the augmented reality interface 400 generally (e.g., by tapping or otherwise engaging with any portion of the augmented reality interface that includes the representation of the camera data). It should be appreciated that in some embodiments, other known implementations for receiving user input may be utilized to indicate existence of the corner in at least a portion of the camera data.

The user may continue with mapping the premises by navigating in the premises together with the user device 102. In this regard, the user device 102 may be configured to track its position with respect to the augmented reality environment as it is moved within the premises. In at least one example context, to continue mapping the boundaries of the premises, the user may navigate with the user device 102 to a new position where a second corner is located. For example, the user may navigate throughout the premises such that the next visited corner is connected to (e.g., by a wall) or otherwise proximate to the previously mapped corner 404.

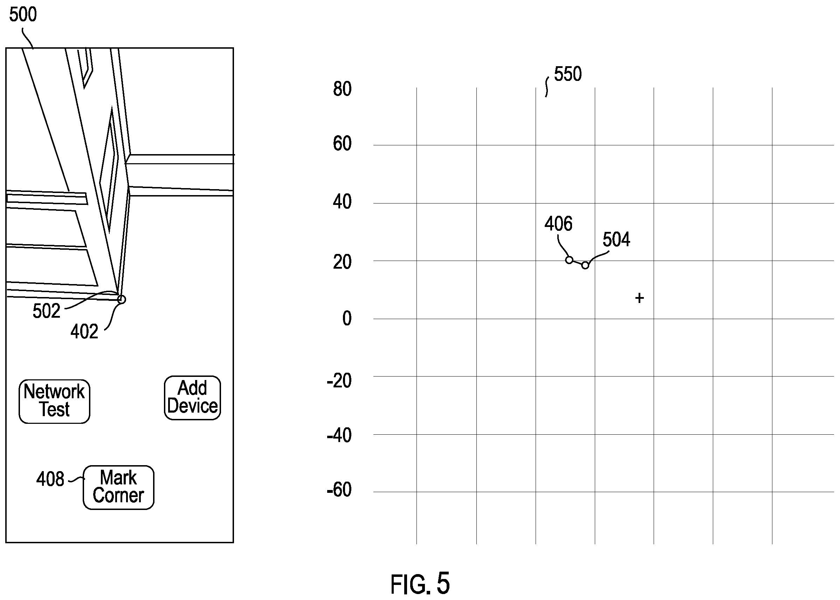

FIG. 5 illustrates another example augmented reality interface and another example environment plot visualization, in accordance with at least one example embodiment of the present disclosure. For example, as illustrated, FIG. 5 depicts a second augmented reality interface 500, which may be rendered to a user device 102, for example embodied by the apparatus 200, during a mapping of a particular premises, such as the premises 300 as depicted and described herein with respect to FIG. 3. Further, FIG. 5 depicts an example environment plot visualization 550. The environment plot visualization 550 provides a visualization of the environment plot visualization 450 updated to include data associated with a second corner, for example the corner 502 as described herein. It should be appreciated that the augmented reality interface 500 and/or environment plot visualization 550 may similarly be rendered and/or operate in a manner similar or identical to that described above with respect to the similarly named elements 400 and 450 of FIG. 4.

As illustrated, the augmented reality interface 500 includes camera data representing real-world imagery at a second position of the premises being mapped. As illustrated, the augmented reality interface 500 includes the reticle 402. In at least one example context where the reticle 402 corresponds to a virtual reticle object in the augmented reality environment, the virtual reticle object corresponding to the reticle 402 may have been repositioned in the augmented reality environment as the user device 102 was navigated throughout the premises (e.g., as the user walked from the first corner 404 to the second corner 502). In some such embodiments, the position of the virtual reticle object corresponding to the reticle 402 may be configured associated with the position and/or orientation of the user device 102 such that the virtual reticle object is always located at a position in the augmented reality environment that is within the field of view captured by the camera circuitry of or associated with the user device 102. For example, the vertical reticle object may be maintained at a predetermined location on the interface and/or display, such that the user moves the reticle by reorienting the camera. In some embodiments, instead of or in addition to the reticle, a user may interact with the interface (e.g., via a touch on a touchscreen display of the user device) to indicate a corner or other notable feature (e.g., networked device, etc.) regardless of the location on the interface that the imagery of the corner or other notable feature is shown.

As illustrated in the augmented reality interface 500, the reticle 402 is positioned near a second corner of the premises, such as the corner 502. It should be appreciated that the location of the corner 502 in the premises corresponds to a second particular corner position in the augmented reality environment. In a manner similar to that described with respect to the corner 404, the corner position associated with the second corner 502 may be determined based on the position of the user device 102 in the augmented reality environment (e.g., mapping device position data) alone or together with additional data such as an offset between the mapping device position data and a determined position associated with the reticle 402 (e.g., the hypothetical position of the reticle at its intersection point with the targeted feature, in this case corner 502). The offset may, for example, be determined based on one or more locations determined for the user device as well as based on one or more sensor inputs and/or calculations, such as an orientation of the user device (e.g., determined via accelerometer) and/or a range to the identified feature (e.g., via feature identification, such as a known fiducial, Lidar, binocular triangulation using two camera circuitries or multiple images of the same location, and/or any other range detection process). In the various embodiments disclosed herein, the offset may include distance, vertical and/or rotational angle, and any other relevant data. In this regard, the user may manipulate the user device 102 to indicate the existence of the second corner in a second portion of the captured camera data (e.g., the portion rendered to the second augmented reality interface 500), and thus generate the environment plot including data embodying a second corner at the second corner position corresponding to the second corner 502. In some embodiments, upon receiving an indication of the existence of the second corner, one or more of the apparatus(es) 200 (e.g., embodied as the user device 102, AR processing server 104, and/or electronic support platform 106) determines an updated position associated the reticle 402 and generates the environment plot including data embodying the second corner located at the updated position associated with the reticle 402. For example, in at least one example context, apparatus(es) 200 may be configured to identify the updated position of the reticle 402 by determining an updated position of the corresponding virtual reticle object in the associated augmented reality environment, and mapping that updated position (or the position with an offset determined based on a determined distance between the reticle and the corner based on image processing of the captured image data) as the second corner position for the corner 502.

As illustrated, for example, the environment plot is generated comprising the second corner data object 504, as depicted in the environment plot visualization 550. The second corner data object 504 may include or be associated with one or more data object property values that indicate the second data object represents a corner, and/or one or more data object property values that map the second data object to the determined second corner position (e.g., approximately (-2.5, 19) as depicted in the updated environment plot visualization 550, wherein the coordinates may represent any distance unit of measurement). Additionally or alternatively, in some embodiments, the second corner data object 504 is associated with data connecting and/or otherwise linking the second corner data object 504 to one or more other data objects. For example, as depicted, the second corner data object 504 is connected to the first corner data object 406 via a line. In some embodiments, apparatus(es) 200 automatically connect subsequently generated and/or otherwise indicated corner data objects. In this regard, for example, the process may include storing one or more separate data object(s) indicating a connection between the first corner data object 406 and the second corner data object 504, and/or may store one or more data property values in or associated with the first corner data object 406 and/or one or more data property values in or associated with the second corner data object 504 indicating that the first corner data object 406 and second corner data object 504 are connected.

The second indication indicating existence of the second corner in the captured camera data may be received in a manner similar to that described herein with respect to the first corner 404. For example, in some embodiments, apparatus(es) 200 (e.g., embodied as the user device 102, AR processing server 104, and/or electronic support platform 106) automatically receive the indication in response to processing the captured camera data to determine the second corner 502 exists in at least a portion of the captured camera data. Alternatively or additionally, the user may provide user input indicating existence of the second corner 502 in the captured data.

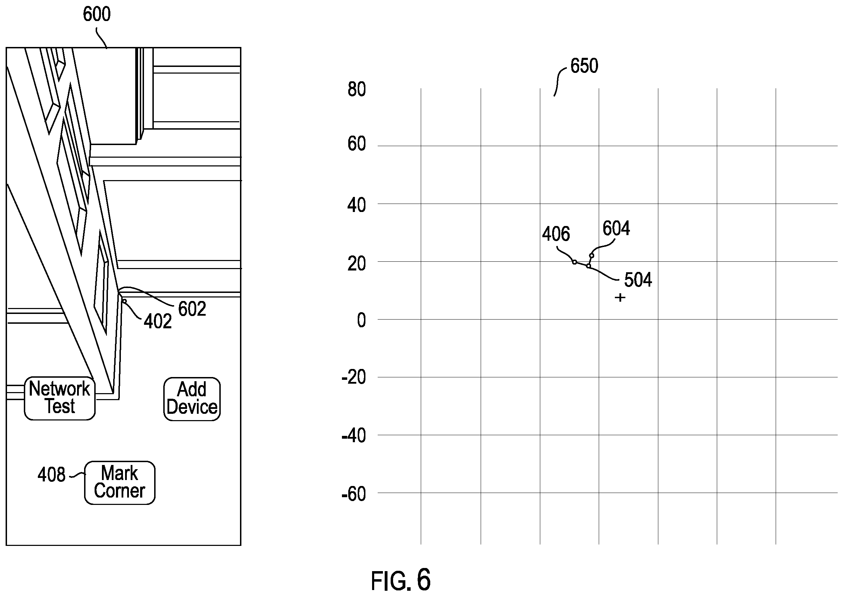

It should be appreciated that the corner mapping process described with respect to FIGS. 4 and 5 may be repeated for any number of corners. In this regard, FIG. 6 illustrates another example augmented reality interface and another example environment plot visualization, in accordance with at least one example embodiment of the present disclosure. For example, as illustrated, FIG. 6 depicts a third representation of an augmented reality interface 600, which may be rendered to a user device 102, for example embodied by the apparatus 200, during a mapping of a particular premises, such as the premises 300 as depicted and described herein with respect to FIG. 3. Further, FIG. 6 depicts another example environment plot visualization 650. The environment plot visualization 650 provides a visualization of the environment plot visualization 550 updated to include data associated with a third corner, for example the corner 602 as described herein. It should be appreciated that the augmented reality interface 600 and/or environment plot 650 may similarly be rendered and/or operate in a manner similar or identical to that described above with respect to the similarly named elements 500 and 550 of FIG. 5.

As illustrated, the augmented reality interface 600 includes camera data representing real-world imagery at a third position of the premises being mapped. As illustrated, the augmented reality interface 600 includes the reticle 402. In at least one example context where the reticle 402 corresponds to a virtual reticle object in the augmented reality environment, the virtual reticle object corresponding to the reticle 402 may have been repositioned in the augmented reality environment as the user device 102 was navigated to the position of the third corner 602. As illustrated in the augmented reality interface 600, the reticle 402 is positioned near a third corner of the premises, such as the corner 602. It should be appreciated that the location of the corner 602 in the premises corresponds to a third particular corner position in the augmented reality environment. It should further be appreciated that the corner position associated with the third corner 602 may be mapped in a manner similar to that described herein with respect to the first corner 404 and/or second corner 502.

As illustrated, for example, the environment plot is generated comprising the third corner data object 604, as depicted in the environment plot visualization 650. The third corner data object 604 may include or be associated with one or more data object property values that indicate the third data object represents a corner, and/or one or more data object property values that map the third data object to a determined third corner position (e.g., approximately (-1.5, 24)) as depicted in the updated environment plot visualization 650, wherein the coordinates may represent any distance unit of measurement). Additionally or alternatively, in some embodiments, the third corner data object 604 is associated with data connecting and/or otherwise linking the third corner data object 604 to one or more other data objects. For example, as depicted, the third corner data object 604 is connected to the second corner data object 504. In some such embodiments, apparatus(es) 200 automatically connect subsequently generated and/or otherwise indicated corner data objects, such that the apparatus(es) 200 store data connecting the second corner data object 504 with the subsequently mapped third corner data object 604. It should be appreciated in light of this disclosure that the connection between such data objects may be stored in any of the manners described above with respect to the connection between the second corner data object 504 and the first corner data object 406.

The third indication indicating existence of the third corner 602 in the captured camera data may be received in a manner similar to that described herein with respect to the first corner 404 and/or second corner 502. For example, in some embodiments, apparatus(es) 200 (e.g., embodied as the user device 102, AR processing server 104, and/or electronic support platform 106) automatically receive the indication in response to processing the captured camera data to determine the third corner 602 exists in at least a portion of the camera data. Alternatively or additionally, the user may provide user input indicating existence of the third corner 602 in the captured data (e.g., by selecting a "mark corner" button embodied by a static interface element 408 or by touching the screen at the location of the corner in some embodiments).

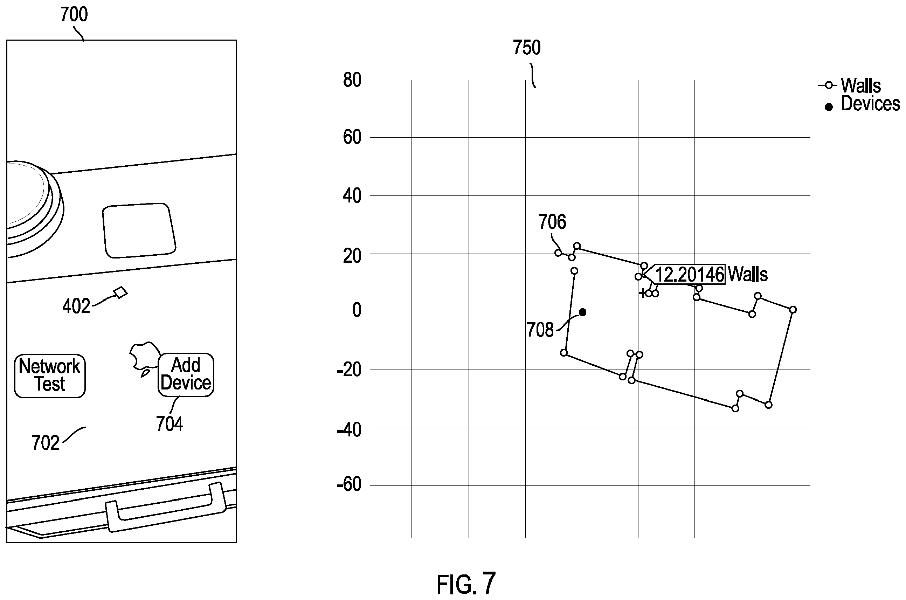

FIG. 7 illustrates another example augmented reality interface and another example environment plot visualization, in accordance with at least one example embodiment of the present disclosure. For example, as illustrated, FIG. 7 depicts an augmented reality interface 700, which may be rendered to a user device 102, for example embodied by the apparatus 200, during a mapping of a particular premises, such as the premises 300 as depicted and described herein with respect to FIG. 3. The augmented reality interface 700 as depicted is associated with performing a mapping operation associated with a networked device in the premises being mapped. Further, FIG. 7 depicts an example environment plot visualization 750. The environment plot visualization 750 provides a visualization of an environment plot upon completion of mapping all corners associated with the premises. For example, the environment plot visualization comprises a corner set 706 of the environment plot mapped to various corner positions, and associated with data that connects each corner data object with the subsequently mapped corner data object such that the corner set 706 forms and/or otherwise represents the boundaries of the premises being mapped. In at least one context, for example as depicted, the user may utilize the user device 102 to map one or more networked devices associated with the premises.

In some embodiments, the user device may comprise a plurality of modes signifying the particular mapping operation underway. For example, a "boundary" mode may comprise mapping and connecting the corners of the premises. A "device recognition" mode may then be used to map the network access devices and/or networked devices nearby. An "interferer mode" may be used to map non-boundary objects that are not part of the network. In some embodiments, the augmented reality interface may comprise selectable options that allow various features (e.g., boundary, network, and interferer features, or any other relevant features) to be selectively mapped based on a selection of the relevant UI option (e.g., the depicted static interface elements) by the user. In some embodiments, the relevant UI options may be presented and/or removed depending on a selected mode and/or a completion of one or more mapping activities (e.g., completion of a full boundary, such as by reconnecting with the first-mapped corner, may remove the "mark corner" option from the augmented reality interface).

As illustrated, the augmented reality interface 700 includes camera data at another position in the premises being mapped, such as a position where a networked device 702 is located. In this regard, the user may utilize the user device 102 to map the networked device 702 to a networked device position and generate the environment plot including networked device position data representing the networked device position associated with the networked device 702.

The user device 102 may be utilized to map particular networked device to particular networked device position data in a similar manner to that described herein with respect to mapping a corner to a corner position. For example, in one or more embodiments, the user positions the user device 102 such that the reticle 402 is rendered at or near the position associated with the networked device 702 (e.g., such that the reticle is rendered on the networked device). It should be appreciated that the reticle 402 may be repositioned in any of the manners described herein with respect to object and/or device mapping. Moreover, in some embodiments, a combination of ranging, orientation, and position information from the user device may be used to map the position of the respective networked devices 702, and any other mapped device, object, or other feature, in three dimensions.

In some embodiments, apparatus(es) 200 (e.g., embodied as the user device 102, AR processing server 104, and/or electronic support platform 106) receive an indication of existence of a networked device in at least a portion of the captured camera data. For example, the apparatus(es) 200 may receive an indication of the existence of a networked device in a particular frame of the captured camera data (e.g., the frame being captured and/or rendered to the augmented reality interface 700). In some embodiments, the apparatus(es) 200 receives the indication of existence of the networked device in the camera data automatically. For example, in some contexts, the apparatus(es) 200 are configured to process the captured camera data to identify the existence of the networked device 702 within at least a portion of the camera data (e.g., within a frame of the captured camera data). In some embodiments, a user may place physical identifiers on real-world devices to be identified and incorporated into the augmented reality environment, which identifiers may be scanned and interpreted by the system via the camera circuitry and processing circuitry to detect the position and/or identity of the device. In one or more embodiments, the apparatus(es) 200 are configured to utilize one or more object detection models specifically configured to detect networked device(s) of one or more networked device types from the captured camera data. As illustrated for example, the apparatus(es) 200 may utilize one or more object detection models configured to detect a laptop device as depicted, either alone or in conjunction with configuration to detect other networked device types. For example, the model may include a computational neural network trained to classify devices by type (e.g., laptop, mobile device, TV, smart appliance, etc.) and/or by specific make and/or model. In some embodiments, a user may manually enter information about a device, feature, or other object added via the mapping process. In this regard, it will be appreciated that networked device(s) may be identified and/or classified manually, automatically, visually, via network communication with a network access point, and/or the like. In this regard, device(s) may be identified manually, in response to image processing, based on processing of network data that indicates existence of the device on a network, and/or any combination thereof.

In some embodiments, apparatus(es) 200 (e.g., embodied as the user device 102, AR processing server 104, and/or electronic support platform 106) receive the indication of the existence of the networked device 702 in response to user engagement with the user device 102 and/or any associated apparatus. For example, in at least some example embodiments, the apparatus(es) 200 receive the indication of the existence and/or identity of the networked device 702 in response to user engagement with the augmented reality interface 700 and/or an interface element included therein via the user device 102. As illustrated, the augmented reality interface 700 comprises a user interface element 704 configured for user engagement. In this regard, the user may engage the user interface element 704 (e.g., by tapping, touching, gesturing, clicking, and/or otherwise interacting with the user interface element 704) to provide such user engagement, and the apparatus(es) 200 may receive the indication in response. The apparatus(es) 200 may map the networked device 702 with particular networked device position data representing the position associated with the networked device 702.

In some embodiments, the apparatus(es) 200 generate the environment plot including data representing each networked device indicated as within the premises. For example, in some embodiments, the environment plot is generated to include a data object or equivalent information for each networked device indicated in the premises. In some contexts, the data object may include one or more data properties that each represent aspects of the networked device (e.g., a networked device type, networked device identification information, a user-inputted device name, and/or the like). In some embodiments, the data object associated with a networked device is generated and/or otherwise provided in the environment plot including a value for one or more data properties of the data object.

As illustrated, the environment plot is generated including the networked device data object 708. The networked device data object 708 is positioned at a particular network device position associated with the environment mapped by the corner set 706 of the environment plot. For example, the environment plot visualization 750 includes the networked device data object positioned at approximately (0.5, -0.5) as depicted in the environment plot visualization 750, wherein the coordinates may represent any distance unit of measurement). In this regard, the environment mapped by the corner set 706 of the environment plot may be generated such that the networked device data object 708 is represented at a networked device position in the environment mapped by the corner set 706 of the environment plot that accurately corresponds to the position of the networked device for 702 in the premises, such as the premises 300. It should be appreciated that the environment plot may be generated with updates comprising a networked device data object for each networked device indicated as existing within the premises being mapped. For example, the environment plot may be updated as each subsequent indication associated with a networked device is received.

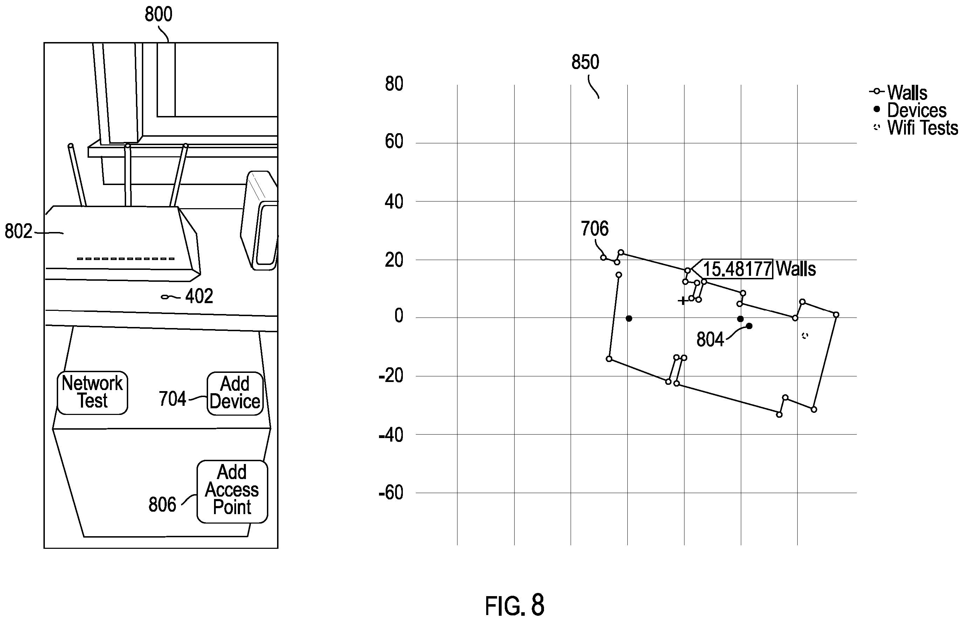

In some embodiments, an environment plot is generated including data representing other devices in a premises, including network access device(s) in the premises being mapped. FIG. 8 illustrates another example augmented reality interface and another example environment plot visualization, in accordance with at least one example embodiment of the present disclosure. As illustrated, FIG. 8 depicts an augmented reality interface 800, which may be rendered to a user device 102, for example embodied by the apparatus 200, during a mapping of a particular premises, such as the premises 300 as depicted and described herein with respect to FIG. 3. The requested augmented reality interface 800 as depicted is associated with performing a mapping operation associated with a network access device in the premises being mapped to add a representation of the network access device to the augmented reality environment. Further, FIG. 8 depicts an example environment plot visualization 850. The environment plot visualization 850 provides a visualization of an environment plot upon mapping a network access device associated with a premises. For example, the environment plot visualization 850 map be provided upon completion of mapping all corners associated with the premises or may be rendered on an ongoing basis to allow the user to track the mapping operation. As illustrated, the environment plot visualization 850 comprises the corner set 706 as mapped and described above with respect to FIG. 7 herein. In at least one example context, for example as depicted, the user may utilize the user device 102 to map one or more network access devices associated with (e.g., within) the premises mapped.

As illustrated, the augmented reality interface 800 includes camera data taken at another position in the premises being mapped. For example, the camera data represents a position where a network access device 802 is located. In this regard, the user may utilize the user device 102 to map the network access device 802 to a network access device position, and generate the environment plot visualized in the environment plot visualization 850 including network access device position data representing the network access device position data associated with the network access device 802.

In a manner similar to that described above with respect to FIG. 7, the user device 102 may be utilized to map the particular network access device to particular network access device position data. For example, in one or more embodiments, the user positions the user device 102 such that the reticle 402 is rendered and oriented at or near the position associated with the network access device 802 (e.g., such that the reticle is rendered on the network access device). It should be appreciated that the reticle 402 may be utilized and/or repositioned in any of the manners described herein with respect to object and/or device mapping. In some embodiments, apparatus(es) 200 (e.g., embodied as the user device 102, AR processing server 104, and/or electronic support platform 106) are configured to automatically determine the position of the network access device 802, for example based on an offset from the current mapping device position data associated with the user device 102 and one or more other data inputs, such as a WiFi signal strength.

The apparatus(es) 200 may receive an indication of the network access device in a manner similar to that described herein with respect to an object, networked device, or any other feature. In some embodiments, the apparatus(es) 200 receives an indication of existence of the network access device in at least a portion of the captured camera data. For example, the apparatus(es) 200 may receive an indication of the existence of a network access device in a particular frame of the captured camera data (e.g., the frame being captured and/or rendered to the augmented reality interface 800). In some embodiments, the apparatus(s) 200 receive the indication of the existence of the network access device in the camera data automatically. For example, in some contexts, the apparatus(es) 200 are configured to process the captured camera data to identify the existence of the network access device 802 within at least a portion of the camera data (e.g., within a frame of the captured camera data). In one or more embodiments, the apparatus(es) 200 are configured to utilize one or more object detection models, such as those described herein, specifically configured to detect network access device(s) of one or more network access device types (e.g., a router, a modem, a signal relay and/or signal extender, and/or the like) from the captured camera data. As illustrated for example, the apparatus(es) 200 may utilize one or more object detection models configured to detect a router device as depicted, either alone or in conjunction with configuration to detect other network access device types. In some embodiments, a user may place physical identifiers on real-world devices to be identified and incorporated into the augmented reality environment, which identifiers may be scanned and interpreted by the system via the camera circuitry and processing circuitry to detect the position and/or identity of the device.

In some embodiments, apparatus(es) 200 (e.g., embodied as the user device 102, AR processing server 104, and/or electronic support platform 106) receive the indication of the existence of the network access device 802 and/or the identity of the network access device 802 in response to user engagement with the user device 102. In some embodiments, the apparatus(es) 200 receive the indication of the existence of the network access device 802 in response to user engagement with the augmented reality interface 800 and/or an interface element included therein. As illustrated, the augmented reality interface 800 comprises the user interface element 704 configured for user engagement. In this regard, the user may similarly engage the interface element 704 to indicate existence of a network access device or a networked device. In other embodiments, the augmented reality interface 800 includes an additional and/or alternative interface element specifically configured to indicate existence of a network access device, such as the interface element 806. In this regard, the user may utilize the user device 102 to interact with the interface element 806 to specifically indicate existence of a network access device and/or the identity of the network access device associated with network access device position data representing the position associated with the network access device 802, as depicted.

In some embodiments, apparatus(es) 200 (e.g., embodied as the user device 102, AR processing server 104, and/or electronic support platform 106) generate the environment plot including data representing each network access device indicated as within the premises. For example, in some embodiments, the environment plot is generated to include a data object or equivalent information for each network access device indicated as within the premises. In some contexts, the data object may include one or more data properties that each represent aspects of the network access device (e.g., a network access device type, network access device identification information, a user-inputted device name, and/or the like). In some embodiments, the data object associated with a network access device is generated and/or otherwise provided in the environment plot including a value for one or more data properties of the data object.

As illustrated, the environment plot is generated including the network access device data object 804. The network access device data object 804 is positioned based on network access device position data associated with the environment plot depicted by the environment plot visualization 850. For example, the environment plot visualization 850 includes the network access device data object position at approximately (45, -5) as depicted in the environment plot visualization 850, wherein the coordinates may represent any distance unit of measurement. In this regard, the environment plot represented by the environment plot visualization 850 may be generated such that the network access device 802 is represented at a network access device position in the environment plot that accurately corresponds to the position of the network access device 802 in the premises, such as the premises 300. It should be that the environment plot may be generated with updates comprising a network access device data object for each network access device indicated as existing within the premises being mapped. For example, the environment plot may be updated as each subsequent indication associated with a network access device is received. In some embodiments, as depicted in FIG. 8, data objects may be collected representing devices and/or network signal strength data, which may be identified via different indicia (e.g., different color, shape, etc.) such that both signal strength data and physical object data can be represented. Multiple different types of indicia may be used for the various objects discussed herein. A modified graphic may be used for signal strength measurements at the location of a particular device (e.g., multi-color, graphic, or other visual distinction).

The user may continue to utilize the camera circuitry 212 to capture any number of devices. For example, the user may capture camera data and receive indications associated with any number of networked devices, and/or indications associated with any number of network access devices. In this regard, the user may utilize the apparatus(es) 200 to generate an environment plot that accurately maps the boundaries of a premises, all devices in the premises, and/or all objects in the premises.

In some embodiments, apparatus(es) 200 process (e.g., embodied as the user device 102, AR processing server 104, and/or electronic support platform 106) captured image data to identify and/or onboard devices (e.g., networked devices, network access device(s), offline devices, and/or the like) onto a particular application and/or service. For example, in some embodiments, the apparatus(es) 200 utilize one or more object detection model(s) to detect particular device(s) within the environment and initiate an onboarding process to associate data identifying such detected device(s). For example, in some embodiments, apparatus(es) 200 maintain and/or access a software application that enables a user to store indicators of each device within one or more environments, and/or perform any number of electronically-driven process(es) associated with such device(s). The user may onboard a new device to enable the user to utilize the software application (e.g., the software application providing the augmented reality processing functionality described herein and/or a separate software application) to configure such device(s), connect to an electronic support platform to request technical support associated with onboarded device(s), initiate device protection programs associated with such detected device(s), and/or the like. During onboarding, a detected device may be associated with a user account corresponding to the user device 102, and/or for which an authenticated session was initiated via the user device 102 (e.g., via logging in and/or otherwise authenticating a particular user account). Additionally or alternatively, in some embodiments, the user device 102 accesses a network with which the user device 102 is connected to detect a particular device that matches the device type detected via image processing, and may store to one or more software application(s) particular configuration, identification, and/or other data associated with the specific device interrogated via the network. In some embodiments, the user device 102 and/or apparatus 200 provides access to the detected or otherwise identified device(s), for example to enable reconfiguring of the device(s) and/or the like. The computing device(s) may be accessed via detected network data, manually-inputted device(s), and/or the like.

In some embodiments, apparatus(es) 200 (e.g., embodied as the user device 102, AR processing server 104, and/or electronic support platform 106) process captured image data to detect, decode, and/or process machine readable symbologies within the environment. For example, the process may detect and decode machine readable symbologies on or otherwise associated with particular devices to onboard such devices within one or more software application(s). Non-limiting examples of machine readable symbologies includes barcodes, QR codes, image recognition (e.g., via trained model), and the like, that are detectable from a captured image and subsequently decodable. In some embodiments, the apparatus(es) 200 process each frame of captured image data to detect machine readable symbologies within said captured image data. The machine readable symbologies may include device identifier(s), device type(s), and/or other data associated with devices (e.g., networked devices and/or network access devices) within the environment. Upon detecting a machine-readable symbology, in some embodiments the apparatus(es) 200 decode the machine-readable symbology and utilizes the decoded data to onboard the device as described herein. For example, in some embodiments, the apparatus(es) 200 store data representing the detected device via one or more software application(s) (e.g., the device type, a particular device identifier, and/or the like), associated with a particular user account, and/or the like. In this regard, the user may utilize such software application(s) to configure such device(s), connect to an electronic support platform to request technical support associated with onboarded device(s), initiate device protection programs associated with such detected device(s), and/or otherwise perform one or more process(es) associated with the device(s) once such device(s) have been onboarded. In some embodiments, the onboarding process may comprise automatically recognizing the device and setting up the device's connection to the network access device. In some embodiments, the onboarding process may be used to restore network connections of previously recognized devices. For example, when a new network access device is added, all devices on an old network access device may automatically be recognized and connected to the new network. Similarly, when setting up a network in a new premises (e.g., after moving), devices that had previously been connected to a network access device of a previous premises may be onboarded into the new augmented reality environment of the new premises.

In some embodiments, apparatus(es) 200 (e.g., embodied as the user device 102, AR processing server 104, and/or electronic support platform 106) may connect or attempt to connect electronically with one or more devices detected in captured image data from the camera circuitry. In some embodiments, the user device 102 may attempt a connection over one or more known network access devices to determine if the one or more devices in the captured image data are already connected to the network (e.g., communications network 112 shown in FIG. 1). In an instance in which the one or more devices is not connected to the network, the process may initiate onboarding of the captured device(s). If onboarding fails, the one or more detected devices may be flagged as inoperable or nonresponsive.

In some embodiments, the apparatus(es) 200 may identify or attempt to identify one or more devices on a network (e.g., communications network 112 shown in FIG. 1) in captured image data from the camera circuitry. In such embodiments, devices from multiple premises or associated with multiple users / accounts may exist on the same network or may otherwise be in electronic communication. In some such embodiments, the process may exclude devices not detected via visual confirmation with the camera circuitry. For example, an office or apartment complex sharing a common WiFi network may include multiple devices on the network are not within the control of the user or that the user otherwise does not wish to be included in the premises mapping and/or analyses. In some embodiments, the process may then include a visual onboarding and/or verification step which requires the user to capture image data of each device to be included in the augmented reality environment, and the system may be configured to exclude any other detected devices that are not visually captured. In some embodiments, the verification may be a security process for preventing unwanted interference between users and/or premises. In some embodiments, the user device 102, the AR processing server 104, the electronic support platform 106, and/or any other associated apparatus may control access to the network access device (e.g., a WiFi security protocol). In such embodiments, visual verification may be required prior to permitting a device to connect to the network access device. For example, the visual verification may operate similar to a WiFi Protected Setup (WPS) system. In some embodiments, the verification may be an option selected by a user and/or provider of the augmented reality system. In some embodiments, the user device 102, the AR processing server 104, the electronic support platform 106, and/or any other associated apparatus may passively discover new devices via camera and/or network monitoring. In some embodiment, the process may comprise receiving one or more signals from one or more devices and triangulating the position of the one or more devices via the signal data. For example, Bluetooth signals may be received from multiple sources and/or at multiple receiving devices (e.g., the user device, a networked device, and/or an associated apparatus) to triangulate the position of the one or more devices, which may corroborate, discriminate between, and/or otherwise help determine the identity of the one or more devices in the camera data. Similarly, WiFi signals or other detectable transmissions may be used for triangulation.

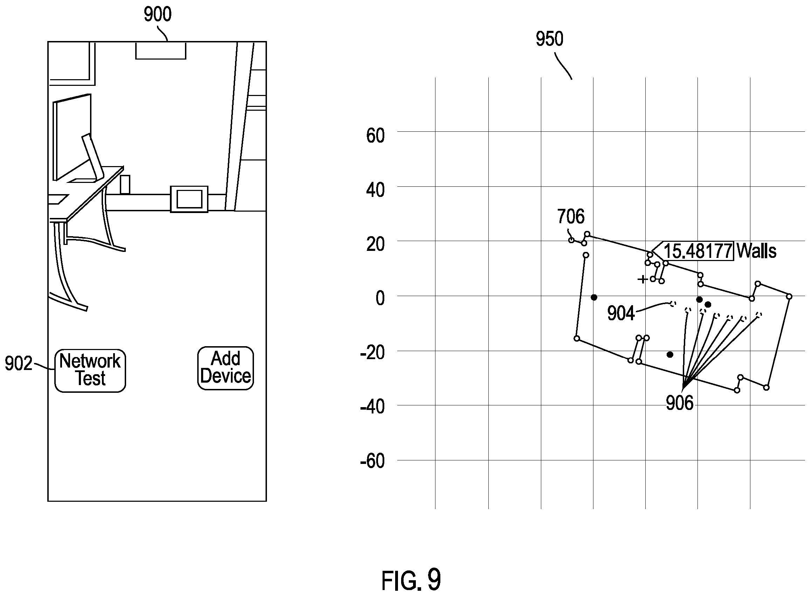

FIG. 9 illustrates another example augmented reality interface and another example environment plot visualization, in accordance with at least one example embodiment of the present disclosure. As illustrated, FIG. 9 depicts an augmented reality interface 900, which may be rendered to a user device 102, for example embodied by the apparatus 200, during a mapping of a particular premises, such as the premises 300 as depicted and described herein with respect to FIG. 3. The augmented reality interface 900 as depicted is associated with performing a mapping operation associated with a networked device in the premises being mapped. Further, FIG. 9 depicts an example environment plot visualization 950. The environment plot visualization 950 provides a visualization of an environment plot upon completion of mapping all corners associated with the premises. For example, the environment plot visualization comprises a corner set 706 mapped to various corner positions, and associated with data that connects each corner data object with the subsequently mapped corner data object such that the corner set 706 forms and/or otherwise represents the boundaries of the premises being mapped. In at least one context, for example as depicted, the user may utilize the user device 102 to map one or more networked devices associated with the premises.

As illustrated, the environment plot visualization 950 includes data objects associated with a plurality of devices mapped to positions in the depicted environment plot. In this regard, the environment plot as depicted in the environment plot visualization 950 may accurately represent the boundaries of a premises together with position data for all devices within the premises. The user may subsequently utilize the apparatus(es) 200 (e.g., embodied as the user device 102, AR processing server 104, and/or electronic support platform 106) to perform any of a myriad of additional and/or alternative actions upon completing mapping of the premises boundaries and/or devices therein. Additionally or alternatively, in other embodiments, the user may utilize the apparatus(es) 200 to perform one or more additional and/or alternative actions before completing mapping of the premises boundaries and/or the devices therein.

For example, in one or more embodiments, the user device 102 and associated apparatus(es) are configured to enable mapping of network device strength data at one or more positions in the premises. In some embodiments, the apparatus(es) 200 are enabled to perform one or more network strength determination processes at a position to be mapped together with resulting network device strength data. For example, the user may navigate through the premises to be mapped with the user device 102 and utilize the user device 102 to determine network strength data at one or more positions while during such navigation. In this regard, the environment plot may be generated comprising such network strength data mapped to each of the tested positions. In some embodiments, as described herein, one or more of the networked devices and/or network access device(s) may detect and/or report signal strength data for their respective connections to each other and/or to a network access device.

As illustrated, for example, FIG. 9 depicts the environment plot visualization 950 including data objects embodying network strength data tested and determined at various positions in the premises represented by the corresponding environment plot. For example, the user device 102 may render the augmented reality interface 900 during navigation throughout the premises. The user device 102 may subsequently initiate a network strength determination process at a particular position during such navigation. In some embodiments, for example as illustrated, the user device 102 initiates a network strength determination process in response to user engagement with the augmented reality interface 900 and/or a sub-interface element thereof. In one example context, the user may engage (e.g., by clicking, tapping, gesturing, inputting a voice command, and/or the like) to the user interface element 902 to initiate the network strength determination process. The network strength determination process may be utilized to determine network strength data to be mapped to position data identified by the user device 102 (e.g., at a location of the actual device, which may detect the network signal strength with one or more receivers, such as those included in the communications circuitry 208 shown in FIG. 2). For example, in at least one example embodiment, the user device 102 determines mapping device position data representing a current position of the user device 102 in the premises being mapped. In this regard, the network strength data determined via the network strength determination process may be mapped to the mapping device position data representing the current position of the user device 102. For example, in some embodiments, the apparatus(es) 200 (e.g., embodied as the user device 102, AR processing server 104, and/or electronic support platform 106) generate the environment plot including a data object embodying the network strength data and associated with the position data to which the network strength data is mapped. As illustrated in the environment plot visualization 950, the environment plot represented by the environment plot visualization 950 is generated including the data object 904, which may correspond to the position depicted in the augmented reality interface 900.

As described herein, the apparatus(es) 200 (e.g., embodied as the user device 102, AR processing server 104, and/or electronic support platform 106) may be utilized to generate the network strength data for any number of positions in the premises being mapped. For example, as illustrated, the environment plot represented by the environment plot visualization 950 includes a data object 904 embodying network strength data for a position associated with the augmented reality interface 900 (e.g., associated with a current mapping device position where the user device 102 is located for the captured frame) and a plurality of data objects 906 that each embody previously determined network strength data for various positions in the premises being mapped as the user traverses the premises from right to left relative to the orientation of FIG. 9. Any number of data objects may be mapped embodying network strength data at any number of positions. It should be appreciated, as described, the user device 102 may generate the data object at each of these positions in response to user engagement with the user device 102, and/or automatically. For example, in some embodiments, the user device 102 is configured to automatically perform the network strength determination process at a predetermined interval of time (e.g., with 1 second between performing each test of the network strength data). In other embodiments, the user device 102 is configured to automatically perform the network strength determination process after the user device 102 has navigated a predetermined distance (e.g., every 3 feet from the previous position where such a test was performed). In some such embodiments where the user device 102 automatically initiates one or more network strength determination process(es), the user device 102 may additionally be configured to enable additional network strength determination process(es) to be initiated via user engagement. In some embodiments, a virtual indicator may also be rendered in the augmented reality environment to show the user the location and/or strength of previous measurements.

The mapped data and/or environment plot may be processed for any of a myriad of purposes, as described herein. For example, in some embodiments, data object(s) associated with network strength data, devices, objects, and/or the environment plot may be processed for any of a myriad of network analytics purposes, including to visualize network strength at various positions in a premises, determine diminished network strength positions in the premises, generate data associated with positioning a new device in a premises, and/or generate data associated with repositioning existing device(s) and/or existing object(s) in the premises. Additionally or alternatively, in some embodiments, data object(s) associated with network strength data, devices, objects, and/or the environment plot may be processed to provide device protection program information and/or servicing associated with one or more devices located in the premises. Additionally or alternatively still, in some embodiments, data object(s) associated with network strength data, devices, objects, and/or the environment plot may be processed to provide functionality associated with environment naming, device grouping, and/or batch process initiating for grouped devices.

In some embodiments, during and/or after mapping the various data objects 906, the augmented reality interface 900 depicts renderable data that indicates the value and/or absolute or relative strength of the network strength data at each respective position. The absolute strength of the network strength data may embody a classification and/or category of the network strength data as defined into predefined ranges based at least in part on the value of the network strength data associated with a particular position in the environment. The relative strength of the network strength data may embody a classification and/or category of the network strength data as defined into determinable ranges defined based at least in part on the network strength data at the particular position and/or other network strength data for other positions in the environment. In this regard, the augmented reality interface 900 may include an overlay that visually indicates the network strength at each position, and/or the changes of network strength throughout the environment.

For example, during mapping and/or after mapping as described, the user device 102 may render the augmented reality interface 900 with renderable data overlaid onto captured image data (e.g., real-time camera data) that visually depicts a value and/or absolute or relative strength of the network strength at the position depicted in the real-time camera data. In some embodiments, the user device 102 or other associated apparatus detects a floor of the environment and overlays the renderable data at floor level (e.g., by coloring the floor based at least in part on the network strength data, depicting a wave representation representing a layer of "fog" along the floor layer, and/or the like). In some embodiments, augmented reality elements (e.g., arrows and/or other waypoints) are rendered within the captured image data at particular positions where such network strength data was determined as virtual objects. For example, such augmented reality elements may include a three-dimensional augmented reality element floating at the position associated with the network strength data, where the image is configured (e.g., to show a certain number of bars filled of the known Wi-Fi and/or cellular signal strength indicator image, a color, and/or other visual property) based at least in part on the network strength data at each position. It will be appreciated that the augmented reality interface may dynamically update as the user device 102 is traversed throughout the environment (e.g., while being carried by a user).

In some embodiments, the user device 102 outputs the network strength data within a static captured image. For example, in some embodiments, the user device 102 utilizes one or more components to capture image data object(s) within an environment. Additionally or alternatively, in some embodiments, the apparatus(es) 200 utilizes image recognition and/or location services circuitry to determine a position within the environment that is depicted in the captured image data object(s). The apparatus 200 (e.g., embodied as the user device 102, AR processing server 104, and/or electronic support platform 106) may then render onto a static image data object one or more image element(s) that are specially configured based at least in part on the network strength data at the represented position to indicate the network strength at said position to a user.

In some such embodiments, by mapping the network strength data at various positions in the premises being mapped, the user device 102 enables such network strength data to be known to the user. Additionally or alternatively, such mapping of network strength data to particular positions enables such data to be processed for purposes of enabling network analytics as compared to conventional implementations, such as to enable determining diminished network strength positions, improving of network strength data at one or more positions in the environment plot (or all positions overall), and/or otherwise enabling the apparatus(es) 200 to improve placements of current devices (e.g., networked devices and/or network access devices) and/or objects (e.g., interference objects) within the premises to effectuate a desired improvement in network quality. Additionally as compared to convention implementations, the use of the augmented reality for such purposes advantageously provides for such actions to be performed utilizing a user-friendly implementation while reducing the amount of additional processing required for mapping the positions associated with boundaries of the environment plot and/or the positions each data object to a position within the environment plot.

### Example Network-Centric Processing Methods of the Disclosure

Having described example systems, devices, apparatuses, and interfaces in accordance with the present disclosure, various processes in accordance with the present disclosure are further described herein. Each process described herein may include any number of operational blocks defining the process and/or a portion thereof. It should be appreciated that in some embodiments the various processes and/or sub-processes described herein may be combined in any manner, such that the embodiment is configured to perform each aspect of the various processes in combination, in parallel and/or serially. In some embodiments, at least one additional and/or at least one alternative operation is performed in one or more of the described processes, and/or at least one operation is removed from one or more of the described processes. Additionally, optional operations may be depicted in the processes utilizing dashed (or "broken") lines. In this regard, it should be appreciated that the processes described herein are examples only and the scope of the disclosure is not limited to the exact operations depicted and described, and the depicted and described operations should not limit the scope and spirit of the embodiments described herein and covered in the appended claims.

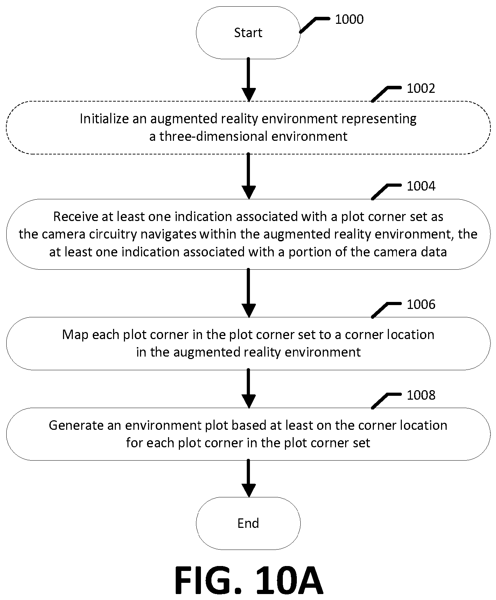

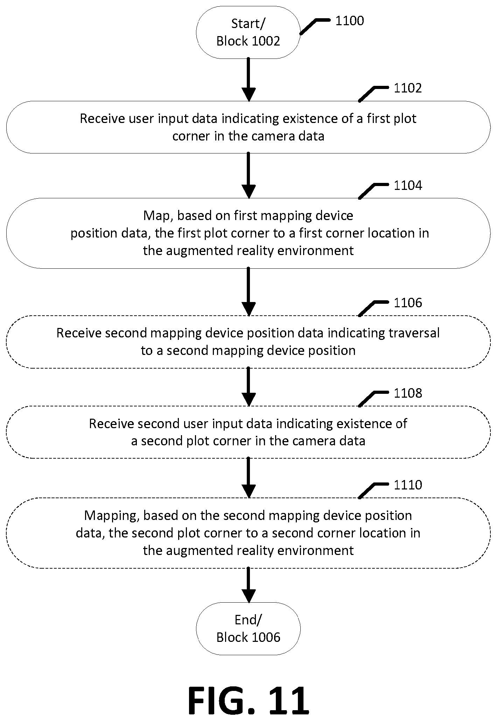

In some embodiments, one or more of the devices, apparatuses, and/or systems disclosed herein is configured to perform any number and/or combination of the processes described herein, whether alone or in combination, including but not limited to the embodiments discussed in FIGS. 10A, 10B, 11-14A, 14B, 15-18, 19A, 19B, 20-25, 26A, 26B, and/or 27. For example, in one example embodiment, one or more of the devices, apparatuses, and/or systems disclosed herein is configured to perform all or any subset combination of the processes described by FIGS. 10A and/or 10B, 16, 20, 23, and 27, and/or all or any subset combination of the processes and/or subprocesses associated therewith as described with respect to FIGS. 11, 12, 13, 14A and/or 14B, 15, 17, 18, 19A, 19B, 21, 22, 24, 25, 26A, and/or 26B. Any such processes, or portions of such processes, may be performed in accordance with the various individual embodiments for each process disclosed herein.

Each of the described processes may be altered or implemented in any of a myriad of ways without departing from the spirit of the present disclosure. In some embodiments, for example, the processes are embodied in computer-implemented methods executable by any of a myriad of computing device implementations, or combinations thereof, described herein, including by a user device 102, AR processing server 104, electronic support platform 106, or any other apparatus 200, and/or the like as described herein. In some embodiments, the processes are embodied in one or more specially configured apparatuses, for example the apparatus 200, configured to including at least one processor and at least one memory having computer-coded instructions stored thereon or other means described herein that, in execution with the at least one processor, configure the apparatus(es) to perform the operations of such processes. In some embodiments, user devices may be referenced as performing certain functions (e.g., interface rendering, image capture, signal detection, and/or position detection), and it would be understood by the person of ordinary skill in the art in light of the present disclosure that such user devices may embody any apparatus(es) disclosed herein or known in the art capable of being used, either alone or in combination with other apparatuses, for the described function, and the term "user device" should not be construed as limiting the scope of these functionalities.

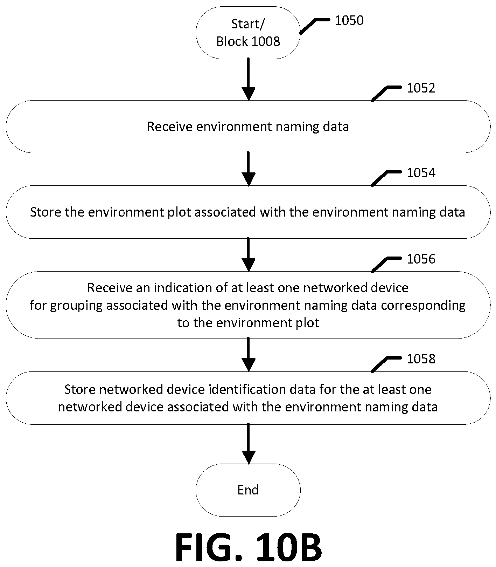

FIG. 10A illustrates operations of an example process for network-centric augmented reality processing in accordance with the present disclosure. For example, FIG. 10A depicts operations of an example process 1000 for generating an environment plot representing a premises, in accordance with one or more embodiments of the present disclosure. FIG. 10B further depicts operations of the process 1050 for utilizing environment naming data to grouping one or more devices associated with an environment plot. One or more of the described operations may be optional as described herein.

For example, in some embodiments, one or more apparatus(es) 200 (e.g., embodied as the user device 102, AR processing server 104, and/or electronic support platform 106) are configured to perform some or all of the operations of the process 1000, either alone or in combination with one or more other apparatuses (e.g., the process may be performed in whole or in part by a user device, AR processing server, and/or electronic support platform). As illustrated, the process 1000 may begin at optional operation 1002. At optional operation 1002, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to initialize an augmented reality environment representing a three-dimensional environment. In some embodiments, the user device 102 utilizes a camera circuitry 212 to capture camera data utilized in initializing the augmented reality environment. For example, the user device 102 may utilize the camera circuitry 212 to capture camera data including representations of a flat surface (e.g., a floor of a premises) that is utilized to establish an origin point and/or a two-dimensional or three-dimensional coordinate plane for placing virtual objects. The origin point established during initialization may be used to track data embodying the position of the user device 102 as it is traversed and/or otherwise navigates through the premises. For example, in some embodiments, data captured from one or more sensors (e.g., a gyroscope, accelerometer, GPS circuitry, signal triangulation circuitry, and/or a combination thereof) may be processed with the imagery captured at the same time to determine an offset between the initialized origin point and the current position of the user device 102 to generate mapping device position data representing the current position of the user device 102. In some embodiments, the augmented reality environment may include or may be modified by pre-existing position and object data. For example, a pre-stored premises map (or a portion thereof) which may then be updated with the locations of various objects and/or signal strength measurements.

The initialized augmented reality environment may embody and/or otherwise define a coordinate plane and/or origin point to be utilized in positioning virtual data objects. In this regard, upon initialization, the user device 102 may be configured to generate and/or otherwise display an augmented reality interface including real-world imagery represented in camera data and/or representations of virtual objects generated and/or received by the apparatus(es) 200. For example, the process 1000 may include determining a portion of the augmented reality environment that is within the camera circuitry's field of view (e.g., the coordinate system may be correlated between virtual and real-world environments to create the augmented reality interface with virtual objects from the augmented reality environment appearing in a corresponding real world location in the interface imagery), and subsequently cause rendering of virtual objects that are within the determined portion of the augmented reality environment (e.g., rendering on the display of the user device 102). Such virtual objects may be rendered to augment (e.g., "on top of," "interacting with," and/or "additional to") real-world imagery represented in captured camera data. In some embodiments, the augmented reality environment may be initialized utilizing one or more third-party circuitries as described herein, which circuitries may be executed, for example, on the user device 102 or any other apparatus 200.

At operation 1004, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive at least one indication associated with a plot corner set as a camera circuitry of the apparatus 200 (e.g., user device 102) navigates within the augmented reality environment. In some embodiments, each indication of the at least one indication is associated with a portion of the camera data. For example, each indication indicates that a corner is present in the portion of the camera data. In this regard, for example, the portion of camera data may be processed to automatically receive the indication of a plot corner in the captured camera data. In some embodiments, the apparatus(es) 200 (e.g., embodied as the user device 102, AR processing server 104, and/or electronic support platform 106) utilize image processing, a trained object detection model, and/or the like to receive each indication by processing the portion of the camera data. In other embodiments, the user device 102 receives one or more indication in response to user engagement. For example, the user may engage the user device 102 to indicate the existence of a corner in a corresponding portion of the camera, such as a frame being rendered within an augmented reality interface displayed by the user device 102. In some such embodiments, the apparatus(es) 200 receive an indication in response to user engagement with a particular user interface element of an augmented reality interface rendered by the user device 102.

The corner detection process may be repeated for multiple potions of captured camera data, such as each frame, image, and/or the like. In some embodiments, multiple captured images, such as from a continuous video capture, are processed by the apparatus(es) 200 and/or an associated device to determine a location of a corner (e.g., two images of the same corner from different angles may permit triangulation of the position of the corner in the augmented reality environment). In some embodiments, each portion of camera data may be processed (e.g., by apparatus(es) 200) as the portion is captured or received. For example in some embodiments, the user device 102 is configured to capture camera data representing a real-time representation of the premises around the user device 102. In some such embodiments, a plurality of indications may be received in association with a plurality of frames of the camera data such that each indication indicates the existence in a corner in a corresponding frame of the camera data. The plurality of indications may correspond to the plot corner set defining the boundaries of a premises.

At operation 1006, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to map each plot corner in the plot corner set to a corner location for each plot corner in the plot corner set. In this regard, a plot corner may be mapped to a corner location in the augmented reality environment as a corresponding indication is received. To map the plot corner to a corner location, the apparatus(es) may generate a data object that includes one or more values representing the corner location in the augmented reality environment. In some embodiments, to map the plot corner to a corner location in the augmented reality environment, the apparatus(es) determine mapping device position data representing the current position of the user device 102. The apparatus(es) may map the plot corner to the corner location embodied by the mapping device position data. In some embodiments, the process comprises determining an offset from the mapping device position data representing the current position of the user device 102 in the augmented reality environment to map the corner location of a plot corner. For example, the user device 102 may maintain and/or otherwise set a position of a virtual reticle object having a determinable offset from the mapping device position data (e.g., determinable intersection between the reticle and the objects represented in the real world imagery and augmented reality environment based on orientation data associated with the camera circuitry of the user device 102 or an associated camera device and ranging data to the object targeted by the reticle). In some such embodiments, the apparatus(es) may map the plot corner to the position of the virtual reticle object in the augmented reality environment at the time the indication was received. In this regard, in some such embodiments, as the user device 102 is navigated throughout the augmented reality environment, the apparatus(es) 200 may be configured to update the position of the virtual reticle object such that, the updated position of the virtual reticle object may be used to map a corner location upon receiving each subsequent indication indicating existence of a corner in the captured data. In some embodiments, the user may select a location on the screen of the user device, which may then prompt the apparatus(es) to determine a location in the augmented reality environment corresponding to the location selected on the screen for identification as a corner.

At operation 1008, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to generate an environment plot based at least on the corner location for each plot corner in the plot corner set. The environment plot may be generated to include data embodying the corner location mapped to each of the indicated plot corners. Additionally or alternatively, the environment plot may be generated such that a plot corner is connected to one or more other plot corners. For example, in some embodiment the environment plot includes data connecting plot corners that were indicated subsequently from one another (e.g., indicating that such subsequently indicated plot corners are connected by a wall). In this regard, the various connected plot corners may be positioned and connected in a manner such that the plot corner set is used to generate the environment plot in a manner that accurately represents the premises being mapped.

The environment plot may be utilized for any of a myriad of purposes. In some embodiments, the environment plot is rendered to a user via a display, such as the display of the user device 102, and/or rendered to a user of another device such as a user of an AR processing server, customer service representative, or the like. In some embodiments, the environment plot is stored to the user device 102 and/or transmitted to a remote device, such as an AR processing server, for storing. The stored environment plot may be retrieved at a later time for displaying and/or processing. In some embodiments the environment plot is further generated together with mapped data associated with devices and/or objects, and may be utilized in one or more additional operations for network analytics, device servicing, device protection program enrollment and/or information provision, and/or the like. For example, the environment plot may be utilized for one or more of the operations described herein with respect to FIGS. 10B and/or 11-20.

FIG. 10B illustrates operations of another example process for network-centric augmented reality processing in accordance with the present disclosure. For example, FIG. 10B depicts operations of an example process 1050 for associating networked device(s) with environment naming data, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1050, alone or in conjunction with any of the other processes described herein. As illustrated, the process 1050 may begin at operation 1052. The operation 1050 may begin after one or more operations of another process, for example after the operation 1008 of the process 1000 as illustrated.

At operation 1052, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive environment naming data. The environment naming data may represent a user-readable and/or user-submitted name associated with the premises represented by the environment plot. In at least one example context, the environment naming data represents a room name associated with the premises represented by the environment plot. For example, the user may utilize the apparatus(es) 200 to generate the environment plot that represents a user's living room, and the environment naming data received may embody the text "Living Room" for storing associated with the corresponding environment plot. The environment naming data may comprise numerical, alphabetical, and/or alphanumerical text data, image data, and/or the like.

In some embodiments, the apparatus(es) 200 are configured to receive the environment naming data based on user input. For example, a user may utilize the apparatus(es) 200 (e.g., via touch screen input on the user device 102) to input the environment naming data, such as by typing the environment naming data via the user device 102. In some embodiments, the apparatus(es) 200 receive the environment naming data based on user input previously stored to the user device 102 and/or a remote apparatus associated therewith, for example the apparatus 200 embodying the AR processing server. In this regard, the previously stored environment naming data may be stored associated with a particular user or user account accessed via the user device 102, such as by logging in and/or determining the user account is associated with the user device 102.

In some embodiments, the apparatus(es) 200 (e.g., embodied as the user device 102, AR processing server 104, and/or electronic support platform 106) receives the environment naming data in response to one or more automatic determinations. In some embodiments, the apparatus(es) determine a networked device associated with the environment plot corresponds to predetermined environment naming data. For example, the apparatus(es) may determine that a smart television is included in the generated environment plot, and associate the environment plot with environment naming data for a premises where a smart television is expected to be located such as a "family room." The process may include determining that a smart toaster is included in the generated environment plot and associate the environment plot with environment naming data representing a "kitchen" where such a networked device is expected to be located.

At operation 1054, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to store the environment plot associated with the environment naming data. In some embodiments, process may include storing the environment plot associated with the environment naming data local to the user device and/or at a remote device such as an AR processing server. In some embodiments, the environment naming data may be used to retrieve the environment plot associated therewith.

At operation 1056, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive an indication of at least one networked device for grouping associated with the environment naming data corresponding to the environment plot. The indication associated with a particular networked device may include device identification information associated with the networked device, such that the networked device is uniquely identifiable for associating with the environment naming data. In some embodiments, for example, process may include receiving an indication associated with each networked device mapped within the environment plot. In this regard, all networked devices in a particular environment plot may be grouped associated with the same environment naming data. In other embodiments, the user may utilize the apparatus(es) 200 (e.g., user device 102) to provide indication(s) associated with each networked device to be grouped associated with the environment naming data. For example, the process may include identifying all networked devices connected to a particular network access device and/or otherwise connected to a particular network, and enable the user (e.g., via one or more interfaces rendered to the user) to select one or more of the identified devices for associating with the environment naming data.

At operation 1058, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to store networked device identification data for the at least one networked device associated with the environment naming data. In some embodiments, as user may input the networked device identification data for each of the at least one networked device, such as by the user typing in the device identification data via a touch screen display or other input device associated with the user device 102. In other embodiments, the process may include automatically determining the networked device identification data associated with each of the at least one networked device. Each received networked device identification data may be stored in a local and/or remote memory, database, and/or the like, such that it is retrievable associated with the environment naming data. In this regard, the environment naming data may be utilized to query for networked devices associated therewith. For example, in some embodiments, the apparatus(es) 200 (e.g., embodied as the user device 102, AR processing server 104, and/or electronic support platform 106) are configured to enable a user to select environment naming data, and subsequently the process may include querying for networked devices associated with such selected environment naming data based on associated network device identification data and displaying information associated with such networked devices and/or enable batch operations to be performed for some or all of such networked devices. In one example context, for example where the environment naming data represents "kitchen" and the user stores a plurality of networked devices associated with the environment naming data, the user may subsequently identify such networked devices and computationally instruct the apparatus(es) to perform a particular operation for each such networked device (e.g., turn off all networked devices associated with the environment naming data "kitchen"). In another example context, the process may include rendering a user interface that lists all the networked devices associated with particular environment naming data.

FIG. 11 illustrates operations of another example process for network-centric augmented reality processing in accordance with the present disclosure. For example, FIG. 11 depicts operations of an example process 1100 for receiving at least one indication associated with a plot corner set based on user input data, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1100, alone or in conjunction with any of the other processes described herein. As illustrated, the process 1100 may begin at operation 1102. The operation 1102 may begin after one or more operations of another process, for example after the operation 1002 of the process 1000 as illustrated. Similarly, upon completion of the process 1100, flow may proceed to one or more operations of another process, such as operation 1006 of the process 1000 as illustrated.

At operation 1102, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive user input data indicating existence of a first plot corner in the camera data. In one example context, the user provides such user input once the camera circuitry has been positioned to view a particular corner in the premises being mapped. The user may provide such user input in response to viewing the corner rendered to the augmented reality interface (e.g., via real-world imagery captured by camera circuitry). In some embodiments, the user input data is received associated with a particular portion of the camera data. For example, where the camera data comprises real-time captured images and/or video data, the user input data may indicate existence of a first plot corner in a particular frame or image of the camera data. In some embodiments, the user input data comprises interaction with an augmented reality interface, a particular user interface element within an augmented reality interface, a gesture, a voice command, and/or any other interaction described herein.

At operation 1104, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to map the first corner to a first corner location in the augmented reality environment. In some embodiments, the first plot corner is mapped to the first corner location based on first mapping device position data associated with the apparatus(es) 200 (e.g., the position of the user device 102 in the premises). In at least one example context, the first mapping device position data represents the current position of the user device 102 in the augmented reality environment. In this regard, the apparatus(es) 200 (e.g., embodied as the user device 102, AR processing server 104, and/or electronic support platform 106) may generate and/or store, for example in an environment plot, data embodying the first plot corner and associate such data with a first corner location matching the first mapping device position data, or derived therefrom. For example, in at least one example context, the apparatus(es) 200 determine the first corner location based on an offset from the first mapping device position data and map the first plot corner to the determined plot corner location. In some embodiments, the apparatus(es) 200 determine a position of a virtual object in the augmented reality environment (e.g., a virtual reticle object as described herein) that may be based on the first mapping device position data, and map the first corner plot to the determined position of the virtual object as the first corner location. In this regard, the apparatus(es) generate and/or otherwise updates data such as the augmented reality environment, environment plot, and/or other data, to represent the existence of the first plot corner at the first corner location.

At optional operation 1106, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive mapping device positioning data indicating traversal to a second mapping device position. In this regard, the second mapping device position data may differ from first, earlier identified mapping device position data, for example associated with the first plot corner, thus indicating traversal. In some embodiments, for example, the process includes monitoring and/or otherwise tracking the current mapping device position data associated with the user device (e.g., the mapping device) in real-time. In this regard, as the user device traverses a premises (e.g., in response to a user carrying the device walking around the premises), the current mapping device position data is updated. It should be appreciated that each update to the mapping device position data may be performed at various times. In some embodiments, for example, the updates to the mapping device position data occur at a fixed time interval, distance interval, and/or other fixed interval. In some embodiments, the apparatus(es) 200 (e.g., embodied as the user device 102, AR processing server 104, and/or electronic support platform 106) receives the second mapping device position data upon subsequent user input, such as the user input described with respect to operation 1108.

At operation 1108, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive second user input data indicating existence of a second plot corner in the camera data. In some embodiments, the second plot corner is indicated within a second portion of the camera data, which may be separate from a first portion of the camera data in which a first plot corner was indicated. In one example context, the user provides such user input once the camera circuitry has been positioned to view a second corner in the premises being mapped. Additionally or alternatively, the user may provide such user input in response to viewing the second corner rendered to the augmented reality interface, for example after traversing near the second corner in the premises. In some embodiments, the second user input data comprises interaction with an augmented reality interface, a particular user interface element within an augmented reality interface, a gesture, a voice command, and/or any other interaction described herein. It should be appreciated that the first user input data and the second user input data may be received in response to distinct types of user inputs.

At optional operation 1110, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to map the second corner to a second corner location in the augmented reality environment. In some embodiments, the second plot corner is mapped to the second corner location based on the second mapping device position data associated with the user device. In this regard, the process may include generating and/or storing, for example in an environment plot, data embodying the second plot corner and associating such data with a second corner location matching the second mapping device position data, or derived therefrom. For example, in at least one example context, the process includes determining the second corner location based on an offset from the second mapping device position data (e.g., including position, orientation, and other data, such as inertial data) from the mapping device (e.g., the user device), and mapping the second plot corner to the determined second plot corner location. In some embodiments, the process may include determining a position of a virtual object in the augmented reality environment (e.g., a virtual reticle object as described herein based upon the position that the reticle intersects on the virtual reality display) that may be based on the second mapping device position data, and mapping the second corner plot to the second determined position of the virtual object as the second corner location. In this regard, the process may include generating and/or otherwise updating data such as the augmented reality environment, environment plot, and/or other data, to represent the existence of the second plot corner at the second corner location.

It should be appreciated that the operations 1106-1110 may be repeated for any number of plot corners. For example, in some embodiments, the process may include receiving subsequent updated mapping device position data indicating traversal to a third mapping device position, receiving a third user input data indicating existence of a third plot corner in the camera data, and mapping the third plot corner to a third corner location in the augmented reality environment. In this regard, the augmented reality environment and/or environment plot is generated including data representing the subsequent plot corner and corresponding corner location. The process may include receiving such indications until the premises mapping is completed (e.g., once all corners of the premises have been mapped, which may be automatically determined or indicated by the user via interaction with the interface). In at least one context, for example, the fully mapped environment plot, augmented reality environment, and/or other data accurately represents the boundaries of the premises.

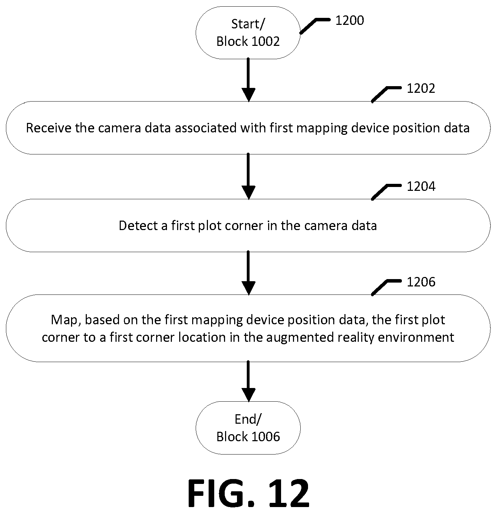

FIG. 12 illustrates operations of another example process for network-centric augmented reality processing in accordance with the present disclosure. For example, FIG. 12 depicts operations of an example process 1200 for receiving at least one indication associated with a plot corner set automatically based on detection in the camera data, in accordance with one or more embodiments of the present disclosure. For example, in some embodiments, the apparatus(es) 200 are configured to perform the operations of the process 1200, alone or in conjunction with any of the other processes described herein. As illustrated, the process 1200 may begin at operation 1202. The operation 1202 may begin after one or more operations of another process, for example after the operation 1002 of the process 1000 as illustrated. Similarly, upon completion of the process 1200, flow may proceed to one or more operations of another process, such as operation 1006 of the process 1000 as illustrated.

At operation 1202, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive the camera data associated with first mapping device position data. In this regard, the process may include determining and/or otherwise identifying the first mapping device position data based on the current position of the user device 102. In some embodiments, the process may include associating at least a portion of the camera data with the first mapping device position data, such that at least the portion of the camera data is determined as captured from the first mapping device position data. For example, the camera data and position data may be associated with each other via time stamp and/or the data may be simultaneously captured and processed as a combined data object (e.g., the camera data may comprise position data automatically added during capture of the image data). In some embodiments, the user device 102 is configured to capture the camera data via a camera circuitry of the user device 102. In other embodiments, the user device 102 and/or another apparatus 200 receives the camera data from an external camera circuitry, for example associated with a second apparatus communicatively coupled with the user device 102.

At operation 1204, the apparatus 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to detect a first plot corner in the camera data. In some embodiments, the process may include detecting the first plot corner in a frame of the camera data and/or a particular captured image. The process may include utilizing one or more image processing algorithm(s), machine learning model(s), algorithmic model(s), statistical model(s), and/or the like, to detect the first plot corner in the camera data. For example, in some embodiments, the process may include training and/or utilizing a machine learning model trained to identify corner(s) in captured camera data. In this regard, the machine learning model (and/or other models or algorithms) may detect edges in the camera data to detect where such edges form a corner of the premises.

At operation 1206, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to map the first plot corner to a first corner location in the augmented reality environment. In some such embodiments, the process may include mapping the first plot corner to the first corner location in the augmented reality environment based on at least the first mapping device position data associated with the user device 102. In this regard, the process may include generating and/or storing, for example in an environment plot, data embodying the first plot corner and associate such data with a first corner location matching the first mapping device position, or derived therefrom. For example, in at least one example context, the process includes determining the first corner location based on an offset from the first mapping device position data and mapping the first plot corner to the determined first plot corner locations. The offset may be determined based on a distance and, in some embodiments, angle between the user device and the first plot corner identified in the real-world imagery by processing the camera data. It should be appreciated that the offset may be determined simultaneous to, and/or in series, with detecting the first plot corner in the camera data.

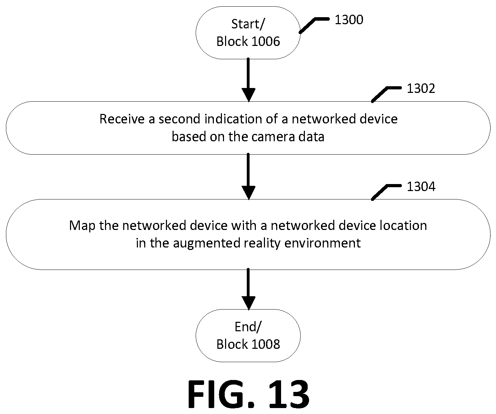

FIG. 13 illustrates operations of another example process for network-centric augmented reality processing in accordance with the present disclosure. For example, FIG. 13 depicts operations of an example process 1300 for mapping a networked device in the premises, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1300, alone or in conjunction with any of the other processes described herein. As illustrated, the process 1300 may begin at operation 1302. The operation 1302 may begin after one or more operations of another process, for example after the operation 1002 of the process 1000 as illustrated. Similarly, upon completion of the process 1300, flow may proceed to one or more operations of another process, such as operation 1006 of the process 1000 as illustrated.

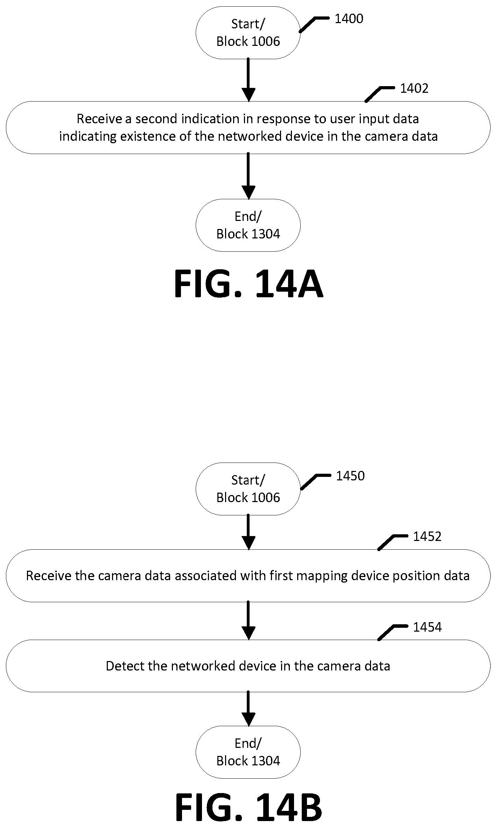

At operation 1302, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive a second indication of a networked device based on the camera data. In some embodiments, the second indication is received with respect to a particular portion of the camera data, for example a single frame of the camera data and/or a particular captured image. The indication may be received in any of a manner of ways, such as in response to user input and/or automatic detection. Example processes for receiving the second indication of a networked device based on the camera data are described herein with respect to FIGS. 14A and 14B.

At operation 1110, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to map the networked device with a networked device location in the augmented reality environment. In some embodiments, the process may include mapping the networked device location to a position represented by device mapping position data. In this regard, the networked device location may represent the current position of the mapping device (e.g., the user device). In other embodiments, the process comprises determining an offset between the user device 102 and a networked device location associated with the networked device. For example, in some embodiments, the process includes determining a position associated with a virtual object in the augmented reality environment, such as a virtual reticle object, and mapping the networked device to a networked device location representing the position of the virtual object. In some embodiments, the process includes determining an offset between the mapping device (e.g., the user device) and the networked device represented in the camera data, and mapping the networked device to the networked device location based on the mapping device position data associated with the user device 102and the determined offset.

Additionally or alternatively to mapping devices and any other objects via camera data, a user may manually input the location of one or more devices (e.g., networked devices and/or network access devices) and/or objects (e.g., interferer objects and other relevant objects) via manual entry, such as by selecting a location on the environment plot (e.g., via touchscreen input on the user device). In such embodiments, for example, the various onboarding, identification, and device verification operations (e.g., signal and/or camera based) may be performed to confirm the indicated locations.

FIG. 14A illustrates operations of an example process for network-centric augmented reality processing in accordance with the present disclosure. For example, FIG. 14A depicts operations of an example process 1400 for receiving an indication of a networked device based on camera data, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1400, alone or in conjunction with any of the other processes described herein. As illustrated, the process 1400 may begin at operation 1402. The operation 1402 may begin after one or more operations of another process, for example after the operation 1006 of the process 1000 as illustrated. Similarly, upon completion of the process 1400, flow may proceed to one or more operations of another process, such as operation 1110 of the process 1300 as illustrated.

At operation 1402, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive a second indication, in response to user input data, indicating existence of a networked device in the camera data. In one example context, the user provides such second user input once the camera circuitry of or associated with the user device 102 has been positioned to view the networked device within the premises being mapped. Additionally or alternatively, the user may provide such user input in response to or upon viewing the networked device rendered to an augmented reality interface. In some embodiments, the user input data is received with a particular portion of the camera data. For example, where the camera data comprises real-time captured images and/or video data, the user input data may indicate existence of a networked device in a particular frame or image of the camera data (e.g., via the user tapping the location of the networked device and/or determining the location of a reticle on the real world imagery). In some embodiments, the user input data comprises interaction with an augmented reality interface, a particular user interface element within tan augmented reality interface, a gesture, a voice command, and/or other interaction described herein. In some embodiments, the augmented reality interface comprises an interface element configured that generates the user interaction data specifically indicating existence of a networked device in the camera data in response to user interaction with the particular interface element (e.g., a "networked device" button). Such an interface element may be rendered alone or together with any of a myriad of other interface elements. In some embodiments, for example in response to the user interaction data, the process continues with mapping a networked device to a networked device position as described herein. It should be appreciated that in some embodiments, the apparats 200 maps the networked device to a networked device position utilizing any of the methodologies described herein.

FIG. 14B illustrates operations of another example process for network-centric augmented reality processing in accordance with the present disclosure. For example, FIG. 14B depicts operations of an example process 1450 for receiving an indication of a networked device based on camera data, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1450, alone or in conjunction with any of the other processes described herein. As illustrated, the process 1400 may begin at operation 1452. The operation 1452 may begin after one or more operations of another process, for example after the operation 1006 of the process 1000 as illustrated. Similarly, upon completion of the process 1450, flow may proceed to one or more operations of another process, such as operation 1110 of the process 1300 as illustrated.

At operation 1452, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive the camera data associated with the first mapping device position data. In some embodiments, the process includes capturing the camera data utilizing a camera circuitry included in and/or otherwise controllable by the apparatus(es) 200 (e.g., the user device 102). In other embodiments, the camera data is received from a camera circuitry and/or other external device communicatively linked to the apparatus(es) 200 (e.g., from a separate camera or other user device over a network). For example, the camera data may be received by the user device or other apparatus(es) from an external user device, communicatively coupled camera peripheral device, and/or the like. The camera data may be associated with first mapping device position data representing a position of the mapping device (e.g., the user device, separate camera-bearing device, and/or other apparatus(es)) in the augmented reality environment, or an absolute position of the mapping device that is mappable to a particular augmented reality environment, from which the camera data captured. In at least one example embodiment, the process includes determining the first device mapping position data during capture of the camera data such that the first mapping device position data represents the current position of the mapping device (e.g., the user device) or an associated device at the time of capture. In other embodiments, the apparatus(es) receive the first mapping device position data together with the camera data from another device. In some embodiments, the process includes utilizing the first mapping device position data to map detected object(s), device(s), and/or the like to position(s) in the augmented reality environment. For example, the first mapping device position data may be used to map a networked device detected in captured camera data to a networked device position based on the first mapping device position data associated with the camera data, such as via determining an offset as described herein.

At operation 1454, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to detect the networked device in the camera data. In some embodiments, the process may include detecting the networked device in a particular frame, image, and/or other portion of the camera data. In some embodiments, the one or more image processing algorithm(s), machine learning model(s), algorithmic model(s), statistical model(s), and/or the like, may be trained and/or used to detect the networked device in the camera data. For example, in some embodiments, a machine learning model may be specially trained to detect networked device(s) of one or more networked device types in the camera data. In this regard, in some embodiments, the trained machine learning models, and/or other algorithmic and/or statistical model(s), may be used to detect such networked device(s), and/or to detect the network device type(s) associated with such networked device(s) in the captured image data. In some such embodiments, the user device and/or associated apparatus(es) may continue to map the networked device to a networked device position, as described herein.

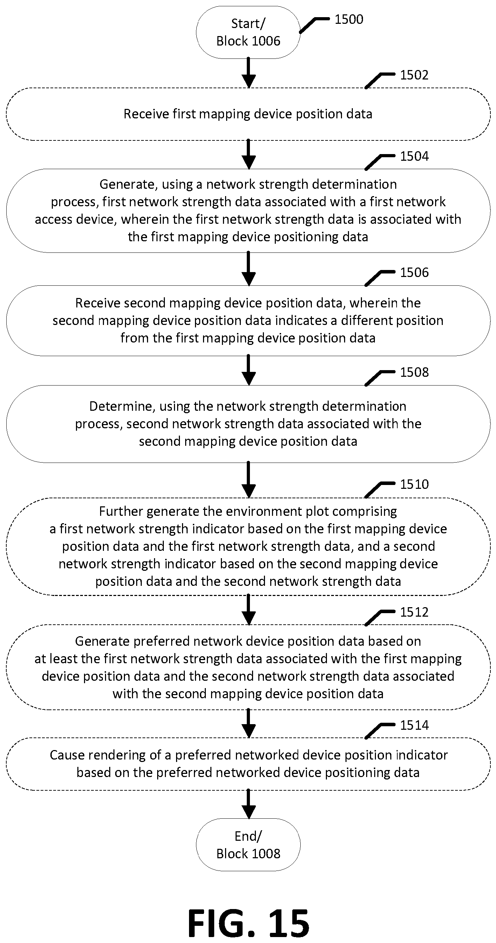

FIG. 15 illustrates operations of another example process for network-centric augmented reality processing in accordance with the present disclosure. For example, FIG. 15 depicts operations of an example process 1500 for determination of network strength data for use in network-centric augmented reality processing, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1500, alone or in conjunction with any of the other processes described herein. As illustrated, the process 1500 may begin at operation 1502. The operation 1502 may begin after one or more operations of another process, for example after the operation 1008 of the process 1000 as illustrated. Similarly, upon completion of the process 1500, flow may proceed to one or more operations of another process.

At optional operation 1502, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive first mapping device position data. In some embodiments, the first mapping device position data represents a current position of the user device 102and/or an associated apparatus and/or subcomponent in the augmented reality environment. In this regard, in some such embodiments the apparatus(es) 200 (e.g., embodied as the user device 102, AR processing server 104, and/or electronic support platform 106) track the current mapping device position data representing the current position of the user device 102 and/or an associated user device (e.g., a separate camera circuitry). In some embodiments, the apparatus(es) 200 utilize location services circuitry, a location services circuitry, and/or the like, to receive the first mapping device position data. In some other embodiments, the apparatus(es) 200 receives the first mapping device position data from an external device, peripheral, and/or the like.

At operation 1504, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to generate, using a network strength determination process, first network strength data associated with a first network access device. In some such embodiments, the first network strength data represents a signal strength associated with the first network access device (e.g., a signal strength of the signal transmitted from the first network access device) at a particular position in the augmented reality environment. For example, in some contexts, the first network strength data is mapped to the position represented by the first mapping device position data, for example at operation 1502. In some embodiments, the process includes utilizing one or more received signal strength indication methodologies to determine the network strength. For example, in some embodiments, the apparatus(es) 200 determine the timestamp for a received message in comparison with an expected timestamp for the message. In some embodiments, the apparatus(es) 200 utilize one or more other known processes for determining the first network strength, such as measuring the signal received by the user device or a networked device (e.g., the networked device may report the received signal strength to the network access device, the user device, and/or another apparatus) and mapping the measured signal strength with the location of receipt of the signal. In some embodiments, a theoretical signal strength for a location (e.g., a first location) may be calculated based on the position of the features in the augmented reality environment and/or environmental plot. For example, a model may be trained and/or executed that compares the locations of the premises boundaries, interference objects, and one or more apparatuses (e.g., networked devices and network access devices) within the premises to determine predicted signal strengths at one or more locations within the premises. The model may be trained by executing a machine learning algorithm using empirically measured signal strength data associated with training premises maps from a plurality of training data sets. In some embodiments, the model may further consider the properties of the boundaries, interference objects, and one or more apparatuses, such as the materials of manufacture, shape, size, and density of any potentially-interfering objects and/or the make, model, transmitter strength, receiver strength, or the like of any networked devices or network access device. In embodiments relying upon theoretical, predicted signal values, the user device may not be required to traverse the premises once mapping is complete. The value of the first network strength data may be based on and influenced by any of a myriad of factors. For example, in some embodiments, the value of the first network strength data is based on one or more of the distance between the network access device and the first mapping device position data, at least one interference object positioned within the augmented reality environment, and/or the layout of the premises.

At operation 1506, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive second mapping device position data. In some such embodiments, the second mapping device position data represents a second position that is different than the first position represented by first device positioning data. In this regard, in some such embodiments, the second mapping device position data represents a new current position of the user device and/or an associated device and/or subcomponent of the user device in the augmented reality environment, such as after traversal to a second position in the augmented reality environment. In some such embodiments, the process includes tracking the current mapping device position data representing the current position of the mapping device (e.g., user device) and/or an associated device during such traversal throughout the augmented reality environment. It should be appreciated that, in some such embodiments, location services circuitry, a location services circuitry, and/or the like, may be integral with or separate from the apparatus(es) 200 (e.g., a user device 102) and may be utilized to receive the second mapping device position data. In some embodiments, the second mapping device position data from an external device, peripheral, and/or the like that is associated with the user device.

At operation 1508, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to determine, using a network strength determination process, second network strength data associated with the second mapping device position data. In some such embodiments, the second network strength data represents a signal strength associated with the first network access device at a particular position in the augmented reality environment, which may be determined similar to the first network signal strength data. For example, in some contexts, the second network strength data is mapped to the position represented by the second mapping device position data, for example as determined at operation 1506. In some embodiments, the same network strength determination process utilized for determining the first network strength data may be used to determine the second network strength data. In some embodiments, a different network strength determination process than that utilized for determining the first network strength data. For example, in some embodiments, received signal strength indication methodologies may be used to determine the network strength. For example, in some embodiments, the apparatus(es) 200 determine the timestamp for a received message in comparison with an expected timestamp for the message from the position represented by the second mapping device position data. In some embodiments, one or more other known processes may be used for determining the second network strength. In some embodiments, the second network signal strength may be determined theoretically according to the various embodiments discussed herein. The value of the second network strength data is based on any of a myriad of factors.

At optional operation 1510, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to further generate the environment plot comprising (1) a first network strength indicator based on the first mapping device position data and the first network strength data, and (2) a second network strength indicator based on the second mapping device position data and the second network strength data. For example, in some embodiments, the process may include generating and/or otherwise including the first network strength indicator comprising a data object indicating the first network strength data at the position represented by the first mapping device position data. Similarly, in some embodiments, the process may include generating and/or otherwise including the second network strength indicator comprising a data object indicating the second network strength data at the position represented by the second mapping device position data. In this regard, the environment plot is processable to determine and generate further recommendations and analysis based on the network strength at various positions in the mapped premises and/or is renderable such that the network strength at various positions in the premises becomes visible to a user.

At optional operation 1512, apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to generate preferred network device position data based on at least the first network strength data associated with the first mapping device position data and the second network strength data associated with the second mapping device position data. In some embodiments, an algorithm for generating preferred network device position data may be configured to identify a recommended location for one or more networked devices by comparing the signal strength values in the premises. In some such embodiments, the preferred network device position data represents the position having stronger network strength between the first position represented by the first mapping device position data and the second position represented by the second mapping device position data. For example, in an example context where the first network strength data represents a stronger network strength than the second network strength data, the preferred network device position data comprises and/or otherwise equals the first mapping device position data. In another example context where the second network strength data represents a stronger network strength than the first network strength data, the preferred network device position data comprises and/or otherwise equals the second mapping device position data. In some embodiments, the preferred network device position data may be generated with respect to three or more positions. For example, data representing a third position different from the first position represented by the first mapping device position data and the second position represented by the second mapping device position data. In some such embodiments, for example, the process may include a third position between the first position represented by the first mapping device position data and the second position represented by the second mapping device position data, where the process includes determining that the third position is associated with superior network strength than the first position and the second position. For example, in some such embodiments, the process may include interpolating between the first position and the second position to determine the third position between the first position represented by the first mapping device position data and the second position represented by the second mapping device position data, and generates the preferred networked device position indicator representing the third position.

In some embodiments, the network strength data may be collected from the networked devices and/or network access devices themselves. For example, the networked device and/or network access device may electronically connect with a user device, directly or indirectly, according to the various embodiments herein, and the networked device and/or network access device may transmit network strength data to the user device, which strength data may be associated with known positions of the respective devices (e.g., positions acquired via the mapping functions discussed herein).

In some embodiments, any number of network signal strength data points may be collected across any number of locations in the room. In some embodiments, a number of signal strength samples may be taken and values in-between the position of the samples may be interpolated to cover or substantially cover the entire premises or a target area within the premises. In some embodiments, any other data representation of the signal strength over the area, including an infinite gradient, may be used and/or calculated. In some embodiments, the algorithm for generating preferred network device position data may recommend an optimal position from all possible positions from the sampled and/or calculated region.

In some embodiments, an algorithm for generating preferred network device position data may be configured to identify a recommended location for one or more network access devices by comparing the signal strength values in the premises. In such embodiments, any of the above-described position sampling and/or interpolation and signal strength calculation processes may be used. The preferred network device position data may comprise a recommended location for one or more network access devices by identifying areas having high and low signal values.

In some embodiments, the algorithm may be constrained only to the network access device(s) currently in operation. In such embodiments, the algorithm may recommend moving the network access device(s) to optimal locations and/or move interferer objects based on one or more of (1) a determination that certain areas of the premises include inadequate coverage - the recommendation being to move the network access device(s) closer to the less covered areas or move the interferer objects away from the signal path or (2) a determination that one or more networked devices are receiving less than optimal signal (e.g., either because the signal is insufficient for one or more networked devices or because the network access device could be positioned closer based on the current distribution of devices in the premises without harming or significantly harming the signal to the remaining devices in the premises). For the latter embodiment, the networked devices may be concentrated in one area of the premises, such as a room or portion of a room, and the process may comprise recommending moving the network access device(s) closer to the centroid of the networked devices or other computed location configured to deliver a cumulatively better signal to the networked devices.

In some embodiments, the algorithm may recommend modifications to the network access device(s) using a similar process. For example, in one embodiment, the algorithm may recommend a stronger network access device or additional network access device (e.g., a range extender, mesh network satellite device, or additional router). This recommendation may, for example, be triggered when no adequate algorithmic solution is available that provides sufficient signal (e.g., above a threshold decibel level) to each networked device or based on any other criteria.

In some embodiments, the recommendation may include data presented to the user for the user to digest and determine a solution. For example, a signal plot over the premises may be shown with indications of signal value (e.g., a binary indication of signal above/below a minimum threshold for device operation and/or a gradient of signal strength over the premises). In some embodiments, the recommendation may include indications of areas with adequate or inadequate signal without recommending moving or adding a device.

In some embodiments, the recommendation from the algorithm may comprise a multi-prong recommendation comprising both networked device and network access device positioning recommendations according to the embodiments discussed herein. For example, the recommendation may comprise an indication that signal must either be improved for a particular location or a networked device must be moved, with suggestions being possible for each option. Similarly, additional network access devices may be recommended in parallel with or as an alternative to moving the existing network access device(s) based on the computed optimal position. In some embodiments, the scope of possible recommendations may be configurable by the user and/or by a provider of the AR system, and any combination of the algorithms discussed herein may be run simultaneously or sequentially to determine preferred network device position data corresponding to the recommendation. In some embodiments, the algorithm may determine preferred network device position data for a new device whose position is not yet known in the augmented reality environment and/or environmental plot.

In some embodiments, the preferred network device position data may be constrained to a subset of the premises and/or the area being analyzed. Predetermined and/or configurable subsets of the possible positions may be used during the recommendation process. For example, the algorithm may limit itself to known installation locations or a subset thereof (e.g., on top of shelves, desks, walls, entertainment centers, and other objects) rather than recommending any possible location in the premises (e.g., the recommendation may not include the floor, the middle of a room, or another inconvenient location).

At optional operation 1512, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of a preferred networked device position indicator based on the preferred networked device positioning data. In some such embodiments, one or more preferred networked device position indicators are rendered within the augmented reality interface, such that a user may view the preferred networked device position indicator within the augmented reality environment. In some embodiments, the preferred networked device position indicator may be rendered in the environment plot. In some embodiments, the preferred networked device position indicators may comprise a gradient or other continuous indication of signal strength across an area. In some embodiments, the preferred networked device position indicator comprises a virtual object positioned in the augmented reality environment at the preferred networked device position. In this regard, the preferred networked device position indicator may be rendered within an augmented reality interface overlaying real-world imagery at the position represented by the preferred networked device positioning data. In some such embodiments, the preferred networked device position indicator comprises a text indictor (e.g., with text that says "place here" for example), an image indicator (e.g., with a billboarding arrow that points down at the position represented by the preferred networked device positioning data, or a virtual circle object, for example), and/or the like. In one example context, the preferred networked device position indicator comprises a virtual object positioned in the augmented reality environment at the position represented by the preferred networked device positioning data, where the virtual object is configured such that one or more visual property of the virtual object, such as a particular color, shape, size, and/or the like, is configured based on network strength data associated with the position, for example the first network strength data, the second network strength data, and/or the like. By way of non-limiting example, the dots shown in the environment plots (e.g., points 904, 906 in the environment plot visualization 950 of FIG. 9) may be adjusted to represent the signal strength. For example, the dots on the environmental plot may be made larger or smaller, or may be colored differently, or may have numbers on the dots, depending on signal strength. A similar dot, arrow, wave, or other visualization may be shown in the augmented reality interface.

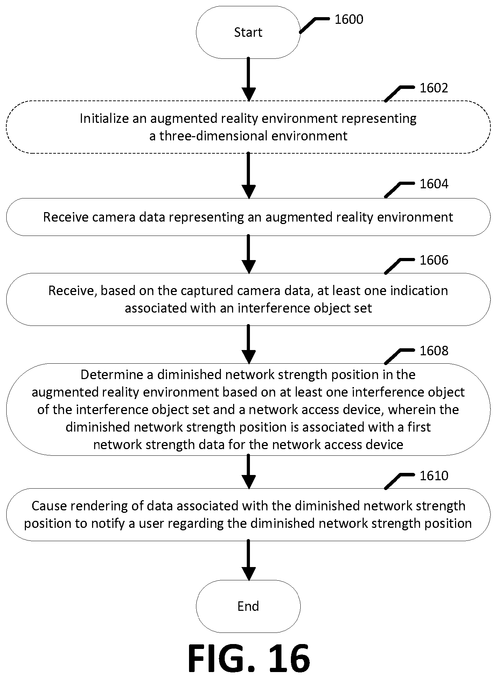

FIG. 16 illustrates operations of another example process for network-centric augmented reality processing in accordance with the present disclosure. For example, FIG. 16 depicts operations of an example process 1600 for determining diminished network strength position data for use in network-centric augmented reality processing, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1600, alone or in conjunction with any of the other processes described herein. As illustrated, the process 1600 may begin at optional operation 1602. The operation 1602 may begin after one or more operations of another process. Similarly, upon completion of the process 1600, flow may proceed to one or more operations of another process. In this regard, it should be appreciated that in some embodiments, the apparatus(es) 200 are configured for performing the process 1600 and any other of the one or more processes described herein.

At optional operation 1602, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to initialize an augmented reality environment representing a three-dimensional environment. In some embodiments, the process utilizes camera circuitry to capture camera data utilized in initializing the augmented reality environment. For example, the process may use the camera circuitry to capture camera data including representations of a flat surface (e.g., a floor of a premises) that is utilized to establish an origin point and/or a two-dimensional or three-dimensional coordinate plane for placing virtual objects. The process may utilize the origin point established during initialization to track data embodying the position of the user device 102 as it is traversed and/or otherwise navigates through the premises. For example, in some embodiments to the process utilizes data from one or more sensors of the user device (e.g., a gyroscope, accelerometer, GPS circuitry, signal triangulation circuitry, and/or a combination thereof) to determine an offset between the initialized origin point and the current position of the user device to generate mapping device position data representing the current position of the user device. In this regard, the augmented reality environment may be initialized in the manner described herein.

At operation 1604, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive camera data representing an augmented reality environment. In some such embodiments, the user device receives the camera data from an external device, peripheral, or other computing entity, such as an associated server and/or the like as described herein. In some embodiments, the user device captures the camera data utilizing camera circuitry included in and/or otherwise associated with the user device (e.g., a peripheral). In this regard, the user may orient the camera circuitry associated such that data representing a specific portion of the environment around the user device 102 is captured for processing. In some such embodiments, the captured camera data is maintained such that it is processable and/or may be utilized for rendering one or more augmented reality interface(s) having real-world imagery augmented by virtual objects generated associated with the augmented reality environment. In some embodiments, the camera data comprises real-time video stream data. In some embodiments, the camera data comprises a set of image data objects captured in real-time, sequentially, and/or the like. In other embodiments, the camera data comprises a single captured image data object captured via an associated camera circuitry. The camera data may include or be captured in conjunction with position data as described herein.

At operation 1606, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive, based on the captured camera data, at least one indication associated with an interference object set. In at least one embodiment, the interference object set comprises at least one interference object, including, but not limited to, one or more of physical structures, furniture, objects, walls, doors, signal interferers, and/or the like that negatively impacts the network strength associated with one or more network access point(s) at a particular position. In some embodiments, the apparatus(es) 200 receive one or more of the at least one indication of an interference object in response to user interaction with the user device 102 (e.g., a touch screen display of the user device). The interference objects may be mapped and identified visually via the camera circuitry with or without user interaction in substantially the same manner as the networked devices and/or network access devices discussed herein. For example, in some such embodiments, the user device receives at least one indication in response to user interaction with a particular user interface element rendered to an augmented reality interface, where the particular user interface element is configured to indicate the existence of an interference object at a position in response to the user interaction with the user device. For example, in some embodiments, the user positions the user device 102 in a manner such that the camera circuitry is positioned with a virtual reticle object positioned at the location of the interference object in the augmented reality environment when the user performs the user interaction indicating existence of the interference object. In some embodiments, the apparatus(es) 200 (e.g., the user device 102) receive at least one indication automatically in response to processing the captured camera data. For example, in some embodiments, the process may utilize a trained machine learning model, statistical model, and/or algorithmic model to process the captured camera data and identify one or more interference object(s) represented therein. In one or more embodiments, the process includes performing one or more image processing algorithms to automatically identify one or more interference object(s) in the camera data and/or a particular portion thereof (e.g., a particular frame of the camera data, a particular captured image data object from a set, and/or the like). Models may be trained for each of a plurality of different interference objects. In some such embodiments, the indication is generated in response to successfully automatically identifying an interference object represented within the camera data.

In one or more embodiments, the apparatus(es) 200 (e.g., embodied as the user device 102, AR processing server 104, and/or electronic support platform 106) map an interference object associated with a received indication to a particular position in the augmented reality environment. For example, in some embodiments, process includes mapping the interference object to the current position of the user device and/or camera circuitry, for example as represented by mapping device position data associated with the user device 102. In some embodiments, the process includes mapping data embodying the interference object associated with interference position data based on the indication associated with the interference object. For example, in at least one embodiment, the process includes mapping data embodying the interference object to a position associated with a virtual reticle object when the indication associated with the interference object was received. In some embodiments, the process includes mapping data embodying the interference object to a position automatically determined by processing the camera data and/or a portion thereof. For example, in some embodiments, the process includes determining an offset between a position of the user device 102 and/or an associated camera circuitry (e.g., represented by mapping device position data maintained by the user device 102, and mapping data embodying the interference object to a position represented by data based on the position of user device and/or associated camera circuitry together with the offset, which may be calculated in accordance with any of the embodiments discussed herein.

At operation 1608, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to determine a diminished network strength position in the augmented reality environment based on at least one interference object of the interference object set and a network access device. In this regard, the process includes determining the network strength at the diminished network strength position for the particular network access device is negatively affected by the at least one interference object. In one or more embodiments, the diminished network strength position is associated with a first network strength data for the network access device. In some such embodiments, the apparatus(es) 200 determines the first network strength data for the network access device, such as where the first network strength data is determined for a position in the augmented reality environment utilizing one or more of the processes described herein. In some embodiments, the process includes receiving the first network strength data for the network access device, for example via the user device, a networked device, or another apparatus. In this regard, in some such embodiments, the process includes determining the diminished network strength position is negatively affected with by at least one interference object based on the mapped position of the at least one interference object and/or the position of the network access device. For example, in some embodiments, the process includes determining the diminished network strength position by determining one or more interference object(s) of the interference object set is/are mapped to a position between the network access device position associated with the network access device and the diminished network strength position (e.g., projecting the propagation path of the signal from the network access device and identifying lower signal in areas in the lee of the interference object). In some embodiments, the diminished network strength may be determined via empirical measurement (e.g., identifying areas with poor signal quality and determining if the poor signal quality is caused by the interference object(s) or by the inherent position of the networked and network access devices). In some embodiments, the diminished network strength may be determined by modeling the propagation of signal from the network access device relative to the interference objects on the premises. In some embodiments, the process may determine the shape, size, position, material, structure, and other properties of the interference object (e.g., via user input or image recognition) to determine the object's effect on the network access device signal.

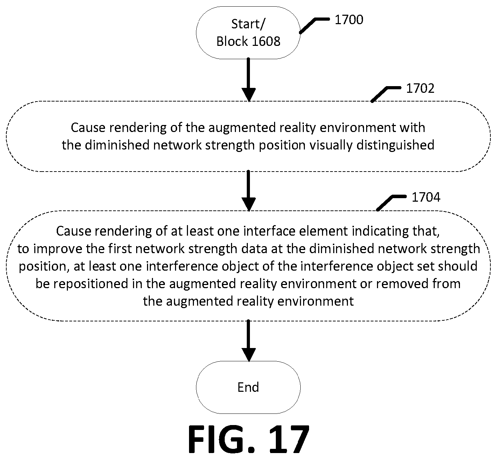

At operation 1610, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of data associated with the diminished network strength position to notify a user regarding the diminished network strength position. In at least one embodiment, the process includes rendering of the data described in any of the manners described herein, for example with respect to FIG. 17. In some embodiments, for example, the user device renders one or more interfaces including one or more interface element(s) on a local screen that inform the user that the diminished network strength position is negatively affected by one or more interference object(s). In one or more embodiments, the process includes rendering an augmented reality interface including one or more augmented reality object(s) to be rendered associated with the augmented reality environment. For example, in some embodiments, the augmented reality interface (e.g., presented on a display of the user device) renders the virtual object(s) associated with the diminished network strength position over real-world imagery at the diminished network strength position, where the virtual object(s) are specifically configured to represent a diminished network strength position. For example, in some embodiments, the virtual object comprises one or more visual properties (e.g., color, size, and/or the like) that specifically represents a diminished network strength position. In some embodiments, the apparatus(es) 200 (e.g., an AR processing server 104) transmit and/or causes transmission, to another apparatus 200 (e.g., a determined user device 102) associated with the apparatus(es) and/or an associated user, of one or more push notifications, email notifications, and/or other notifications external to a particular executable computer program utilized for network-centric augmented reality processing as described herein (e.g., a native software application or web application). In yet other embodiments, a particular image and/or other user interface element is rendered at the diminished network strength position that indicates the position as associated with diminished network strength caused, at least in part, by the at least one interference object. In some embodiments, any of a myriad of known algorithm(s) is/are utilized to determined a network strength at a particular position.

FIG. 17 illustrates operations of another example process for network-centric augmented reality processing in accordance with the present disclosure. For example, FIG. 17 depicts operations of an example process 1700 for causing rendering of data associated with a diminished network strength position to notify a user regarding the diminished network strength position, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1700, alone or in conjunction with any of the other processes described herein. As illustrated, the process 1700 may begin at operation 1702. The operation 1702 may begin after one or more operations of another process, for example after the operation 1608 of the process 1600 as illustrated. Similarly, upon completion of the process 1700, flow may end or proceed to one or more operations of another process described herein.

At optional operation 1702, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of the augmented reality environment with the diminished network strength position visually distinguished. In some such embodiments, the process includes generating and/or otherwise positioning virtual objects that indicate, represent, and/or otherwise notify the user of diminished network strength at the diminished network strength position. For example, in some embodiments the process includes rendering virtual objects visually configured utilizing color, shape, size, and/or another visual property of each virtual object to indicate the network strength associated with network strength data at each position. In some such embodiments, the process includes utilizing a predetermined visual property to indicate one or more diminished network strength position(s), for example by rendering the augmented reality environment with red colored objects (or another predetermined color at the diminished network strength position) that indicate the position is a diminished network strength position. It should be appreciated that, in some embodiments, the virtual object(s) utilized to visually distinguish the diminished network strength position include augmented virtual representation(s) of real-world imagery. For example, in some embodiments, the process includes augmenting a visual property of a real-world surface (e.g., generating an altered, virtual version of the floor of the premises being mapped) such that rendering of the augmented reality environment comprises a virtual representation of that surface as augmented. For example, in some embodiments, the process includes augmenting the color of the floor such that diminished network strength positions are rendered a different color (e.g., red) from other locations of the floor in the premises.

At optional operation 1704, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of at least one interface element indicating that to improve the first network strength data at the diminished network strength position, one or more actions are to be performed associated with the augmented reality environment and/or representations of objects therein. For example, in at least one embodiment, the user device renders one or more interface elements indicating that to improve the first network strength data at the diminished network strength position, at least one interference object of the interference object set (1) should be repositioned in the augmented reality environment or (2) should be removed from the augmented reality environment. In some such embodiments, the process includes identifying the interference object(s) negatively affecting the diminished network strength position according to any of the various embodiments discussed herein. Such interference objects may include interference objects between the position and a network access device, interference objects located near the position (e.g., in the circumstance of a signal interferer), and/or the like. The at least one interface element may include any of a myriad of interface element types. For example, in some embodiments, the process includes rendering of a virtual object positioned in the augmented reality environment, where the virtual object comprises interface sub-elements (e.g., text, image(s), and/or the like) that indicate an interference object should be repositioned, removed, and/or the like. In some such embodiments, such virtual object(s) are positioned within the augmented reality environment at the diminished network strength position, at the position of the at least one interference object(s) to be interacted with, and/or the like. In some embodiments, the process includes rendering of one or more interface elements for rendering over the representation of the augmented reality environment in an augmented reality interface. For example, in some embodiments, the process includes generating one or more static text element(s), image element(s), and/or the like, for rendering within an executed computer application executed on the user device and/or an associated display (e.g., a native application executed to provide the network-centric augmented reality processing described herein). In some embodiments, the process includes rendering of a push notification, email notification, popup window, and/or other interface that provides such instructions in image, text, and/or other format(s).

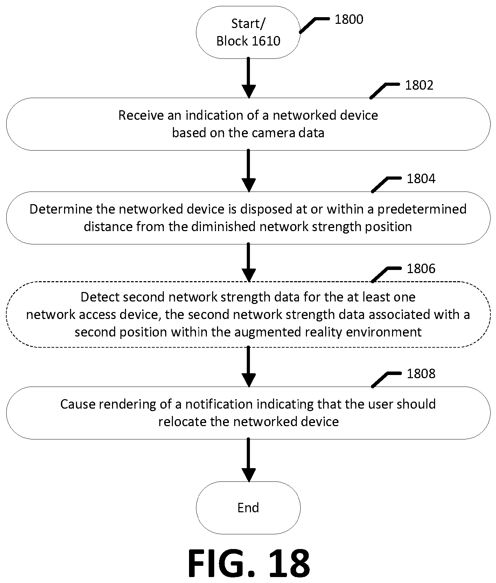

FIG. 18 illustrates operations of another example process for network-centric augmented reality processing in accordance with the present disclosure. For example, FIG. 18 depicts operations of an example process 1800 for providing notification(s) for networked device associated with diminished network strength, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1800, alone or in conjunction with any of the other processes described herein. As illustrated, the process 1800 may begin at operation 1802. The operation 1802 may begin after one or more operations of another process, for example after the operation 1610 of the process 1600 as illustrated. Similarly, upon completion of the process 1700, flow may end or proceed to one or more operations of another process described herein.

At operation 1802, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive an indication of a networked device based on the camera data. In some embodiments, for example as described herein, the indication of the networked device is received in response to user input data indicating existence of a networked device in the camera data or a portion of the camera data. In some embodiments, for example as described herein, the indication of the networked device is automatically received in response to processing the camera data to identify a representation of the networked device within the camera data or a portion thereof. In some such embodiments, the process utilizes one or more object detection model(s), image processing algorithm(s), and/or the like to identify the networked devices within the captured camera data. In some embodiments, it should be appreciated that the indication associated with the networked device may be received in association with a particular position in the augmented reality environment. For example, the indication is received associated with particular mapping device position data and/or a determined offset therefrom, or a position data representing the position of the networked device as indicated by the user (e.g., based on the position of a virtual reticle object when the indication of the networked device is received).

At operation 1804, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to determine the networked device is disposed at or within a predetermined distance from the diminished network strength position. In some embodiments, the predetermined distance is sufficiently small such that the networked devices are positioned as negatively affected by one or more interference object(s). For example, in some embodiments, the process includes performing one or more determinations based on a networked device position associated with the networked device and the diminished network strength position. In this regard, in some such embodiments, the process may use a predetermined threshold distance and/or relative positioning (e.g., in the lee of the interference object) to determine whether the networked device is sufficiently close to the diminished network strength position. In some embodiments, a diminished network strength may be determined by or at the location of (e.g., via user device) the networked device. In some such embodiments, networked device(s) that the apparatus(es) determines to be disposed at or within the predetermined distance from the diminished network strength position, the process associates such networked device(s) with data indicating the networked device has, or is likely associated with, diminished network strength based on the network device position data representing the position of the networked device in the augmented reality environment.

At optional operation 1806, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to detect second network strength data for at least one network access device, the second network strength data associated with a second position in the augmented reality environment. In some such embodiments, the second position in the augmented reality environment is distinct from the first position representing the diminished network strength position. In this regard, in some embodiments, the process includes detecting the second network strength data utilizing a network strength determination process, as described herein. In some such embodiments, the second network strength data represents a signal strength associated with the at least one network access device at the second position in the augmented reality environment. The process may utilize any of a myriad of network strength determination, location determination, and/or repositioning recommendation process(es) as described herein. In some such contexts, the second network strength data represents a superior signal strength than the first network strength data associated with the position represented by the diminished network position data.

At optional operation 1808, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of a notification indicating that the user should relocate the networked device. In some such embodiments, the notification includes one or more interface elements (e.g., presented via the user device) indicating to the user that the networked device should be repositioned from the diminished network strength position to the second position associated with the second network strength data. In this regard, the notification provides data utilized to improve the signal strength (e.g., the connection) between the networked device and the at least one network access device. In this regard, the process may include initiating appropriate actions for repositioning the networked device to a second position. In some such embodiments, for example where the second network strength data is determined at an earlier operation for a position having superior signal strength than the diminished network strength data, the process may include rendering of the notification including information indicating the networked device should be relocated to the second position in the augmented reality environment.

In some embodiments, the notification is rendered utilizing one or more virtual objects of the augmented reality environment. For example, in some such embodiments, the user device renders the notification embodied by one or more virtual objects including text, image(s), audio/video component(s), and/or the like to inform the user to relocate the networked device. Additionally or alternatively, in some embodiments, the notification is rendered as one or more virtual objects that indicates the networked device should be repositioned to the second position (e.g., by an arrow that embodies a path from the current networked device position associated with the networked device to a second position, for example associated with superior network strength data). It should be appreciated that, as described herein, the process includes rendering of a representation of the augmented reality environment comprising the notification in an augmented reality environment rendered to a display of or otherwise associated with the apparatus(es) 200 (e.g., the user device). In other embodiments, the process includes rendering one or more static interface elements together with and/or as a subcomponent of an augmented reality interface. For example, in some such embodiments, the process includes rendering on a display (e.g., the display of the user device) the notification as text, image, and/or other audio/video content that does not update in accordance with navigation through the augmented reality environment. In some embodiments, the process includes rendering the notification as a push notification, email, popup window, and/or other interface separate from a computer program utilized for performing various aspects of the network-centric augmented reality processing.

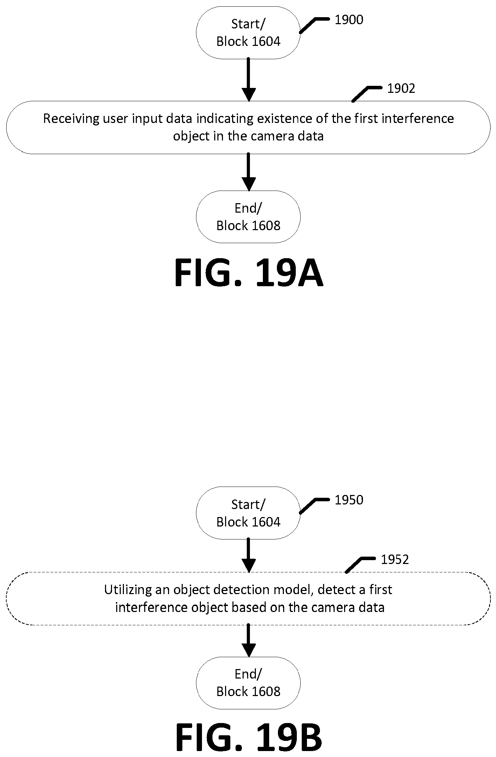

FIG. 19A illustrates operations of another example process for network-centric augmented reality processing in accordance with the present disclosure. For example, FIG. 19A depicts operations of an example process 1900 for receiving at least one indication associated with an interference object set, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1900, alone or in conjunction with any of the other processes described herein. As illustrated, the process 1900 may begin at operation 1902. The operation 1902 may begin after one or more operations of another process, for example after the operation 1604 of the process 1600 as illustrated. Similarly, upon completion of the process 1900, flow may end or proceed to one or more operations of another process described herein.

At operation 1902, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to utilize an object detection model to receive user input data indicating existence of the first interference object in the camera data. In one example context, the user provides such user input (e.g., via an input device associated with the user device, such as a touch screen) once the camera circuitry has been positioned to view a particular interference object in the premises. In this regard, the camera data includes a representation of the interference object within the view of the camera circuitry. In some such embodiments, the user input data may be received in association with a particular portion of the camera data. For example, where the camera data comprises real-time captured video data and/or a set of captured images, the user input data may indicate existence of the first interference object in a particular frame or image of the camera data or via a correlation of the time at which the input is received with the time at which the video and/or image(s) are captured. In some embodiments, the user input data comprises interaction with an augmented reality interface (e.g., via the user device), a particular user interface element within an augmented reality interface, a gesture, a voice command, and/or any other interaction described herein. For example, in one or more embodiments, an augmented reality interface may include a button specifically configured to indicate existence of an interference object in the camera data currently being rendered via the augmented reality interface.

FIG. 19B illustrates operations of another example process for network-centric augmented reality processing in accordance with the present disclosure. For example, FIG. 19B depicts operations of an example process 1950 for receiving at least one indication associated with an interference object set, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 1950, alone or in conjunction with any of the other processes described herein. As illustrated, the process 1950 may begin at operation 1952. The operation 1952 may begin after one or more operations of another process, for example after the operation 1604 of the process 1600 as illustrated. Similarly, upon completion of the process 1950, flow may end or proceed to one or more operations of another process described herein.

At operation 1952, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to utilize an object detection model to detect a first interference object based on the camera data. In some such embodiments, the object detection model is configured for detecting at least one interference object type. For example, in some embodiments, the object detection model is configured to detect captured representations within the camera data, or at least a portion thereof, at least one type of furniture object(s) (e.g., large furniture objects known to negatively impact or otherwise block wireless signals), a physical structure (e.g., a wall of the premises), and/or one or more other signal interferers (e.g., one or more known device types). In some such embodiments, the object detection model comprises one or more trained machine learning model(s), statistical model(s), and/or other algorithmic processing models. For example, in some embodiments, the process may include executing an object detection model that processes the camera data to identify the representation of the interference object therein based on one or more learned features of the interference object type. In some embodiments, the process may include detecting the first interference object from a particular portion of the camera data, such as a particular image(s), frame of the camera data, and/or a set of image data object(s) and/or frame(s) of the camera data. It should be appreciated that, in some such embodiments, the first interference object may be automatically detected in the camera data and mapped without user input.

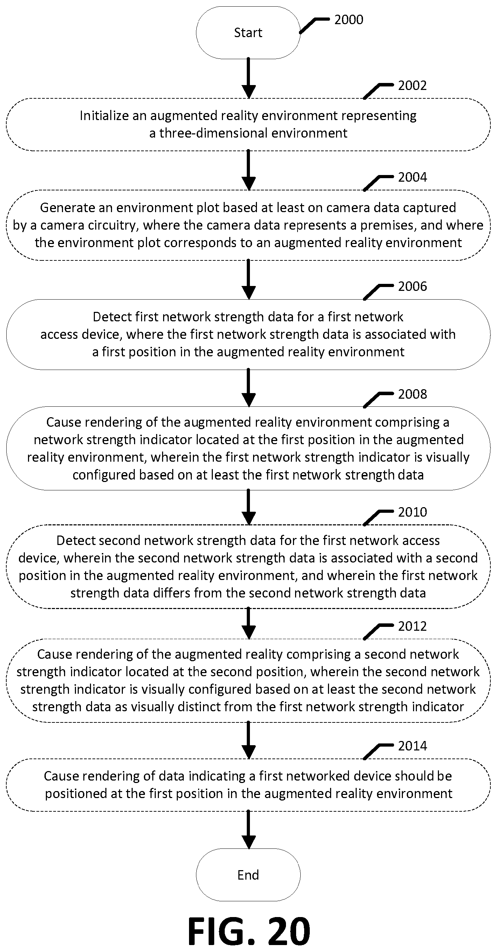

FIG. 20 illustrates operations of another example process for network-centric augmented reality processing in accordance with the present disclosure. For example, FIG. 20 depicts operations of an example process 2000 for causing rendering of at least one indicator associated with network strength data at one or more positions in an augmented reality environment, in accordance with one or more embodiments of the present disclosure. For example, in some embodiments, the apparatus(es) 200 are configured to perform the operations of the process 2000, alone or in conjunction with any of the other processes described herein. As illustrated, the process 2000 may begin at optional operation 2002. The operation 2002 may begin after one or more operations of another process. Similarly, upon completion of the process 2000, flow may proceed to one or more operations of another process. In this regard, it should be appreciated that in some embodiments, the apparatus(es) 200 are configured for performing the process 2000 and any other of the one or more processes described herein.

At optional operation 2002, the apparatus(es) 200 include means, such as the network-centric AR processing circuitry 210, input/output circuitry 206, communications circuitry 208, processor 202, and/or the like, to initialize an augmented reality environment representing a three-dimensional environment. In some embodiments, a three-dimensional example augmented reality environment may be initialized, mapped, and operated substantially the same as any two-dimensional embodiment discussed herein, with the addition of a vertical component to the position data for at least a portion of the aforementioned datasets. For example, the augmented reality environment may be initialized in the manner described with respect to any of the other processes described herein. In some embodiments, the camera circuitry may be configured to capture camera data including representations of a flat surface (e.g., a floor of a premises) that is utilized to establish an origin point and/or a two-dimensional or three-dimensional coordinate plane for placing virtual objects. The origin point established during initialization to track data embodying the position of the user device 102 as it is traversed and/or otherwise navigates through the premises. For example, in some embodiments, one or more sensors (e.g., a gyroscope, accelerometer, GPS circuitry, signal triangulation circuitry, and/or a combination thereof) may be disposed in or otherwise associated with the user device to determine an offset between the initialized origin point and the current position of the user device to generate mapping device position data representing the current position of the user device.

At optional operation 2004, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to generate an environment plot based at least on camera data captured by camera circuitry. It should be appreciated that the environment plot may be generated in any of the myriad of manners described herein. For example, in one or more embodiments, the environment plot is generated based on a set of plot corners indicated as within the camera data. In some such embodiments, the environment plot is generated to comprise and/or otherwise be associated with a coordinate system that is equivalent to a coordinate system maintained associated with the augmented reality environment. As such, data mapped to a particular position is accurately represented within the environment plot and/or augmented reality environment. In other embodiments, the environment plot is configured to be stored, for example by the user device 102 and/or an associated central server (such as an AR processing server 104), and/or further processed for performing one or more additional operations described herein. In some embodiments, the corners of a three-dimensional augmented reality environment and/or environment plot may be mapped based on a plot of only the floor corners (e.g., a two-dimensional corner map upon which three dimensional objects, networked devices, network access devices, and the like are mapped, with optional assumptions about wall and/or ceiling positions). In some embodiments, the corner mapping may further comprise mapping ceiling corners and/or edges of wall surfaces at positions between the floor and ceiling.

At operation 2006, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to detect first network strength data for a first network access device. In some such embodiments, the first network strength data is associated with a first position in the augmented reality environment. For example, as described herein, the first network strength data may be mapped to particular position data that represents the first position in the augmented reality environment where the network strength determination process resulting in the first network strength data was performed. In this regard, the first network strength data may represent the network strength associated with the first network access device at the first position in the augmented reality environment. It should be appreciated, as described herein, that in some embodiments the process utilizes any of a myriad of network strength determination process(es) to detect the first network strength data for the first network access device and associated with the first position. In some embodiments, the process utilizes received signal strength indication methodologies as the network strength determination process. For example, in some embodiments, the apparatus(es) 200 determine the timestamp for a received message in comparison with an expected timestamp for the message. In other embodiments, the apparatus(es) 200 utilize one or more other known processes for determining the first network strength, such as the embodiments described herein, for example, including empirical and/or theoretical signal strength determinations. The value of the first network strength data may be based on and influenced by any of a myriad of factors. For example, in some embodiments, the value of the first network strength data is based on one or more of the distance between the network access device and the first mapping device position data, at least one interference object positioned within the augmented reality environment, and/or the layout of the premises.

At operation 2008, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of the augmented reality environment comprising a network strength indicator located at the first position in the augmented reality environment. In some embodiments, the network strength indicator is visually configured based on at least the first network strength data. In some such embodiments, the process includes generating the network strength indicator and/or otherwise configuring the network strength indicator that may be visualized in the augmented reality interface, such that one or more visual properties of the network strength indicator may be intuitively displayed based on at least the first network strength data. For example, in one or more embodiments, the augmented reality interface may increase the size of the network strength indicator to indicate a high value for network strength data representing better signal strength (e.g., and decreases the size as the network strength data represents worse signal strength). In some embodiments, the augmented reality interface configures the color, text, and/or image of the network strength indicator based on the first network strength data. For example, in some embodiments, in a circumstance where the first network strength data represents a strong connection, the network strength indicator is rendered as a first color (e.g., blue), and in a circumstance where the first network strength data represents a poor connection, the network strength indicator is rendered as a second color (e.g., red), with intermediate strength levels associated with various other colors or a color interpolated between the first and second color.

At optional operation 2010, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to detect second network strength data for the first network access device. In some such embodiments, the second network strength data is associated with a second position in the augmented reality environment. For example, in some embodiments, the user device may be navigated and/or otherwise traversed to a new position in the augmented reality environment to detect the network strength data associated with that new position. In some such embodiments, the second position is represented by second mapping device position data received and/or otherwise detected by the user device and/or one or more networked devices or network access devices as representing the second position in the augmented reality environment. Additionally or alternatively, in some example contexts, the second network strength data associated with the second position represents a different network strength (e.g., a stronger or weaker signal strength) than the first network strength data for the first position. In other example contexts, the second network strength data associated with the second position represents the same network strength as the first network strength data.

At optional operation 2012, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of the augmented reality comprising a second network strength indicator located at the second position. In some such embodiments, the second network strength indicator is visually configured based on at least the second strength data to be visually distinct from the first network strength indicator. In this regard, in some such embodiments, the augmented reality interface may generate the second network strength indicator and/or otherwise configures the second network strength indicator such that one or more visual properties of the second network strength indicator is configured based on at least the second network strength data. For example, in one or more embodiments, the augmented reality interface may be configured to show the same visual property of the second network strength indicator as for the first visual property, such that the same visual property is configured for the second network strength indicator to a second value based on the second network strength data. For example, in one or more embodiments, the second network strength indicator is configured such that the first color of the first network strength indicator is different than a second color for the second network strength indicator. In some embodiments, the augmented reality interface generates and/or otherwise configures the second network strength indicator such that a different property of the second network strength indicator is visually distinguished from the first network strength indicator.

At optional operation 2014, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of data indicating a first networked device should be positioned at the first position (e.g., a preferred position) in the augmented reality environment. In some such embodiments, the apparatus(es) 200 causes such rendering (e.g., via a display of the user device 102) in response to determining the first position is associated with the best network strength data of all positions for which network strength data was determined (e.g., the position associated with the best network strength data of all tested positions). This process may occur as described herein with respect to determining preferred network device position data. In some such embodiments, the augmented reality interface updates the rendered data indicating the position where the first networked device should be positioned as subsequent positions in the augmented reality environment are tested to determine network strength data. In some such embodiments, the data may be rendered together with or otherwise as part of a rendered network strength indicator associated with the first position where the networked device should be positioned. For example, in some embodiments, the apparatus(es) 200 cause rendering (e.g., via the augmented reality interface displayed on the user device 102) of text data, image data, other audio/video data, and/or the like together with the network strength indicator at the first position indicating the first networked device should be positioned at the first position. Alternatively or additionally, in some embodiments, the augmented reality interface adjusts one or more visual properties of a network strength indicator at the first position such that the network strength indicator indicates the first networked device should be positioned at the position associated with the network strength indicator. For example, in some embodiments the augmented reality interface configures the network strength indicator at the first position to be rendered based on a predefined color, including a predefined message (e.g., "place device here"), or the like, in such circumstances where the first networked device should be positioned at the corresponding first position.

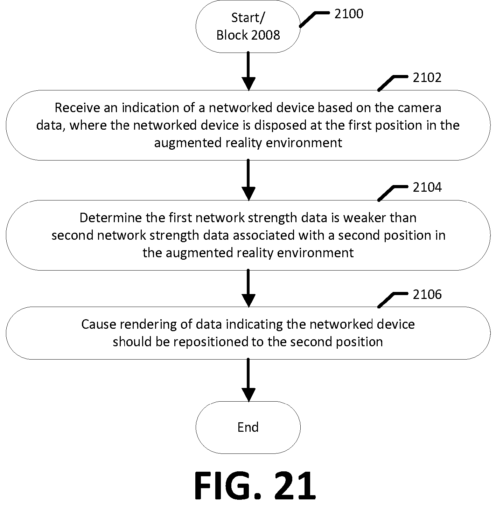

FIG. 21 illustrates operations of another example process for network-centric augmented reality processing in accordance with the present disclosure. For example, FIG. 21 depicts operations of an example process 2100 for rendering data for networked device repositioning in accordance with one or more embodiments of the present disclosure. For example, in some embodiments, the apparatus(es) 200 (e.g., embodied as the user device 102, AR processing server 104, and/or electronic support platform 106) are configured to perform the operations of the process 2100, alone or in conjunction with any of the other processes described herein. As illustrated, the process 2100 may begin at operation 2102. The operation 2102 may begin after one or more operations of another process, for example after the operation 2008 of the process 2000 as illustrated. Similarly, upon completion of the process 2100, flow may end or proceed to one or more operations of another process described herein.

At operation 2102, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive an indication of a networked device based on the camera data, wherein the networked device is disposed at the first position in the augmented reality environment. In some embodiments, the indication of a networked device is received in response to user input. For example, in one or more embodiments, the process may include providing and/or otherwise causing rendering of an augmented reality interface that includes an interface element for indicating existence of a networked device in captured camera data. A user may interact with the interface element (e.g., via touch screen of the user device or any other input technique) to cause the indication of the networked device. In one example embodiment, the user interacts with a button rendered by the user device as part of an augmented reality interface to indicate the camera data currently rendered to the augmented reality interface comprises a representation of a networked device. In other embodiments, the indication of a networked device may be generated by analyzing camera data utilizing one or more specially trained model(s). For example, in one or more embodiments, the apparatus(es) 200 utilize a specially trained object detection model operated on any computing device in the system (e.g., one or more of the user device 102, AR processing server 104, and/or electronic support platform 106) to automatically receive the indication of the networked device by processing the camera data. In some embodiments, the trained object detection model comprises one or more trained machine learning, algorithmic, and/or statistical model configured to identify one or more network device type(s) from camera data or a portion thereof in accordance with any of the embodiments discussed herein. For example, in some such embodiments, the process includes inputting camera data into the trained object detection model such that the trained object detection model identifies representations of the network device type(s) within the camera data, a particular frame or image thereof, or the like, for one or more networked device type(s) that the model is trained to identify (e.g., a classification of a general category of devices and/or an identification of a specific make and/or model). In some embodiments, it should be appreciated that a plurality of trained models is utilized to receive indications of various different types of networked devices. For example, a first trained object detection model may be trained to indicate existence of a first networked device type within the camera data (e.g., smart television) and a second trained object detection model may be trained to indicate existence of a second networked device type within the camera data (e.g., personal computer). Non-limiting examples of a trained object detection model include a deep learning model, a recurrent neural network, a convolutional neural network, an auto-encoder, and/or another machine learning or AI model trained based at least in part on a set of training data.

In some such embodiments, the indication of the networked device is associated with networked device position data representing the first position of the networked device within the augmented reality environment. In one or more embodiments, the first position is associated with (e.g., the same as or calculated from) the mapping device position data for the mapping device (e.g., the user device). For example, in some embodiments, process associates one or more data object(s) corresponding to the networked device with networked device position data representing the current mapping device position and/or a defined offset therefrom (e.g., representing the position of a virtual reticle object in the augmented reality environment as described herein). In some embodiments, process includes processing the camera data to determine the first position at which the networked device is disposed. For example, in one or more embodiments, the camera data is processed (e.g., via the apparatus(es), including a user device, AR processing server, and/or another device) utilizing one or more image processing algorithm(s) to identify a distance between the representation of the networked device and the user device or another known position in the augmented reality environment (e.g., one or more fiducials identified in the environment).

At operation 2104, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to determine the first network strength data is weaker than second network strength data associated with a second position in the augmented reality environment. In some such embodiments, process includes determining the second network strength data at a second position after traversing to the second position in the augmented reality environment. In this regard, in some such embodiments, the second network strength data is associated with second position data representing the second position in the augmented reality environment. The process may use one or more comparison algorithms to determine whether the first or second network strength data is superior (or weaker). For example, in some embodiments, process includes comparing the value represented by the first network strength data to the value represented by the second network strength data to determine which value is lower and/or otherwise represents a weaker signal strength. For example, in some embodiments, the lower value represents the weaker network strength data. In other embodiments, a higher value represents the weaker network strength data (e.g., where the network strength data represents response time for one or more message(s)).

At operation 2106, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of data indicating the networked device should be repositioned to the second position. In some embodiments, the process includes rendering of an augmented reality interface comprising one or more static interface elements (e.g., text label(s)) that indicate the networked device should be repositioned to the second position. In some such embodiments, the user device renders one or more notifications, popup window(s), and/or other notifications that instruct a user and/or otherwise indicate the networked device should be repositioned to the second position. Additionally or alternatively, in some embodiments, the user device renders one or more virtual object(s) indicating the networked device should be repositioned to the second position. For example, in one or more embodiments, the user device presents a virtual object (e.g., an arrow, text element, and/or the like) associated with position data representing the second position. In some such embodiments, the virtual object comprises and/or otherwise is associated with visual properties, text, and/or other elements that indicate the networked device should be repositioned to the position of the virtual object.

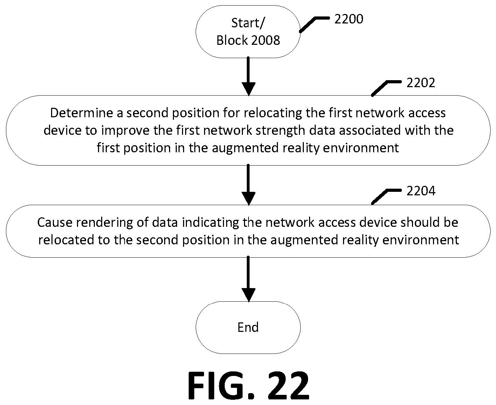

FIG. 22 illustrates operations of another example process for network-centric augmented reality processing in accordance with the present disclosure. For example, FIG. 22 depicts operations of an example process 2200 for rendering data for network access device repositioning in accordance with one or more embodiments of the present disclosure. For example, in some embodiments, the apparatus(es) 200 (e.g., embodied as the user device 102, AR processing server 104, and/or electronic support platform 106) are configured to perform the operations of the process 2200, alone or in conjunction with any of the other processes described herein. As illustrated, the process 2200 may begin at operation 2202. The operation 2202 may begin after one or more operations of another process, for example after the operation 2008 of the process 2000 as illustrated. Similarly, upon completion of the process 2200, flow may end or proceed to one or more operations of another process described herein.

At operation 2202, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to determine a second position for relocating the first network access device to improve the first network strength data associated with the first position in the augmented reality environment. In one or more embodiments, for example, the process may include determining a second position that has less interference object(s) between the second position and the first position within the augmented reality environment (e.g., via comparison of linear paths between devices in the augmented reality environment). Additionally or alternatively, in some embodiments, the process may include determining a second position that minimizes the distance to the first position associated with the first network strength data, and/or to each of the positions for the networked devices in the premises. Alternatively or additionally, in some embodiments, a second position may be determined that is further away from one or more particular interference object(s) (e.g., further from a signal interferer) near the first network access device.

At operation 2204, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of data indicating the network access device should be relocated to the second position in the augmented reality environment. In some embodiments, the user device may render an augmented reality interface comprising one or more static interface elements (e.g., text label(s)) that indicate the network access device should be repositioned to the second position. In some such embodiments, the process may include rendering one or more notifications, popup window(s), and/or other notifications that instruct a user and/or otherwise indicate the network access device should be repositioned to the second position. Additionally or alternatively, in some embodiments, the process may include rendering of one or more virtual object(s) indicating the network access device should be repositioned to the second position. For example, in one or more embodiments, the user device may present a virtual object (e.g., an arrow, text element, and/or the like) associated with position data representing the second position. In some such embodiments, the virtual object comprises and/or otherwise is associated with visual properties, text, and/or other elements that indicate the network access device should be repositioned to the position of the virtual object.

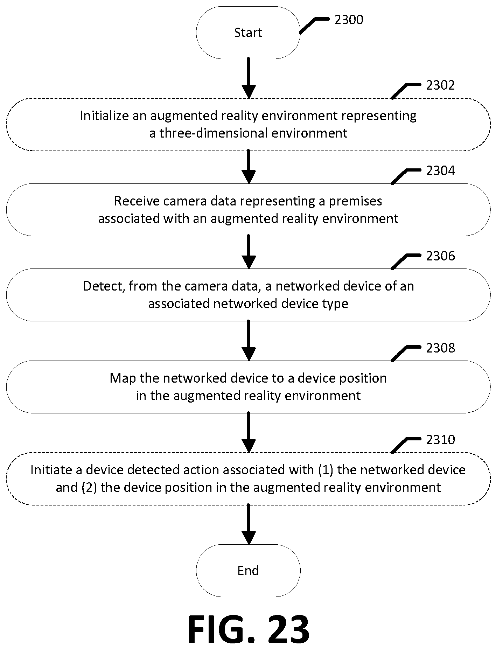

FIG. 23 illustrates operations of another example process for network-centric augmented reality processing in accordance with the present disclosure. For example, FIG. 23 depicts operations of an example process 2300 for causing rendering of at least one indicator associated with network strength data at one or more positions in an augmented reality environment, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 2300, alone or in conjunction with any of the other processes described herein. As illustrated, the process 2300 may begin at optional operation 2302. The operation 2302 may begin after one or more operations of another process. Similarly, upon completion of the process 2300, flow may proceed to one or more operations of another process. In this regard, it should be appreciated that in some embodiments, the apparatus 200(es) are configured for performing the process 2300 and any other of the one or more processes described herein.

At optional operation 2302, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to initialize an augmented reality environment representing a three-dimensional environment. For example, the augmented reality environment may be initialized in the manner described with respect to any of the other processes described herein. In some such embodiments, the camera data represents a premises. Additionally or alternatively, in some embodiments, the environment plot corresponds to an augmented reality environment. For example, the camera circuitry may capture camera data including representations of a flat surface (e.g., a floor of a premises) that is utilized to establish an origin point and/or a two-dimensional or three-dimensional coordinate plane for placing virtual objects. The process may use the origin point established during initialization to track data embodying the position of the user device as it is traversed and/or otherwise navigates through the premises. For example, in some embodiments, one or more sensors (e.g., a gyroscope, accelerometer, GPS circuitry, signal triangulation circuitry, and/or a combination thereof, which may be housed in or otherwise associated with the user device) may be used determine an offset between the initialized origin point and the current position of the user device to generate mapping device position data representing the current position of the user device.

At operation 2110, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive camera data representing a premises associated with an augmented reality environment. In this regard, the camera data embodies and/or otherwise represents real-world imagery. In some such embodiments, the user device, AR processing server, and/or another device (e.g., any apparatus 200) the camera data from an external device, peripheral, or other computing entity, such as an associated server and/or the like. In other embodiments, the camera data may be captured utilizing camera circuitry included in and/or otherwise associated with the user device and/or another device (e.g., a peripheral). In this regard, the user of the camera circuitry may orient the camera circuitry such that data representing a specific portion of the environment around the camera circuitry is captured for processing. In this regard, in some such embodiments, the captured camera data is maintained such that it is processable and/or may be utilized for rendering one or more augmented reality interface(s) having real-world imagery augmented by virtual objects generated associated with the augmented reality environment. In some embodiments, the camera data comprises real-time video stream data. In other embodiments, the camera data comprises a set of image data objects captured in real-time, sequentially, and/or the like. In other embodiments, the camera data comprises a single captured image data object captured via an associated camera circuitry.

At operation 2114, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to detect, from the camera data, a networked device of an associated networked device type. In some embodiments, the process may utilize one or more trained models for detecting the networked device from the camera data, and/or the associated networked device type. For example, in one or more embodiments, process utilizes one or more trained machine learning model(s), algorithmic model(s), and/or statistical model(s), that detect one or more networked device(s) represented in the camera data or a portion thereof, and/or the associated networked device type. In this regard, in some such embodiments, the process is configured to automatically detect the networked device and/or associated networked device type in the camera data. Additionally or alternatively, in one or more embodiments, the user device causes rendering of one or more interface element(s) for indicating a networked device is within camera data. For example, in some embodiments, user device causes rendering of an augmented reality interface comprising one or more interface element(s) for indicating a networked device is within camera data rendered via the augmented reality interface. In some such embodiments, in response to the received indication, the apparatus(es) process the camera data and/or a portion thereof to detect the networked device and/or associated networked device type from within the camera data or particular portion thereof. For example, in an example circumstance where the camera data comprises real-time video data utilized for maintaining the augmented reality environment, in some embodiments the apparatus(es) 200 (e.g., embodied as the user device 102, AR processing server 104, and/or electronic support platform 106) processes a particular frame from the camera data (e.g., a frame that was rendered to an augmented reality interface when an indication was received that the camera data includes existence of a networked device).

At operation 2308, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to map the networked device to a device position in the augmented reality environment. In some embodiments, the process includes mapping data corresponding to or otherwise embodying the networked device to device position data represented by device mapping position data. In this regard, the networked device location may represent the current position of the user device. In some embodiments, process includes determining an offset between the user device and/or camera circuitry and a position to be mapped to associated with the networked device in the augmented reality environment. For example, in some embodiments, the process includes determining a position associated with a virtual object in the augmented reality environment, such as a virtual reticle object, and maps the networked device to a networked device position representing the position of the virtual object. In some embodiments, the process includes determining an offset between the user device and/or camera circuitry and the networked device based on processing the representation of the networked device in the camera data, and maps the networked device to the networked device position based on the mapping device position data associated with the user device 102 and the determined offset.

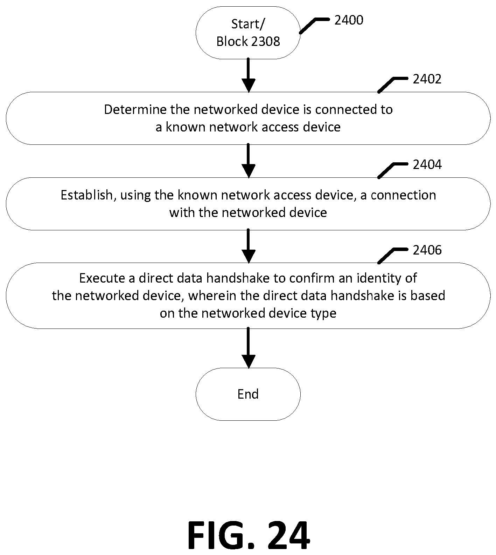

At optional operation 2310, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to initiate a device detected action associated with (1) the networked device and (2) the device position in the augmented reality environment. In one or more embodiments, the apparatus(es) 200 (e.g., embodied as the user device 102, AR processing server 104, and/or electronic support platform 106) is configured to initiate any of a number of device detected action(s). For example, in some embodiments, the apparatus(es) are configured to initiate one or more data transmissions to the detected networked device and/or an associated network. Additionally or alternatively, in some embodiments, the process includes initiating one or more actions to identify the detected networked device. Additionally or alternatively, in some embodiments, the process includes initiating one or more actions associated with grouping one or more networked device(s). Additionally or alternatively, in some embodiments, process includes initiating one or more actions associated with servicing the networked device and/or an associated network (e.g., via an associated network access device). It should be appreciated that the apparatus(es) 200 (e.g., embodied as the user device 102, AR processing server 104, and/or electronic support platform 106) may be configured to perform any combination of the device detected actions described herein either alone or in combination with other apparatuses, and whether processed locally or remotely from the premises. Non-limiting examples of device detected actions are described herein with respect to FIGS. 24, 25, 26A, 26B, and 27 herein.

FIG. 24 illustrates operations of another example process for network-centric augmented reality processing in accordance with the present disclosure. For example, FIG. 24 depicts operations of an example process 2400 for performing a direct data handshake as a device detected action, in accordance with one or more embodiments of the present disclosure. For example, in some embodiments, the apparatus(es) 200 (e.g., embodied as the user device 102, AR processing server 104, and/or electronic support platform 106) is configured to perform the operations of the process 2400, alone or in conjunction with any of the other processes described herein. As illustrated, the process 2400 may begin at operation 2402. The operation 2402 may begin after one or more operations of another process, for example after the operation 2308 of the process 2300 as illustrated. Similarly, upon completion of the process 2400, flow may end or proceed to one or more operations of another process described herein.

At operation 2402, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to determine the networked device is connected to a known network access device. In some such embodiments, the known access device embodies a network access device associated with a network with which the user device and/or any other remote or local apparatus(es) associated with the processes disclosed herein is enabled for communication. For example, in one or more example embodiments, the user device 102 may be communicable with a wireless network (e.g., a Wi-Fi network) via a router with which the networked device is also connected. In some such embodiments, the user device and/or any other associated apparatus polls for networked devices over one or more known network(s) with which the apparatus(es) are communicable to determine networked devices on said network(s). In some such embodiments, apparatuses communicate over the network with the known access device and/or the networked device(s) associated with the network to determine the networked device types of said network device(s) on the network.

At operation 2404, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to establish a connection with the networked device. In some such embodiments, the user device and/or other associated apparatus establishes the connection with the networked device using the known network access device. For example, in some embodiments, the user device communicates with the known network access device to query for networked devices connected to a network with which the user device is configured to communicate. In some such embodiments, the user device specifically queries for networked devices of a particular device type, for example the networked device type earlier determined for the networked device based on the camera data. To establish the connection, in some embodiments, the known network access device provides network device identifier information and/or other information utilized to address transmissions from the user device and/or other associated apparatus to the networked device(s) that meet the query for networked devices performed by such apparatus. For example, in some embodiments where the user device and/or other associated apparatus queries the known network access device for networked devices of a particular networked device type that are communicable via a particular known network with which the user device and/or other associated apparatus is similarly configured to communicate, the respective apparatus receives as a response from the known network access device sufficient networked device identification information and establishes a connection with each networked device that sufficiently meets the query such that subsequently the user device and/or other associated apparatus is configured for transmitting data to any combination of the networked device(s) that met the query parameters.

At operation 2406, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to execute a direct data handshake to confirm an identity of the networked device. In some such embodiments, for example, the user device and/or other associated apparatus transmits one or more requests for networked device identification information to the networked device. In some such embodiments, the respective apparatus receives networked device identification data in response, where the networked device identification data is sufficient to verify the identity of the networked device. In some embodiments, the direct data handshake is based on the networked device type. For example, in one or more embodiments, the user device and/or other associated apparatus transmits one or more data requests to the networked device via the known network access device and processes the response data to verify the data received from the networked device. Alternatively or additionally, in some embodiments, the networked device identification information received from a particular networked device as sufficient to verify the identity of the networked device is dependent on the networked device type.

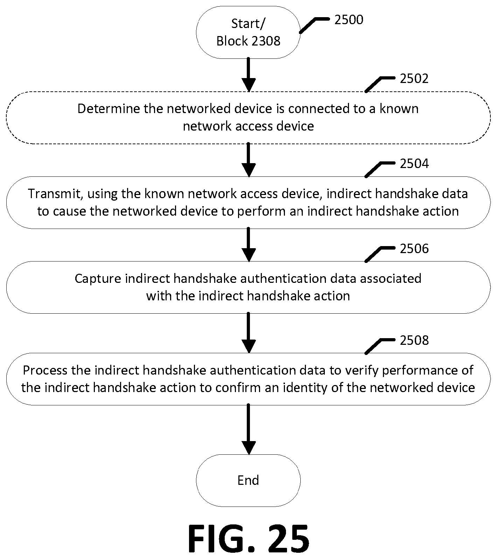

FIG. 25 illustrates operations of another example process for network-centric augmented reality processing in accordance with the present disclosure. For example, FIG. 25 depicts operations of an example process 2500 for performing an indirect handshake as a device detected action, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 2500, alone or in conjunction with any of the other processes described herein. As illustrated, the process 2500 may begin at operation 2502. The operation 2502 may begin after one or more operations of another process, for example after the operation 2308 of the process 2300 as illustrated. Similarly, upon completion of the process 2500, flow may end or proceed to one or more operations of another process described herein.

At operation 2502, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to determine the networked device is connected to a known network access device. In some such embodiments, the known access device embodies a network access device associated with a network with which the user device and/or other associated apparatus is enabled for communication. For example, in one or more example embodiments, the user device and/or other associated apparatus is communicable with a wireless network (e.g., a Wi-Fi network) via a router with which the networked device is also connected. In some such embodiments, the user device and/or other associated apparatus polls for networked devices over one or more known network(s) with which the user device and/or other associated apparatus is communicable to determine networked devices on said network(s). In some such embodiments, the user device and/or other associated apparatus communicates over the network with the known access device and/or the networked device(s) associated with the network to determine the networked device types of said network device(s) on the network.

At operation 2504, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to transmit, using the known network access device, indirect handshake data to cause the networked device to perform an indirect handshake action. In some such embodiments, the user device and/or other associated apparatus transmits the indirect handshake data embodying instructions to initiate the indirect handshake action to the known network access device for forwarding to the networked device. In one or more embodiments, the indirect handshake data embodies a visual handshake action. For example, in one or more embodiments, the user device and/or other associated apparatus generates and/or transmits the indirect handshake data embodying instructions for the networked device to cause the networked device to perform one or more actions resulting in visual effects capturable by the user device and/or other associated apparatus (e.g., via the camera circuitry). For example, in an example context where the networked device comprises a smart bulb, the user device and/or other associated apparatus transmits visual handshake data to the known access device that comprises instructions for the network device to turn on, and/or turn on and off at a known rate, pattern, and/or the like. In another context, for example in circumstances where the network device type associated with the networked device is determined to represent a smart television, the user device and/or other associated apparatus transmits visual handshake data to the known network access device that comprises instructions for the network device to turn on, activate, and/or otherwise display specific imagery (e.g., a code, a machine-readable indicia such as a QR code, barcode, or other symbology, or a predetermined image). In some such embodiments, the visual effect generated by the networked device is capturable for processing. It should be appreciated that the user device and/or other associated apparatus may initiate any of a myriad of types of visual handshakes.

Additionally or alternatively, in other embodiments, the user device and/or other associated apparatus transmits indirect handshake data embodying instructions for the networked device to generate auditory data for processing as part of an indirect handshake action. For example, in one or more embodiments, the user device and/or other associated apparatus transmits instructions to cause the networked device to begin emitting a particular auditory frequency, sequence, and/or the like. In some such contexts, the auditory data is predetermined and/or determinable to be processed based on one or more auditory data processing algorithms as described herein. It should be appreciated that in some embodiments, a combination of auditory data and visual data may be generated as part of an indirect handshake action.

At operation 2506, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to capture indirect handshake authentication data associated with the indirect handshake action. In some embodiments, the indirect handshake authentication data comprises second camera data captured subsequent to initiation of the indirect handshake data. For example, in some embodiments, the user device and/or other associated apparatus captures camera data utilizing a camera circuitry upon transmitting the indirect handshake data for further processing, such as to determine whether the indirect handshake action has successfully been performed. In other embodiments, the user device and/or other associated apparatus receives the second camera data captured from an associated device, peripheral, and/or the like external to the user device and/or other associated apparatus (e.g., an external camera circuitry) for further processing. In this regard, in some such embodiments, the indirect handshake authentication data comprises data representations of real-world imagery around the user device and/or other associated apparatus and/or an associated device.

Additionally or alternatively, in some embodiments, the indirect handshake authentication data comprises auditory data captured subsequent to initiation of the indirect handshake action. For example, in some embodiments, the apparatus captures auditory data utilizing at least one microphone (e.g., a microphone of the user device) upon transmitting the indirect handshake data for further processing, such as to determine whether the indirect handshake action has successfully been performed. In other embodiments, the user device and/or other associated apparatus receives the auditory data captured from an associated device, peripheral, and/or the like external to the user device (e.g., an external microphone) for further processing. In this regard, in some such embodiments, the indirect handshake authentication data comprises data representing the real-world sounds occurring around the user device and/or other associated apparatus. It should be appreciated that in some contexts, captured indirect handshake authentication data comprises both camera data and auditory data for processing.

At operation 2508, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to process the indirect handshake authentication data to verify performance of the action. In some such embodiments, the verified performance of the indirect handshake action confirms an identity of the networked device. For example, in a circumstance where the user device and/or other associated apparatus transmitted indirect handshake data to a networked device associated with particular device identification data, and the indirect handshake action is verified as successfully performed, the identity of the networked device is confirmed as associated with the device identification data. In this regard, the user device and/or other associated apparatus may associate the networked device with such device identification data, and/or may utilize the device identification data to determine, identify, and/or otherwise retrieve other data associated with the networked device.

Upon successful execution and verification of the indirect handshake action, in some embodiments, the user device and/or other associated apparatus stores information about the networked device and/or data indicating the identity of the networked device has been verified. For example, in some embodiments, the user device and/or other associated apparatus stores device identification information associated with the networked device in a data object embodying the networked device. Additionally or alternatively, in some such embodiments, the data object(s) representing the networked device include and/or are stored associated with device positioning data representing the position of the networked device in the augmented reality environment. In this regard, an environment plot may be generated and/or updated to include sufficient data indicating the verified identity of the networked device together with the position associated with said networked device.

In some embodiments, the subsequently captured camera data may be processed using one or more image processing algorithms, machine learning model(s), algorithmic model(s), and/or the like, to determine whether the camera data indicates the indirect handshake action being performed. For example, in some embodiments, the process utilizes one or more image processing algorithm(s) to determine from the camera data whether one or more visual effect(s) is being produced.

In some such embodiments, the user device and/or other associated apparatus captures auditory data, for example utilizing one or more microphones within and/or associated with the user device 102, and processes the auditory data to determine whether the auditory signal is present in the auditory data. Additionally or alternatively, in some embodiments the user device and/or other associated apparatus is configured to perform one or more auditory processing algorithms to determine whether the auditory signal is being produced by the detected networked device (e.g., based on a determinable distance between the user device and/or other associated apparatus and the networked device based on processing the auditory data). In one particular example, for example when the networked device comprises a smart bulb initiated to activate or perform a particular light emitting sequence, the camera data may be processed to determine the intensity level(s) in the captured camera data, or portions thereof, and/or changes in intensity level(s) over time to determine whether the camera data indicates performance of a particular expected light emitting sequence.

In another context, for example in circumstances where the network device type associated with the networked device is determined to represent a smart television, the process includes employing one or more image processing algorithm(s) and/or model(s) to detect and/or decode, from the captured camera data, a code, a machine-readable indicia such as a QR code, barcode, or other symbology, a predetermined image, and/or the like. For example, in some embodiments, one or more algorithms for machine-readable symbology detection and/or decoding may be used. It should be appreciated that, in other embodiments, the user device and/or other associated apparatus initiate any of a myriad of processes, algorithms, and/or the like for determining performance of any of a number of types of visual handshake actions.

Additionally or alternatively, in other embodiments, the user device and/or other associated apparatus processes auditory data embodying at least a portion of the indirect handshake authentication data to verify performance of the indirect handshake action. For example, in one or more embodiments where the apparatus(es) 200 transmit instructions to cause the networked device to begin emitting a particular auditory frequency, sequence, and/or the like, the user device and/or other associated apparatus processes auditory data to determine whether the particular auditory frequency, sequence, and/or the like is being emitted. Additionally or alternatively, in some embodiments, the user device and/or other associated apparatus processes the auditory data to determine whether a particular auditory signal is present in the captured auditory data. Additionally or alternatively still, in some embodiments, the user device and/or other associated apparatus is configured to perform one or more auditory processing algorithms to determine whether the auditory signal is being produced by the detected networked device or a different device (e.g., based on a determinable distance between the user device and/or other associated apparatus and the networked device based on processing the auditory data). It should be appreciated that, in some embodiments, the process uses a combination of camera data and auditory data to verify performance of the indirect handshake action by a particular networked device.

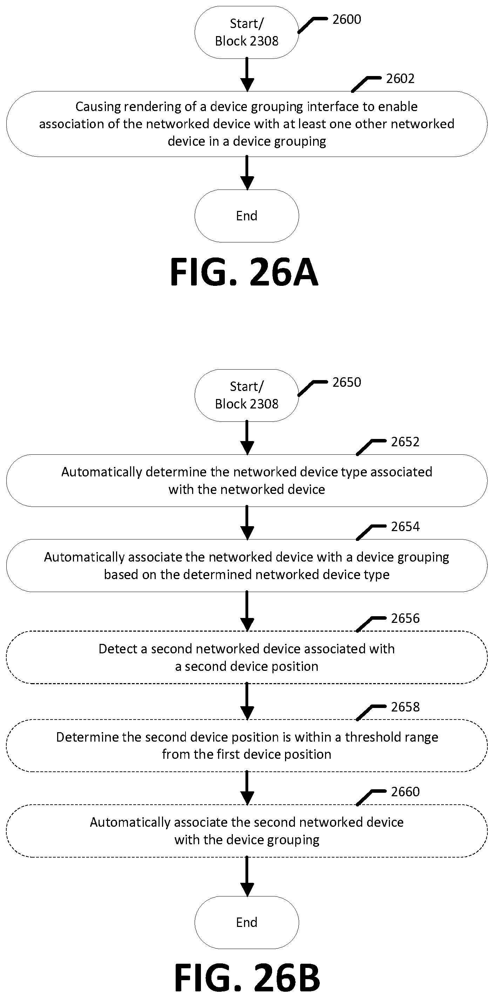

FIG. 26A illustrates operations of another example process for network-centric augmented reality processing in accordance with the present disclosure. For example, FIG. 26A depicts operations of an example process 2600 for enabling association of a networked device with a device grouping utilizing a device grouping interface, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 2600, alone or in conjunction with any of the other processes described herein. As illustrated, the process 2600 may begin at operation 2602. The operation 2602 may begin after one or more operations of another process, for example after the operation 2308 of the process 2300 as illustrated. Similarly, upon completion of the process 2600, flow may end or proceed to one or more operations of another process described herein.

At operation 2602, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of a device grouping interface. In some embodiments, the device grouping interface enables association of the networked device (e.g., a networked device detected from camera data) with at least one other networked device in a device grouping. In some such embodiments, the device grouping is maintained by the apparatus(es) 200 and/or an associated device, server, and/or the like, to maintain one or more device groupings embodying and/or associated with data object(s) that may be linked with one or more networked device. For example, in some such embodiments, the user device may present and receive input (e.g., manually or automatically) associated with the device grouping interface to link and/or otherwise assign the networked device to a particular device grouping, such that the device grouping is updated to include and/or be associated with device identification information for the networked device to indicate the networked device has been indicated as in the device grouping. In some such embodiments, the device grouping interface further enables associating other detected networked device(s) with one or more device grouping(s), for example such that the user or automated process may associate a plurality of networked devices with one or more device groupings. In some embodiments, the device grouping interface comprises and/or is associated with additional interface elements that enable management of device grouping(s). For example, in some embodiments, the user device causes rendering of a device grouping interface that includes or is associated with one or more interface elements for at least one or more of (1) generating a device grouping, (2) deleting an existing device grouping, (3) editing one or more properties of a device grouping (e.g., a device grouping name), (4) editing the networked device(s) associated with one or more device grouping(s), and/or (5) performing one or more actions associated with one or more device grouping(s).

In some embodiments, a device grouping is utilized for any of number of processes and/or purposes. For example, in some embodiments, a user associates networked device(s) to device groupings to logically group various network device(s) into device groupings that are desired by the user. In one example context, for example, the user creates device groupings for different sub-premises of a main premises (e.g., rooms of a house), and associates networked devices with a particular device grouping corresponding to the room within which the networked device is located (e.g., a "kitchen devices" device grouping, a "living room devices" device grouping, and the like). In other embodiments, one or more batch processes may be initiated based on one or more device grouping(s). In an example context, activation of all networked devices associated with a particular device grouping (e.g., activating all devices in the living room, updating all devices associated with a particular device grouping, and/or the like) may be initiated. Such batch actions may be initiated in some contexts for updating, at user request, to automate one or more processes, and/or as part of a time-controlled (or other parameter controlled) process such as activating all networked devices of a particular device grouping at a particular time or when a user arrives at or near a certain location.

By providing a device grouping interface, the user device and/or other associated apparatus enables the user to control the association of networked devices with device groupings in a streamlined and user-friendly manner. In some such embodiments, the user utilizes the rendered device grouping interface to associate networked device(s) with appropriate device grouping(s). Additionally or alternatively, the user utilizes the rendered device grouping interface to initiate performance of any of a number of desired actions. In combination with the processes described herein for networked device detection and/or mapping, embodiments of the present disclosure reduce the number of required user interactions and/or the amount of processing resources utilized to associate one or more networked devices to particular device grouping(s). For example, some example embodiments described herein automatically determine and/or verify an identity associated with a device such that information regarding a networked device (e.g., device identification information, networked device type, and/or the like) is automatically determined and/or may be prepopulated into one or more interfaces (e.g., the device grouping interface) without requiring additional user interactions and/or processing.

FIG. 26B illustrates operations of another example process for network-centric augmented reality processing in accordance with the present disclosure. For example, FIG. 26B depicts operations of an example process 2650 for automatically associating a networked device with a device grouping, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 2650, alone or in conjunction with any of the other processes described herein. As illustrated, the process 2650 may begin at operation 2652. The operation 2652 may begin after one or more operations of another process, for example after the operation 2308 of the process 2300 as illustrated. Similarly, upon completion of the process 2650, flow may end or proceed to one or more operations of another process described herein.

At operation 2652, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to automatically determine the networked device type associated with the networked device. In some embodiments, the process utilizes one or more trained machine learning model(s), algorithmic model(s), statistical model(s), and/or image processing algorithm(s) to determine the networked device type o a networked device, as described herein. For example, in some embodiments, the process may include determining the networked device type automatically by processing camera data and/or a particular portion thereof. In some such embodiments, the process may include determining the networked device type based on various visual features of the representation of the networked device in the captured camera data. For example, in some such embodiments, the camera data may be processed to detect one or more features associated with a particular network device type within camera data or a portion thereof (e.g., a particular frame or image data object of an image data object set). In some embodiments, a machine learning model, algorithmic model, statistical model, and/or the like, detects networked devices within camera data and outputs the networked device type together with the indication that a networked device is represented in the camera data.

At operation 2654, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to automatically associate the networked device with a device grouping based on the determined networked device type. For example, in some embodiments, the device groupings may be created by and/or otherwise associated with a particular user profile corresponding to a user, and the process may associate the networked device with a device grouping from a set of existing device groupings associated with the user profile. For example, in some embodiments, the networked device type associated with the networked device may be determined to be located in a particular location and/or premises (e.g., a "smart oven" is generally located in a kitchen), and similarly the user has created or is already associated with a device grouping that correlates to that location and/or premises (e.g., a previously-created or preexisting device grouping named "Kitchen"). In another example context, the process may include detecting a smart television and automatically associate the smart television (e.g., a networked device) with a device grouping for a family room (e.g., a previously-created or preexisting "Family room" device grouping). In some such embodiments, the process automatically associates the networked device with the device grouping that is determined to correspond to the determined networked device type for that networked device in a circumstance where one exists. In some embodiments, the user device and/or an associated apparatus maintains and/or receives (e.g., from an external server) one or more data objects, lists, and/or the like, that pairs networked device types with corresponding device groupings, such that when the user device and/or an associated apparatus detects a networked device of a particular networked device type, the process includes identifying the corresponding device grouping for the particular networked device type by utilizing such data objects, lists, and/or the like to look up the corresponding device grouping for the particular networked device type.

In other embodiments, the process automatically associates a networked device with a particular device grouping based on the networked device position determined for the networked device. For example, in one example context, the process associates all networked devices associated with networked device position data within a certain premises (e.g., as mapped in a corresponding environment plot, for example) to the same device grouping. In one such example embodiment, a user utilizes the user device and/or an associated apparatus to map an environment plot that the user then associates with the device grouping "Kitchen," and the user device and/or an associated apparatus subsequently automatically associates each networked device detected and mapped within the environment plot to the corresponding "Kitchen" device grouping without subsequent user input. It should be appreciated that such operations for automatically associating a networked device with a particular device grouping may be repeated for any number of detected networked devices.

Additionally or alternatively, in some embodiments, the process associates one or more networked devices based on the determined position of that networked device and/or one or more other devices. In some embodiments for example, at optional operation 2656, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to detect a second networked device associated with a second device position. In some such embodiments, the second network device is detected associated with the second device position in a similar manner to that described with respect to the networked device herein with respect to operations 2110-2308 of the process 2300. For example, in some such embodiments, the user device and/or an associated apparatus detects the second networked device in subsequently captured camera data, and/or maps the second detected networked device to second networked device position data representing the second position in response to detecting the second networked device.

At optional operation 2658, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to determine the second device position is within a threshold range from the first device position associated with the first networked device. In some embodiments, for example, the process may include comparing second device position data representing the position of the second networked device with the first device position data representing the position of the first networked device. In some such embodiments, the process utilizes any of a myriad of range detection algorithms to determine if the distance between the second device position and the first device position is less than or equal to the threshold range. In some such embodiments, the process automatically associates the second networked device with a particular device grouping in a circumstance where the second device position is within the threshold range from the first device position. Additionally or alternatively, in some embodiments, the process includes associating the second networked device with a corresponding device grouping in another manner (e.g., automatically using networked device type, manually by a user, and/or the like) in a circumstance where the second device position is not within a threshold range of the first device position.

At optional operation 2660, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to automatically associate the second networked device with the device grouping. In some such embodiments, the process automatically associates the second networked device with the device grouping in response to the determination that the second device position is within the threshold range from the first device position. In an example context, for example, by automatically associating the second network device with the same device grouping as the first networked device, the process may include determining that the same device grouping applies due to the proximity between the first and second networked devices. For example, in a circumstance where the first networked device is associated with a particular device grouping based on its determined networked device type, the second networked device is assumed to accurately correspond to the other networked device. In one such example context, where smart oven is automatically associated with the "Kitchen" device grouping and a second networked device (e.g., a virtual assistant device) is detected within the threshold range from the position of the smart oven (e.g., within 3 feet), the process may include automatically associating the second networked device with the device grouping of "Kitchen" as well. The threshold range may be set in any one of a myriad of manners. For example, in some embodiments, the threshold range is preset, loaded from a user configuration, set by a user during operation, and/or the like.

By automatically associating one or more networked devices with a particular device grouping, such example embodiments may reduce the amount of user interactions and inputs required to associate such networked device(s) with corresponding device groupings. In some embodiments, such embodiments may provide additional improvements advantages over conventional implementations for grouping devices by reducing (or completely eliminating) any input of specific networked device details when grouping such networked devices. Additionally or alternatively still, some such embodiments that automatically associate networked devices with a device grouping based on their distance to proximate device(s) extend such technical advantages to circumstances where the device grouping for a particular networked device is not determinable from the networked device type for the particular networked device. In this regard, such embodiments avoid further user input by enabling a particular streamlined user experience for associating networked device(s) with device grouping(s) in an accurate manner without conventionally required user input.

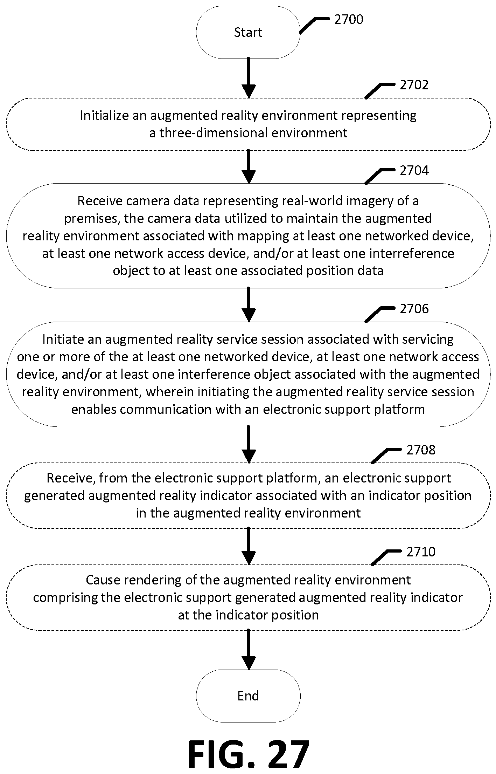

FIG. 27 illustrates operations of another example process for network-centric augmented reality processing in accordance with the present disclosure. For example, FIG. 27 depicts operations of an example process 2700 for device servicing, in accordance with one or more embodiments of the present disclosure. For example, in some embodiments, the apparatus(es) 200 (e.g., embodied as the user device 102, AR processing server 104, and/or electronic support platform 106) are configured to perform the operations of the process 2700, alone or in conjunction with any of the other processes described herein. As illustrated, the process 2700 may begin at optional operation 2702. The operation 2702 may begin after one or more operations of another process. Similarly, upon completion of the process 2700, flow may proceed to one or more operations of another process. In this regard, it should be appreciated that in some embodiments, the apparatus(es) 200 are configured for performing the process 2700 and any other of the one or more processes described herein.

At optional operation 2702, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to initialize an augmented reality environment representing a three-dimensional environment. In some embodiments, a two-dimensional environment may be used. In some embodiments, a camera circuitry (e.g., associated with the user device) may capture camera data utilized in initializing the augmented reality environment. For example, the camera circuitry may capture camera data including representations of a flat surface (e.g., a floor of a premises) that is utilized to establish an origin point and/or a two-dimensional or three-dimensional coordinate plane for placing virtual objects. The origin point established during initialization may be used to track data embodying the position of the user device 102 and/or other associated apparatus as it is traversed and/or otherwise navigates through the premises. For example, in some embodiments the user device and/or other associated apparatus is configured to utilize one or more sensors (e.g., a gyroscope, accelerometer, GPS circuitry, signal triangulation circuitry, and/or a combination thereof) to determine an offset between the initialized origin point and the current position of the user device to generate mapping device position data. In this regard, the initialized augmented reality environment is initialized in the various manners described herein.

At operation 2704, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive camera data representing real-world imagery of a premises, the camera data utilized to maintain the augmented reality environment associated with mapping at least one networked device, at least one networked access device, and/or at least one interference object to at least one associated position data. In this regard, any number of networked devices, network access devices, and/or interference objects may be mapped in any of the manners described herein. For example, in some embodiments the user device and/or other associated apparatus receives and processes the camera data to map each device and/or object to associated position data, and/or generate data such as an environment plot including such mapped data. For example, in some embodiments, the user device and/or other associated apparatus receives camera data and maintains the augmented reality environment together with associated data in any of the manners described herein, for example as described with respect to one or more of FIGS. 10-26. In this regard, the user device and/or other associated apparatus is configured to maintain and utilize the mapped positions for each device and/or object for purposes of providing servicing associated with one or more of such devices.

At operation 2706, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to initiate an augmented reality service session associated with servicing one or more of the at least one networked device, at least one network access device, and/or at least one interference object associated with the augmented reality environment. In some such embodiments, initiating the augmented reality service session enables communication with an electronic support platform.

In some such embodiments, the electronic support platform embodies one or more hardware, software, and/or firmware entities that enables servicing of one or more device(s), network(s) associated with such device(s), and/or the like. In some embodiments, the electronic support platform is embodied by an entity embodied in software, hardware, and/or firmware that provides information utilized in diagnosing one or more problems associated with a particular networked device and/or network access device, and/or problems associated with communication between such devices. For example, in some embodiments, the electronic support platform comprises an electronically maintained set of frequently encountered problems together with data embodying instructions for attempting to diagnose and/or resolve such problems. In one or more embodiments, the electronic support platform provides text information to be conveyed to the user via text, augmented reality interface elements, and/or the like. For example, in some embodiments, a user interacts with the electronic support platform via the user device, and the electronic support platform causes rendering of one or more virtual object(s) within the augmented reality environment that provide information, instructions, and/or other data helpful in servicing one or more device(s).

Additionally or alternatively, in some embodiments, the electronic support platform embodies an electronic customer support platform remote from the user device and/or the premises. In this regard, initiating communication with the electronic support platform enables message transmission between a user of the user device and an agent of the electronic customer support platform. In some such embodiments, a customer support representative utilizes the electronic support platform to receive and provide messages, audio data, and/or the like, to the user device and/or another associated apparatus, and/or in some embodiments the electronic support platform utilizes one or more automatic and/or electronic support agents to provide predetermined information in response to transmissions from the user, and/or determine information to provide in response to transmissions from the user.

Additionally or alternatively, in some embodiments, the initiated communication with the electronic support platform enables transmission of data from the user device and/or another associated apparatus to the electronic support platform for further processing and/or display. For example, in some embodiments, the initiated communication with the electronic support platform enables transmission of captured and/or otherwise received camera data to the electronic support platform for processing and/or display. In this regard, a technician or other agent utilizing the electronic support platform may see the raw camera data captured by the camera circuitry, for example as a user navigates throughout the environment remote from the electronic support platform. Additionally or alternatively, in some embodiments, the user device transmits data to enable rendering of an augmented reality interface to the electronic support platform. For example, in some such embodiments, the user device communicates data to the electronic support platform such that the electronic support platform is enabled to render the real-world imagery surrounding the user device and/or an associated camera circuitry as augmented by virtual objects maintained by the user device and/or another associated apparatus with respect to an associated virtual reality environment. Additionally or alternatively still, in some embodiments, the initiated communication with the user device enables transmission of data from the electronic support platform to the user device for further processing and/or rendering. In some such embodiments, for example, the electronic support platform generates (automatically or in response to user interaction, such as by a customer service representative) data to be provided to the user device for further processing and/or rendering to an augmented reality interface for use in servicing a device. For example, in some embodiments, the electronic support platform causes generation of virtual objects in the augmented reality environment that further augments the real-world view rendered by the user device in a manner that supports servicing one or more device(s), as described herein.

In at least one example context, the augmented reality service session initiates communication between the user device and/or another associated apparatus and the electronic support platform to provide a communication mechanism between the user and a customer service representative using the electronic support platform. In some such embodiments, the initiated augmented reality service session enables transmission of camera data and/or auditory data from the user device and/or another associated apparatus to the electronic support platform, for example such that the real-world images and/or sounds embodied by such data may be output to the customer service representative for review. Additionally or alternatively, in some embodiments, the user device and/or another associated apparatus transmits data representing the augmented reality environment and/or portions thereof such that the augmented reality environment may be output to the customer service representative via the electronic support platform. For example, in some embodiments, the user device and/or another associated apparatus transmits data representing an augmented reality interface for a field of view visible by the camera circuitry and that contains any number of real-world objects and/or virtual objects.

In one such example context, the user device and/or an associated apparatus generates and/or maintains virtual objects indicating network strength data at various positions in the augmented reality, for example, and the data representing the augmented reality interface that is transmitted from the user device and/or an associated apparatus to the electronic support platform includes such representations of network strength data. In this regard, the customer service representative may further process and/or otherwise utilize such representations of network strength data at one or more positions to provide information associated with servicing one or more devices in the premises around the user device. For example, the customer service representative may provide servicing instructions, via the electronic support platform and based on the data representing the augmented reality interface, for repositioning one or more networked device(s), network access device(s), and/or interference object(s) to improve the network strength at a particular position. Alternatively or additionally, in another example context, the customer service representative may provide instructions and/or other information associated with positioning a new device in the premises. Additionally or alternatively still, in yet another example context, the customer service representative may provide instructions and/or other information associated with configuring one or more devices in the premises. In some embodiments, the electronic support platform enables the customer service representative to provide instructions and/or other data represented in any of a myriad of formats, including as text, auditory signal(s) (e.g., voice data, text-to-speech, or the like), static images, and/or virtual objects rendered as part of the augmented reality environment as described herein. Moreover, in the various embodiments discussed herein, the AR processing server 104 and/or any other associated apparatus may be configured to provide data to and/or receive data from the electronic support platform to facilitate the functionalities discussed herein.

At optional operation 2708, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to receive, from the electronic support platform, an electronic support generated augmented reality indicator associated with an indicator position in the augmented reality environment. In some embodiments, the indicator position is input by a user of the electronic support platform (e.g., a customer support representative), and in other embodiments the electronic support platform automatically determines the indicator position based on data received from the user device and/or an associated apparatus (e.g., based on position data associated with one or more mapped devices). In at least one example context, the electronic support generated augmented reality indicator embodies data sufficient for generating and/or otherwise maintaining a particular virtual object at the indicator position in the augmented reality environment. In some such embodiments, the electronic support generated augmented reality indicator is received from the electronic support platform in response to input by a customer service representative via the electronic support platform. For example, in some embodiments, the customer service representative interacts with the electronic support platform to indicate via user input that an electronic support generated augmented reality indicator should be generated and rendered associated with servicing a particular device. Alternatively or additionally, in some embodiments, a technician or other agent (e.g., a customer support representative) accesses the electronic support platform to annotate and/or otherwise draw data to be rendered on top of or within the augmented reality interface or other user interface displayed via the connected user device and/or an associated apparatus (e.g., to the screen of the user device). In other embodiments, the electronic support platform automatically determines, or determines in response to user input received over the communication channel initiated between the user device and/or an associated apparatus and the electronic support platform, that an electronic support generated augmented reality indicator should be generated and rendered associated with servicing a particular device.

For example, in some embodiments, via the communication channel initiated between the electronic support platform and the user device and/or an associated apparatus, the electronic support platform receives data representing an environment plot, augmented reality environment, and/or devices and/or objects mapped therein. Additionally or alternatively, based on the data representing the environment plot, the augmented reality environment, and/or the devices and/or objects mapped therein, and/or based on user interaction data provided via the user device and/or an associated apparatus and/or a user of the electronic support platform, the electronic support platform identifies one or more actions that should be performed with respect to servicing a particular device (e.g., configuring the particular device to function, improving the functionality of the particular device, and/or the like).

In some example embodiments, the electronic support platform is used to assist a user within a particular environment. For example, the electronic support platform may be used by a technician to assist the user (e.g., the user of the user device) with configuring devices in the environment, triaging devices within the environment and/or a configuration thereof, and/or otherwise the like. The technician may provide renderable data that provides visual aid to the user with respect to what devices to interact with, where to position such devices, how to configure such objects, and/or the like. The instructions, messages, renderable data, and/or the like may be informed based on the augmented reality data depicted and transmitted to the technician via communication between the electronic support platform and the user device and/or an associated apparatus. Examples of additional functionalities that can be implemented as part of one or more network mapping, network analysis, signal strength analysis, data collection, onboarding, customer support, and device triage and diagnosis processes are described, for example, in U.S. Patent No. 9,413,893; U.S. Patent No. 9,483,344; and/or U.S. Patent No. 10,212,618, each of which is hereby incorporated by reference herein in its respective entirety.

At optional operation 2710, the apparatus(es) 200 (e.g., embodied as the user device 102, AR processing server 104, and/or electronic support platform 106) include means, such as the network-centric AR processing circuitry 210, input/output circuitry 206, communications circuitry 208, processor 202, and/or the like, to cause rendering of the augmented reality environment comprising the electronic support generated augmented reality indicator at the indicator position. In some such embodiments, the user device and/or an associated apparatus receives the electronic support generated augmented reality indicator from the electronic support platform and generates a corresponding virtual object in the augmented reality environment positioned at the corresponding indicator position. In this regard, in some embodiments the apparatus renders the virtual object embodying the electronic support generated augmented reality indicator to an augmented reality interface presented by the user device 102, for example when the indicator position is visible within the view of the camera circuitry. In some embodiments, the user device and/or an associated apparatus receives, for example from the electronic support platform, instructions provided via rendered text, audio, visual elements, and/or the like, that instruct the user to orient the camera circuitry in a manner that places the indicator position within the field of view, such as by rotating, translating, and/or otherwise manipulating the orientation of the camera circuitry. In other embodiments, the user device and/or an associated apparatus receives data representing an electronic support generated augmented reality indicator embodied by one of a set of predefined virtual objects that may be generated by the electronic support platform. In other embodiments, the electronic support generated augmented reality indicator represents user inputted virtual objects (e.g., a drawn object or path, and/or the like).

In some embodiments, the rendered electronic support generated augmented reality indicator comprises a path and/or visual indicator that assists a user in navigating to one or more particular device. For example, in at least one example embodiment, the electronic support generated augmented reality indicator comprises a downward facing arrow at a position where a particular device is located that the user of the user device is instructed to interact with for servicing. Alternatively or additionally, in some embodiments, the electronic support generated augmented reality indicator comprises one or more navigational elements (e.g., paths rendered on the floor of the real-world environment) that indicates that a device positioned at the beginning of the path should be moved to the end of the path. In some such embodiments, the electronic support generated augmented reality indicator is generated and/or rendered based on network strength data determined for one or more positions in the augmented reality environment, for example such that the electronic support generated augmented reality indicator represents a path from a first position associated with poor network strength to a second position associated with improved network strength. In some such embodiments, the electronic support generated augmented reality indicator enables servicing of one or more device(s) to improve the network strength of one or more device(s).

In some embodiments, the electronic support generated augmented reality indicator is associated with an indicator position that is used to identify a particular subcomponent of a device with which the user of the user device is instructed to interact with for servicing the device. For example, in some embodiments, the electronic support generated augmented reality indicator is rendered at an indicator position representing the position of a power button, reset button, or other subcomponent on the device. In some such embodiments, the indicator position is determined based on position data associated with the device, and/or known properties associated with the device. For example, in some embodiments, the location of the power button, for example, on a networked device is pre-stored and/or determinable (e.g., through interaction with a central server (such as an AR processing server 104) that stores such information). In some such embodiments, the indicator position is determinable based on data representing the location of the component as a predefined offset from position data representing the position of the networked device (e.g., representing the bottom or center of the networked device, in some embodiments). In some such embodiments, the user may utilize the rendered electronic support generated augmented reality indicator to specifically locate the indicator position and interact with the subcomponent located at the indicator position without requiring the user to know specifically what the subcomponent looks like or comprehend other verbal instructions for finding the subcomponent.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more circuitries of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

In any of the embodiments disclosed herein, actions requiring local execution (e.g., capturing camera data, detecting signals wirelessly, and/or transmitting directly over a WiFi network) may be done by a local apparatus (e.g., a user device), and any actions not requiring local execution (e.g., processing a model, analyzing camera data, transmitting instructions over the Internet) can be done locally (e.g., by a user device 102 and/or another apparatus) and/or remotely (e.g., AR processing server 104, electronic support platform 106, and/or another apparatus), and descriptions of the apparatus(es) performing such functions herein are understood to be examples and such functions are implementable by any apparatus unless required by the nature of the described function as would be appreciated by a person of ordinary skill in the art in light of the present disclosure.

The term "data processing apparatus" and similar terms and devices encompass all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a circuitry, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more circuitries, sub-programs, or portions of code). A computer program can be deployed to be executed on one computer or on multiple computers that are located at one site or distributed across multiple sites and interconnected by a communications network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communications network. Examples of communications networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communications network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

### Non-Limiting Example Embodiments of the Disclosure

Having described various aspects of the innovations, it will be appreciated that various embodiments are described herein. The subject matter described herein includes, without limitation, the following specific embodiments. These embodiments are merely examples and should not be construed as limiting the scope of the disclosure. It will be appreciated that the embodiments in some aspects are freely combinable. In other aspects of the present disclosure, each embodiment is independent from other embodiments described.

Embodiment 1. A computer-implemented method comprising:
receiving camera data associated with an augmented reality environment representing a premises, wherein the camera data is captured by a camera circuitry;
receiving at least one indication associated with a plot corner set comprising a plurality of plot corners configured to be generated as the camera circuitry navigates the premises, the at least one indication associated with a portion of the camera data; and
generating an environment plot by mapping each plot corner in the plot corner set as a corner location in the augmented reality environment associated with the premises.

Embodiment 2: The computer-implemented method according to Embodiment 1 wherein receiving the at least one indication associated with the plot corner set comprises:
receiving a first indication in response to user input data indicating existence of a first plot corner in the camera data; and
mapping, based on the camera data and first mapping device position data, the first plot corner to a first corner location in the augmented reality environment.

Embodiment 3: The computer-implemented method according to any one of the Embodiments 1-2, the computer-implemented method further comprising:
receiving second mapping device position data indicating traversal to a second mapping device position;
receiving a second indication in response to second user input data indicating existence of a second plot corner in the camera data; and
mapping, based on the camera data and the second mapping device position data, the second plot corner to a second corner location in the augmented reality environment.

Embodiment 4: The computer-implemented method according to any one of the Embodiments 1-3 wherein receiving the at least one indication associated with the plot corner set comprises:
receiving the camera data associated with first mapping device position data;
detecting a first plot corner in the camera data; and
mapping, based on the second mapping device position data and the camera data, the first plot corner to a first corner location in the augmented reality environment.

Embodiment 5: The computer-implemented method according to any one of the Embodiments 1-4 further comprising:
receiving a second indication of a networked device based on the camera data; and
mapping the networked device with a networked device location in the augmented reality environment, wherein the environment plot further comprises the networked device location.

Embodiment 6: The computer-implemented method according to any one of the Embodiments 1-5 wherein receiving the second indication of the networked device comprises:
receiving the second indication in response to user input data indicating existence of the networked device in the camera data; and
mapping, based on the camera data and a first mapping device position data the networked device to the networked device location in the augmented reality environment.

Embodiment 7: The computer-implemented method according to any one of the Embodiments 1-6 wherein receiving the second indication of the networked device comprises:
receiving the camera data associated with first mapping device position data;
detecting the networked device in the camera data; and
mapping, based on the first device positioning data and the camera data, the networked device to the networked device location in the augmented reality environment.

Embodiment 8: The computer-implemented method according to any one of the Embodiments 1-7 the computer-implemented method further comprising:
receiving first mapping device position data;
determining first network strength data associated with a first network access device, wherein the first network strength data is associated with the first mapping device position data;
receiving second mapping device position data, wherein the second mapping device position data indicates a different position from the first mapping device position data; and
determining second network strength data associated with the first network access device, wherein the second network strength data is associated with the second mapping device position data, wherein the environment plot further comprises a first network strength indicator based on the first mapping device position data and the first network strength data, and wherein the environment plot further comprises a second network strength indicator based on the second mapping device position data and the second network strength data.

Embodiment 9: The computer-implemented method according to any one of the Embodiments 1-8 the computer-implemented method further comprising:
generating preferred networked device position data based on a comparison of at least the first network strength data associated with the first mapping device position data and the second network strength data associated with the second device positioning data; and
causing rendering of a preferred networked device position indicator based on the preferred networked device position data.

Embodiment 10: The computer-implemented method according to any one of the Embodiments 1-9 further comprising:
receiving environment naming data;
storing the environment plot associated with the environment naming data;
receiving an indication of at least one networked device to be grouped associated with the environment naming data corresponding to the environment plot; and
storing networked device identification data for the at least one networked device associated with the environment naming data.

Embodiment 11: The computer-implemented method according to any one of the Embodiments 1-10 further comprising:
providing a real-time augmented reality interface comprising (1) real-world imagery captured in real-time represented by the camera data and (2) at least a portion of the augmented reality environment rendered over the real-world imagery represented by the camera data, wherein the portion of the augmented reality environment is based on an orientation of the camera circuitry,
and wherein the real-time augmented reality interface further comprises (3) at least one static interface element to interact with the augmented reality environment.

Embodiment 12: A computer-implemented method for network-centric augmented reality processing, the computer-implemented method comprising:
receiving camera data associated with an augmented reality environment representing a premises;
receiving, based on the camera data, at least one indication associated with an interference object set, wherein the interference object set comprises data associated with at least one object comprising a physical structure, a furniture object, or a signal interferer;
determining a diminished network strength position in the augmented reality environment based on at least one interference object of the interference object set and network access device, wherein the diminished network strength position is associated with a first network strength data for the network access device; and
causing rendering of data associated with the diminished network strength position to notify a user regarding the diminished network strength position.

Embodiment 13: The computer-implemented method according to any one of the Embodiments 12 wherein causing rendering of the data associated with the diminished network strength position comprises:
causing rendering of at least a portion of the augmented reality environment with the diminished network strength position visually distinguished within the augmented reality environment.

Embodiment 14: The computer-implemented method according to any one of the Embodiments 12-13 further comprising:
receiving an indication of a networked device based on the camera data; and
determining the networked device is disposed at or within a predetermined distance from the diminished network strength position, and wherein causing rendering of the data associated with the diminished network strength position comprises:
   causing rendering of a notification to the user comprising a recommendation to relocate the networked device.

Embodiment 15: The computer-implemented method according to any one of the Embodiments 12-14 further comprising:
detecting second network strength data associated with a second position within the augmented reality environment,
wherein the notification comprises at least one interface element indicating the user should relocate the networked device to the second position.

Embodiment 16: The computer-implemented method according to any one of the Embodiments 12-15 wherein causing rendering of the data associated with the diminished network strength position comprises rendering at least one interface element indicating that, to improve the first network strength data at the diminished network strength position, the at least one interference object of the interference object set should be repositioned or removed.

Embodiment 17: The computer-implemented method according to any one of the Embodiments 12-16 wherein receiving, based on the camera data, the at least one indication associated with the interference object set, comprises:
utilizing an object detection model to detect a first interference object based on the camera data, wherein the object detection model is configured for detecting at least one interference object type.

Embodiment 18: The computer-implemented method according to any one of the Embodiments 12-17 further comprising:
receiving, based on the camera data, an indication of the network access device; and
mapping, based on the indication of the network access device, the network access device to a network access device position in the augmented reality environment.

Embodiment 19: A computer-implemented method for network-centric augmented reality processing, the computer-implemented method comprising:
generating an environment plot based at least on camera data captured by a camera circuitry, wherein the camera data represents a premises, and wherein the environment plot corresponds to an augmented reality environment;
detecting first network strength data for a first network access device, wherein the first network strength data is associated with a first position in the augmented reality environment; and
causing rendering of the augmented reality environment comprising a network strength indicator located at the first position in the augmented reality environment, wherein the network strength indicator is visually configured based on at least the first network strength data.

Embodiment 20: The computer-implemented method according to any one of the Embodiments 19 wherein the network strength indicator comprises a first network strength indicator, and the computer-implemented method further comprising:
detecting second network strength data for the first network access device, wherein the second network strength data is associated with a second position in the augmented reality environment, and wherein the first network strength data differs from the second network strength data; and
causing rendering of the augmented reality environment comprising a second network strength indicator located at the second position, wherein the second network strength indicator is visually configured based on at least the second network strength data as visually distinct from the first network strength indicator.

Embodiment 21: The computer-implemented method according to any one of the Embodiments 19-20 wherein the network strength indicator comprises a first wave representation of a first color, the first color selected based on the first network strength data, and the second network strength indicator comprises a second wave representation of a second color, the second color selected based on the second network strength data.

Embodiment 22: The computer-implemented method according to any one of the Embodiments 19-21 further comprising:
receiving an indication of a networked device based on the camera data, wherein the networked device is disposed at the first position in the augmented reality environment;
determining the first network strength data is weaker than second network strength data associated with a second position in the augmented reality environment; and
causing rendering of data indicating the networked device should be repositioned to the second position.

Embodiment 23: The computer-implemented method according to any one of the Embodiments 19-22 further comprising:
determining a second position to relocate the first network access device to improve the first network strength data associated with the first position in the augmented reality environment; and
causing rendering of data indicating the first network access device should be relocated to the second position in the augmented reality environment.

Embodiment 24: The computer-implemented method according to any one of the Embodiments 19-23 method further comprising:
causing rendering of data indicating a first networked device should be positioned at the first position in the augmented reality environment.

Embodiment 25: A computer-implemented method for network-centric augmented reality processing, the computer-implemented method comprising:
receiving camera data representing a premises associated with an augmented reality environment;
detecting, from the camera data, a networked device of a networked device type;
mapping the networked device to a device position in the augmented reality environment; and
initiating a device detected action associated with the networked device and the device position in the augmented reality environment.

Embodiment 26: The computer-implemented method according to any one of the Embodiments 25 wherein the device detected action comprises:
determining the networked device is connected to a known network access device;
establishing, using the known network access device, a connection with the networked device; and
executing a direct data handshake to confirm an identity of the networked device, wherein the data handshake is based on the networked device type.

Embodiment 27: The computer-implemented method according to any one of the Embodiments 25-26 wherein the device detected action comprises:
determining the networked device is connected to a known access device;
transmitting, using the known network access device, indirect handshake data to cause the networked device to perform an indirect handshake action;
capturing indirect handshake authentication data associated with the indirect handshake action; and
processing the indirect handshake authentication data to verify performance of the indirect handshake action, wherein verification of the indirect handshake action confirms an identity of the networked device.

Embodiment 28: The computer-implemented method according to any one of the Embodiments 25-27 wherein the device detected action comprises:
causing rendering of a device grouping interface to enable association of the networked device with at least one other networked device.

Embodiment 29: The computer-implemented method according to any one of the Embodiments 25-28 wherein the device detected action comprises:
automatically determining the networked device type associated with the networked device; and
automatically associating the networked device with a device grouping based on the determined networked device type.

Embodiment 30: The computer-implemented method according to any one of the Embodiments 25-29 wherein the networked device comprises a first networked device and the device position comprises a first device position, and the computer-implemented method further comprising:
detecting a second networked device associated with a second device position;
determining the second device position is within a threshold range from the first device position; and
automatically associating the second networked device with the device grouping.

Embodiment 31: A computer-implemented method for network-centric augmented reality processing, the computer-implemented method comprising:
receiving camera data representing real-world imagery of a premises, wherein the camera data is utilized to maintain an augmented reality environment associated with mapping at least one position associated with at least one networked device, network access device, and/or at least one interference object; and
initiating an augmented reality service session associated with servicing one or more devices associated with the augmented reality environment, wherein initiating the augmented reality service session enables communication with an electronic support platform.

Embodiment 32: The computer-implemented method according to any one of the Embodiments 31 further comprising:
receiving, from the electronic support platform, an electronic support generated augmented reality indicator associated with an indicator position in the augmented reality environment; and
causing rendering of the augmented reality environment comprising the electronic support generated augmented reality indicator at the indicator position.

Embodiment 33: The computer-implemented method according to any one of the Embodiments 31-32 wherein the electronic support generated augmented reality indicator represents a visual indicator identifying a first networked device to service of the at least one networked device.

Embodiment 34: The computer-implemented method according to any one of the Embodiments 31-33 wherein the electronic support generated augmented reality indicator represents a visual indicator identifying a position in the augmented reality environment to place a new networked device or a first networked device of the at least one networked device.

Embodiment 35: The computer-implemented method according to any one of the Embodiments 31-34 wherein the augmented reality service session enables transmission of the camera data to the electronic support platform to render utilizing a display associated with the electronic support platform.

Embodiment 36: The computer-implemented method according to any one of the Embodiments 31-35 further comprising:
generating at least one augmented reality element corresponding to network strength data for a first position in the augmented reality environment, wherein the network strength data is associated with a particular network access device, and wherein the electronic support generated augmented reality indicator represents a visual indicator identifying a second position in the augmented reality environment to place the particular network access device to improve the network strength data at the first position in the augmented reality environment.

Embodiment 37: A computer-implemented method according to any combination of the Embodiments 1-36.

Embodiment 38: An apparatus comprising at least one processor and at least one non-transitory memory having computer program code stored thereon that, in execution with the at least one processor, causes the apparatus to perform any one of the computer-implemented methods of Embodiments 1-37.

Embodiment 39: A computer program product comprising at least one non-transitory computer-readable storage medium having computer program code stored thereon that, in execution with at least one processor, configures the computer program product to perform any one of the computer-implemented methods of Embodiments 1-37.

For the avoidance of doubt, the present disclosure also includes the subject matter as defined in the following paragraphs
1. A computer-implemented method for network-centric augmented reality processing, the computer-implemented method comprising:
   receiving camera data associated with an augmented reality environment representing a premises, wherein the camera data is captured by a camera circuitry;
   receiving at least one indication associated with a plot corner set comprising a plurality of plot corners configured to be generated as the camera circuitry navigates the premises, the at least one indication associated with a portion of the camera data; and
   generating an environment plot by mapping each plot corner in the plot corner set as a corner location in the augmented reality environment associated with the premises.
2. A computer-implemented method according to paragraph 1, wherein receiving the at least one indication associated with the plot corner set comprises:
   receiving a first indication in response to user input data indicating existence of a first plot corner in the camera data; and
   mapping, based on the camera data and first mapping device position data, the first plot corner to a first corner location in the augmented reality environment.
3. A computer-implemented method according to paragraph 2, the computer-implemented method further comprising:
   receiving second mapping device position data indicating traversal to a second mapping device position;
   receiving a second indication in response to second user input data indicating existence of a second plot corner in the camera data; and
   mapping, based on the camera data and the second mapping device position data, the second plot corner to a second corner location in the augmented reality environment.
4. A computer-implemented method according to paragraph 1, wherein receiving the at least one indication associated with the plot corner set comprises:
   receiving the camera data associated with first mapping device position data;
   detecting a first plot corner in the camera data; and
   mapping, based on the second mapping device position data and the camera data, the first plot corner to a first corner location in the augmented reality environment.
5. A computer-implemented method according to paragraph 1, the computer-implemented method further comprising:
   receiving a second indication of a networked device based on the camera data; and
   mapping the networked device with a networked device location in the augmented reality environment, wherein the environment plot further comprises the networked device location.
6. A computer-implemented method according to paragraph 5, wherein receiving the second indication of the networked device comprises:
   receiving the second indication in response to user input data indicating existence of the networked device in the camera data; and
   mapping, based on the camera data and a first mapping device position data the networked device to the networked device location in the augmented reality environment.
7. A computer-implemented method according to paragraph 5, wherein receiving the second indication of the networked device comprises:
   receiving the camera data associated with first mapping device position data;
   detecting the networked device in the camera data; and
   mapping, based on the first device positioning data and the camera data, the networked device to the networked device location in the augmented reality environment.
8. A computer-implemented method according to paragraph 1, the computer-implemented method further comprising:
   receiving first mapping device position data;
   determining first network strength data associated with a first network access device, wherein the first network strength data is associated with the first mapping device position data;
   receiving second mapping device position data, wherein the second mapping device position data indicates a different position from the first mapping device position data; and
   determining second network strength data associated with the first network access device, wherein the second network strength data is associated with the second mapping device position data, wherein the environment plot further comprises a first network strength indicator based on the first mapping device position data and the first network strength data, and wherein the environment plot further comprises a second network strength indicator based on the second mapping device position data and the second network strength data.
9. A computer-implemented method according to paragraph 8, the computer-implemented method further comprising:
   generating preferred networked device position data based on a comparison of at least the first network strength data associated with the first mapping device position data and the second network strength data associated with the second device positioning data; and
   causing rendering of a preferred networked device position indicator based on the preferred networked device position data.
10. A computer-implemented method according to paragraph 1, the computer-implemented method further comprising:
   receiving environment naming data;
   storing the environment plot associated with the environment naming data;
   receiving an indication of at least one networked device to be grouped associated with the environment naming data corresponding to the environment plot; and
   storing networked device identification data for the at least one networked device associated with the environment naming data.
11. A computer-implemented method according to paragraph 1, the computer-implemented method further comprising:
   providing a real-time augmented reality interface comprising (1) real-world imagery captured in real-time represented by the camera data and (2) at least a portion of the augmented reality environment rendered over the real-world imagery represented by the camera data, wherein the portion of the augmented reality environment is based on an orientation of the camera circuitry,
   and wherein the real-time augmented reality interface further comprises (3) at least one static interface element to interact with the augmented reality environment.
12. A computer-implemented method for network-centric augmented reality processing, the computer-implemented method comprising:
   receiving camera data associated with an augmented reality environment representing a premises;
   receiving, based on the camera data, at least one indication associated with an interference object set, wherein the interference object set comprises data associated with at least one object comprising a physical structure, a furniture object, or a signal interferer;
   determining a diminished network strength position in the augmented reality environment based on at least one interference object of the interference object set and network access device, wherein the diminished network strength position is associated with a first network strength data for the network access device; and
   causing rendering of data associated with the diminished network strength position to notify a user regarding the diminished network strength position.
13. A computer-implemented method according to paragraph 12, wherein causing rendering of the data associated with the diminished network strength position comprises:
   causing rendering of at least a portion of the augmented reality environment with the diminished network strength position visually distinguished within the augmented reality environment.
14. A computer-implemented method according to paragraph 12, the computer-implemented method further comprising:
   receiving an indication of a networked device based on the camera data; and
   determining the networked device is disposed at or within a predetermined distance from the diminished network strength position, and wherein causing rendering of the data associated with the diminished network strength position comprises:
      causing rendering of a notification to the user comprising a recommendation to relocate the networked device.
15. A computer-implemented method according to paragraph 14, the computer-implemented method further comprising:
   detecting second network strength data associated with a second position within the augmented reality environment,
   wherein the notification comprises at least one interface element indicating the user should relocate the networked device to the second position.
16. A computer-implemented method according to paragraph 12, wherein causing rendering of the data associated with the diminished network strength position comprises rendering at least one interface element indicating that, to improve the first network strength data at the diminished network strength position, the at least one interference object of the interference object set should be repositioned or removed.
17. A computer-implemented method according to paragraph 12, wherein receiving, based on the camera data, the at least one indication associated with the interference object set, comprises:
   utilizing an object detection model to detect a first interference object based on the camera data, wherein the object detection model is configured for detecting at least one interference object type.
18. A computer-implemented method according to paragraph 12, the computer-implemented method further comprising:
   receiving, based on the camera data, an indication of the network access device; and
   mapping, based on the indication of the network access device, the network access device to a network access device position in the augmented reality environment.
19. A computer-implemented method for network-centric augmented reality processing, the computer-implemented method comprising:
   generating an environment plot based at least on camera data captured by a camera circuitry, wherein the camera data represents a premises, and wherein the environment plot corresponds to an augmented reality environment;
   detecting first network strength data for a first network access device, wherein the first network strength data is associated with a first position in the augmented reality environment; and
   causing rendering of the augmented reality environment comprising a network strength indicator located at the first position in the augmented reality environment, wherein the network strength indicator is visually configured based on at least the first network strength data.
20. A computer-implemented method according to paragraph 19, wherein the network strength indicator comprises a first network strength indicator, and the computer-implemented method further comprising:
   detecting second network strength data for the first network access device, wherein the second network strength data is associated with a second position in the augmented reality environment, and wherein the first network strength data differs from the second network strength data; and
   causing rendering of the augmented reality environment comprising a second network strength indicator located at the second position, wherein the second network strength indicator is visually configured based on at least the second network strength data as visually distinct from the first network strength indicator.
21. A computer-implemented method according to paragraph 20, wherein the network strength indicator comprises a first wave representation of a first color, the first color selected based on the first network strength data, and the second network strength indicator comprises a second wave representation of a second color, the second color selected based on the second network strength data.
22. A computer-implemented method according to paragraph 19, the computer-implemented method further comprising:
   receiving an indication of a networked device based on the camera data, wherein the networked device is disposed at the first position in the augmented reality environment;
   determining the first network strength data is weaker than second network strength data associated with a second position in the augmented reality environment; and
   causing rendering of data indicating the networked device should be repositioned to the second position.
23. A computer-implemented method according to paragraph 19, the computer-implemented method further comprising:
   determining a second position to relocate the first network access device to improve the first network strength data associated with the first position in the augmented reality environment; and
   causing rendering of data indicating the first network access device should be relocated to the second position in the augmented reality environment.
24. A computer-implemented method according to paragraph 19, the computer-implemented method further comprising:
   causing rendering of data indicating a first networked device should be positioned at the first position in the augmented reality environment.
25. A computer-implemented method for network-centric augmented reality processing, the computer-implemented method comprising:
   receiving camera data representing a premises associated with an augmented reality environment;
   detecting, from the camera data, a networked device of a networked device type;
   mapping the networked device to a device position in the augmented reality environment; and
   initiating a device detected action associated with the networked device and the device position in the augmented reality environment.
26. A computer-implemented method according to paragraph 25, wherein the device detected action comprises:
   determining the networked device is connected to a known network access device;
   establishing, using the known network access device, a connection with the networked device; and
   executing a direct data handshake to confirm an identity of the networked device, wherein the data handshake is based on the networked device type.
27. A computer-implemented method according to paragraph 25, wherein the device detected action comprises:
   determining the networked device is connected to a known access device;
   transmitting, using the known network access device, indirect handshake data to cause the networked device to perform an indirect handshake action;
   capturing indirect handshake authentication data associated with the indirect handshake action; and
   processing the indirect handshake authentication data to verify performance of the indirect handshake action, wherein verification of the indirect handshake action confirms an identity of the networked device.
28. A computer-implemented method according to paragraph 25, wherein the device detected action comprises:
   causing rendering of a device grouping interface to enable association of the networked device with at least one other networked device.
29. A computer-implemented method according to paragraph 25, wherein the device detected action comprises:
   automatically determining the networked device type associated with the networked device; and
   automatically associating the networked device with a device grouping based on the determined networked device type.
30. A computer-implemented method according to paragraph 29, wherein the networked device comprises a first networked device and the device position comprises a first device position, and the computer-implemented method further comprising:
   detecting a second networked device associated with a second device position;
   determining the second device position is within a threshold range from the first device position; and
   automatically associating the second networked device with the device grouping.
31. A computer-implemented method for network-centric augmented reality processing, the computer-implemented method comprising:
   receiving camera data representing real-world imagery of a premises, wherein the camera data is utilized to maintain an augmented reality environment associated with mapping at least one position associated with at least one networked device, network access device, and/or at least one interference object; and
   initiating an augmented reality service session associated with servicing one or more devices associated with the augmented reality environment, wherein initiating the augmented reality service session enables communication with an electronic support platform.
32. A computer-implemented method according to paragraph 31, wherein the augmented reality service session enables transmission of the camera data to the electronic support platform to render utilizing a display associated with the electronic support platform.
33. A computer-implemented method according to paragraph 31, the computer-implemented method further comprising:
   receiving, from the electronic support platform, an electronic support generated augmented reality indicator associated with an indicator position in the augmented reality environment; and
   causing rendering of the augmented reality environment comprising the electronic support generated augmented reality indicator at the indicator position.
34. A computer-implemented method according to paragraph 33, wherein the electronic support generated augmented reality indicator represents a visual indicator identifying a first networked device to service of the at least one networked device.
35. A computer-implemented method according to paragraph 33, wherein the electronic support generated augmented reality indicator represents a visual indicator identifying a position in the augmented reality environment to place a new networked device or a first networked device of the at least one networked device.
36. A computer-implemented method according to paragraph 33, the computer-implemented method further comprising:
   generating at least one augmented reality element corresponding to network strength data for a first position in the augmented reality environment, wherein the network strength data is associated with a particular network access device, and wherein the electronic support generated augmented reality indicator represents a visual indicator identifying a second position in the augmented reality environment to place the particular network access device to improve the network strength data at the first position in the augmented reality environment.

## Claims

1. A computer-implemented method for network-centric augmented reality processing, the computer-implemented method comprising:
generating an environment plot based at least on camera data captured by a camera circuitry, wherein the camera data represents a premises, and wherein the environment plot corresponds to an augmented reality environment;
detecting first network strength data for a first network access device, wherein the first network strength data is associated with a first position in the augmented reality environment; and
causing rendering of the augmented reality environment comprising a network strength indicator located at the first position in the augmented reality environment, wherein the network strength indicator is visually configured based on at least the first network strength data.

2. A computer-implemented method according to claim 1, wherein the network strength indicator comprises a first network strength indicator, and the computer-implemented method further comprising:
detecting second network strength data for the first network access device, wherein the second network strength data is associated with a second position in the augmented reality environment, and wherein the first network strength data differs from the second network strength data; and
causing rendering of the augmented reality environment comprising a second network strength indicator located at the second position, wherein the second network strength indicator is visually configured based on at least the second network strength data as visually distinct from the first network strength indicator.

3. A computer-implemented method according to claim 2, wherein the network strength indicator comprises a first wave representation of a first color, the first color selected based on the first network strength data, and the second network strength indicator comprises a second wave representation of a second color, the second color selected based on the second network strength data.

4. A computer-implemented method according to claim 1, the computer-implemented method further comprising:
receiving an indication of a networked device based on the camera data, wherein the networked device is disposed at the first position in the augmented reality environment;
determining the first network strength data is weaker than second network strength data associated with a second position in the augmented reality environment; and
causing rendering of data indicating the networked device should be repositioned to the second position.

5. A computer-implemented method according to claim 1, the computer-implemented method further comprising:
determining a second position to relocate the first network access device to improve the first network strength data associated with the first position in the augmented reality environment; and
causing rendering of data indicating the first network access device should be relocated to the second position in the augmented reality environment.

6. A computer-implemented method according to claim 1, the computer-implemented method further comprising:
causing rendering of data indicating a first networked device should be positioned at the first position in the augmented reality environment.

7. A computing apparatus comprising memory and one or more processors communicatively coupled to the memory, the one or more processors configured to perform operations comprising:
generating an environment plot based at least on camera data captured by a camera circuitry, wherein the camera data represents a premises, and wherein the environment plot corresponds to an augmented reality environment;
detecting first network strength data for a first network access device, wherein the first network strength data is associated with a first position in the augmented reality environment; and
causing rendering of the augmented reality environment comprising a network strength indicator located at the first position in the augmented reality environment, wherein the network strength indicator is visually configured based on at least the first network strength data.

8. A computing apparatus according to claim 7, wherein the network strength indicator comprises a first network strength indicator, and the operations further comprise:
detecting second network strength data for the first network access device, wherein the second network strength data is associated with a second position in the augmented reality environment, and wherein the first network strength data differs from the second network strength data; and
causing rendering of the augmented reality environment comprising a second network strength indicator located at the second position, wherein the second network strength indicator is visually configured based on at least the second network strength data as visually distinct from the first network strength indicator.

9. A computing apparatus according to claim 8, wherein the network strength indicator comprises a first wave representation of a first color, the first color selected based on the first network strength data, and the second network strength indicator comprises a second wave representation of a second color, the second color selected based on the second network strength data.

10. A computing apparatus according to claim 7, the operations further comprising:
receiving an indication of a networked device based on the camera data, wherein the networked device is disposed at the first position in the augmented reality environment;
determining the first network strength data is weaker than second network strength data associated with a second position in the augmented reality environment; and
causing rendering of data indicating the networked device should be repositioned to the second position.

11. A computing apparatus according to claim 7, the operations further comprising:
determining a second position to relocate the first network access device to improve the first network strength data associated with the first position in the augmented reality environment; and
causing rendering of data indicating the first network access device should be relocated to the second position in the augmented reality environment.

12. A computing apparatus according to claim 7, the operations further comprising:
causing rendering of data indicating a first networked device should be positioned at the first position in the augmented reality environment

13. One or more non-transitory computer-readable storage media including instructions that, when executed by one or more processors, cause the one or more processors to perform operations comprising:
generating an environment plot based at least on camera data captured by a camera circuitry, wherein the camera data represents a premises, and wherein the environment plot corresponds to an augmented reality environment;
detecting first network strength data for a first network access device, wherein the first network strength data is associated with a first position in the augmented reality environment; and
causing rendering of the augmented reality environment comprising a network strength indicator located at the first position in the augmented reality environment, wherein the network strength indicator is visually configured based on at least the first network strength data.

14. One or more non-transitory computer-readable storage media according to claim 13, wherein the network strength indicator comprises a first network strength indicator, and the operations further comprise:
detecting second network strength data for the first network access device, wherein the second network strength data is associated with a second position in the augmented reality environment, and wherein the first network strength data differs from the second network strength data; and
causing rendering of the augmented reality environment comprising a second network strength indicator located at the second position, wherein the second network strength indicator is visually configured based on at least the second network strength data as visually distinct from the first network strength indicator.

15. One or more non-transitory computer-readable storage media according to claim 14, wherein the network strength indicator comprises a first wave representation of a first color, the first color selected based on the first network strength data, and the second network strength indicator comprises a second wave representation of a second color, the second color selected based on the second network strength data.
